# EUROPÄISCHE PATENTSCHRIFT

(11) **EP 1 521 805 B1**
(45) Veröffentlichungstag und Bekanntmachung des Hinweises auf die Patenterteilung: **21.05.2014**
(21) Anmeldenummer: 03759942.0
(22) Anmeldetag: 12.06.2003
(51) Int. Cl.: C08L 61/32, C08L 61/28, C08G 73/06, C08L 83/06, C08L 83/04, C08J 5/24, C08L 71/00

(54) **AMINOPLAST-FORMMASSEN FÜR ERZEUGNISSE VERBESSERTER FLEXIBILITÄT UND AMINOPLASTERZEUGNISSE VERBESSERTER FLEXIBILITÄT**
AMINOPLAST MOLDING COMPOUNDS FOR PRODUCTS EXHIBITING AN IMPROVED FLEXIBILITY AND AMINOPLAST PRODUCTS EXHIBITING AN IMPROVED FLEXIBILITY
MATIERES A MOULER AMINOPLASTIQUES DESTINEES A DES PRODUITS PRESENTANT UNE MEILLEURE FLEXIBILITE ET PRODUITS PRESENTANT UNE MEILLEURE FLEXIBILITE

(30) Priorität: 14.06.2002 AT 9022002; 14.06.2002 AT 9052002
(43) Veröffentlichungstag der Anmeldung: 13.04.2005
(73) Patentinhaber: Borealis Agrolinz Melamine GmbH, 4020 Linz (AT)
(72) Erfinder: RÄTZSCH, Manfred, A-4073 Wilhering/Thalheim (AT); MACHHERNDL, Markus, A-4060 Leonding (AT); BREITENEDER, Peter, A-4040 Linz (AT); PFEIFFER, Steffen, A-4030 Linz (AT); BUCKA, Hartmut, A-4622 Eggendorf (AT); KALTENBACHER, Sascha, A-4030 Linz (AT); DICKE, René, A-4030 Linz (AT); MUJKANOVIC, Alisa, A-4020 Linz (AT)
(74) Vertreter: Gross, Felix
(86) Internationale Anmeldenummer: PCT/EP2003/006173
(87) Internationale Veröffentlichungsnummer: WO 2003/106558

(56) Entgegenhaltungen:
- EP-A- 0 062 179
- EP-A- 0 068 162
- EP-A- 0 342 386
- EP-A- 0 526 804
- EP-A- 1 279 686
- WO-A-03/046053
- WO-A1-02/40564
- GB-A- 851 295

## Beschreibung

Die Erfindung betrifft Aminoplast-Formmassen für Erzeugnisse verbesserter Flexibilität und ein Verfahren zu deren Herstellung, sowie Aminoplasterzeugnisse verbesserter Flexibilität und ein Verfahren zu deren Herstellung.

Aminoplaste wie Melamin-Formaldehyd-Harze oder Melamin-Harnstoff-Formaldehyd-Harze sowie Erzeugnisse aus Aminoplasten wie Melamin-Formaldehyd-Harzen oder Melamin-Harnstoff-Formaldehyd-Harzen [Ullmann's Encyclopedia of Industrial Chemistry (1987), Vol. A2, 130-131] sind bekannt. Von Nachteil bei der Herstellung von Erzeugnissen aus Melaminharzen ist die schwierige Verarbeitbarkeit nach üblichen thermoplastischen Verarbeitungsverfahren wie Extrusion, Spritzguss oder Blasformen sowie deren geringe Flexibilität.

Niedermolekulare Melaminharz-Vorkondensate besitzen eine zu geringe Schmelzviscosität für diese Verarbeitungsverfahren und können zu Erzeugnissen lediglich als hochgefüllte Formmassen bei langen Zykluszeiten unter Härtung der Erzeugnisse verarbeitet werden (Woebcken, W., Kunststoff-Handbuch Bd. 10 "Duroplaste", Carl Hanser Verl. München 1988, S. 266-274). Melaminharzerzeugnisse in Form von Fasern, Schäume oder Beschichtungen aus Melaminharzen können auf Grund der niedrigen Schmelzviscosität der Melaminharzvorkondensate nur ausgehend von Lösungen der Melaminharzvorkondensate unter Aushärtung während der Formgebung hergestellt werden.

Bekannte Verfahren zur Verbesserung der Flexibilität von Melaminharzerzeugnissen sind der Zusatz von Polyvinylalkohol bei der Herstellung von Melaminharzfasern durch Verspinnen aus Lösung (DE 23 64 091 B2) oder der Einsatz von Melaminharzen, die mit Alkylendiaminen, Alkoxyalkylaminen bzw. Dicyandiamid modifiziert sind, bei der Herstellung von Post-Forming-Laminaten (WO 96 30 422 A1). Bei der Herstellung der Erzeugnisse verbesserter Flexibilität werden jedoch Melaminharzlösungen eingesetzt.

Die EP 0 062 179 A1 beschreibt Vorkondensate aus Melamin und Formaldehyd, wobei das Molverhältnis von Melamin zu Formaldehyd zwischen 1 und 1,26 liegt. Die Vorkondensate werden bei alkalischen Bedingungen mit Modifizierungsmitteln umgesetzt. Dabei werden Mischungen aus Ethyldiglykol, Ethyltriglykol und Ethyltetraglykol verwendet. Die genannten Glykole sind monovalente Alkohole und führen nicht zu einer Vernetzung der Triazinkerne. Unter den in jener europäischen Patentanmeldung gezeigten Reaktionsbedingungen ist eine chemische Anbindung des eingesetzten Alkohols an das Harz nicht gegeben.

In der EP 0 526 804 A1 sind Melamin-Formaldehyd-Kondensate beschrieben, welche gegenüber den vorliegend beanspruchten Aminoplast-Formmassen ein erhöhtes Melamin-Formaldehyd-Verhältnis von mindestens 1:5 bis 1:6 aufweisen. Die Melamin-Formaldehyd-Kondensate gemäß jener europäischen Patentanmeldung weisen keine oder praktisch keine monosubsituierten Amine auf.

In der WO 02/40564 A1 werden veretherte 2,4-Diamino-1,3,5-Triazin-Aldehyd-Harze beschrieben, die im Gegensatz zu herkömmlichen Harzen dieser Art Erweichungspunkte oberhalb von 100 °C besitzen und in der Schmelze bei 100 bis 200 °C, insbesondere bei 130 bis 150 °C verarbeitet werden können ohne auszuhärten.

Die EP 1 279 686 A1 betrifft kein verethertes Melamin-Formaldehydharz, sondern ein Hydroxpropylmelamin. Das heißt, bei der Harzbildung gemäß jener europäischen Patentanmeldung ist kein Formaldehyd beteiligt; vielmehr liegen echte alkoholische Hydroxygruppen vor. Im Gegensatz zu den erfindungsgemäß beanspruchten Harzen offenbart jene europäische Patentanmeldung auch keine gemischten Aminal-Acetal-Strukturen.

Aufgabe der vorliegenden Erfindung sind Aminoplastformmassen, die sich nach thermo-plastischen Verarbeitungsverfahren zu Erzeugnissen verbesserter Flexibilität verarbeiten lassen.

Die erfindungsgemäße Aufgabe wurde durch Aminoplast-Formmassen, die aus Mischungen aus schmelzbaren 20- bis 1000-Triazinzyklen-Polytriazinethern und optional aus bis zu 75 Masse% Füllstoffen und / oder Absorbermaterialien, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 5 Masse%, insbesondere bis zu 2 Masse%, jeweils bezogen auf die Polytriazinether, Stabilisatoren, UV-Absorbern, Härtern und/oder Hilfsstoffen bestehen, und den daraus gefertigten Aminoplasterzeugnissen, gelöst,
wobei in den Polytriazinethern die Triazinsegmente 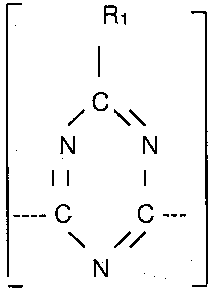 R₁ = -NH₂, -NH-CHR₂-O-R₃,-NH-CHR₂-O-R₄-OH, -OH, Phthalimido-. Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-, -CH(CH₃)-CH₂-O-_{C6-C12-}Arylen-O-CH₂-CH(CH₃)-, -[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-, -[(CH₂)₂₋₈-O-CO-_{C6-C14}-Arylen-CO-O-(CH₂)₂₋₈-]ₙ-, -[(CH₂)₂₋₈-O-CO-_{C2-C12}-Alkylen-CO-O=(CH₂)₂₋₈-]ₙ-,
wobei n = 1 bis 200;
- Siloxangruppen enthaltende Sequenzen des Typs 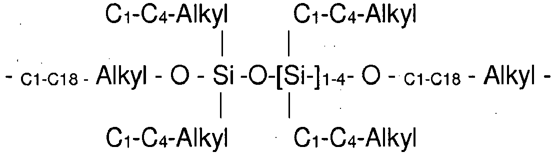
- Siloxangruppen enthaltende Polyestersequenzen des Typs -[(X)ᵣ-O-CO-(Y)ₛ-CO-O-(X)ᵣ]-,
bei denen
X = {(CH₂)₂₋₈-O-CO-_{C6-C14}-Arylen-CO-O-(CH₂)₂₋₈-} oder -{(CH₂)₂₋₈-O-CO-_{C2-C2}-Alkylen-CO-O-(CH₂)₂₋₈-}; 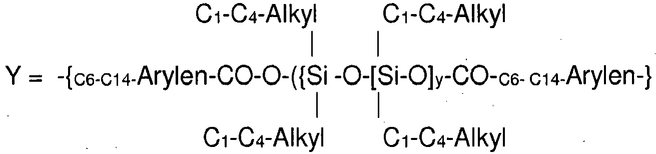 oder 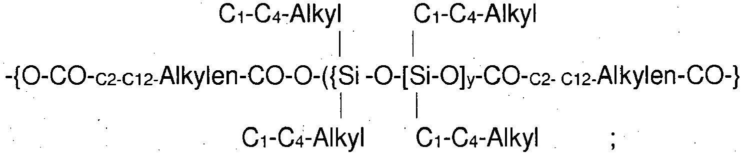 r = 1 bis 70; s = 1 bis 70 und y = 3 bis 50 bedeuten;
- Siloxangruppen enthaltende Polyethersequenzen des Typs 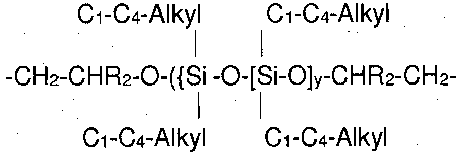 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8}-Alkylen-O-_{C6-C18}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1 000-Triazinzyklen-Polytriazinethern mit linearer und/oder verzweigter Struktur verknüpft sind,
wobei in den Polytriazinethern das Molverhältnis der Substituenten R₃ : R4 = 20 : 1 bis 1 : 20 beträgt und
der Anteil der Verknüpfungen der Triazinsegmente durch Brückenglieder -NH-CHR₂-O-R₄-O-CHR₂NH- 5 bis 95 Mol% beträgt.

Die endständigen Trinzinsegmente in den Polytriazinethern der erfindungsgemäßen Aminoplast-Formmassen sind Triazinsegmente der Struktur 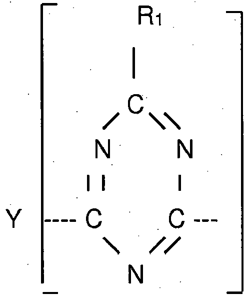 Y= -NH-CHR₂-O-R₃, -NH-CHR₂-O-R₄-OH
R₁ = -NH₂, -NH-CHR₂-O-R₃ ,-NH-CHR₂-O-R₄-OH, -OH, Phthalimido-. Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ C₂-C₁₈-Alkylen, -CH(CH₃)-CH₂-O-_{C2-C12}-Alkylen-O-CH₂-CH(CH₃)-, -CH(CH₃)-CH₂-O-_{C6-C12}-Arylen-O-CH₂-CH(CH₃)-, -[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-, -[(CH₂)₂₋₈-O-CO-_{C6-C14}-Arylen-CO-O-(CH₂)₂₋₈-]ₙ-, -[(CH₂)₂₋₈-O-CO-_{C2-C12}-Alkyten-CO-O-(CH₂)₂₋₈-]ₙ -,
wobei n = 1 bis 200;
- Siloxangruppen enthaltende Sequenzen des Typs 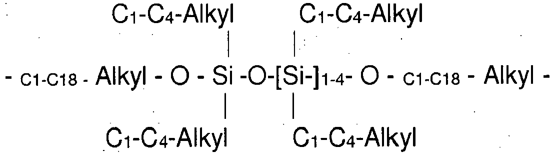
- Siloxangruppen enthaltende Polyestersequenzen des Typs -[(X)ᵣ-O-CO-(Y)s-CO-O-(X)ᵣ]- ,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 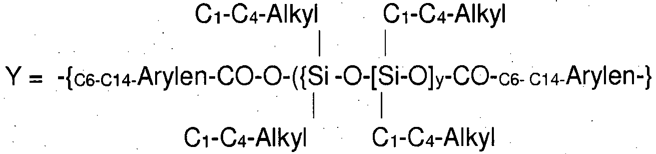 oder 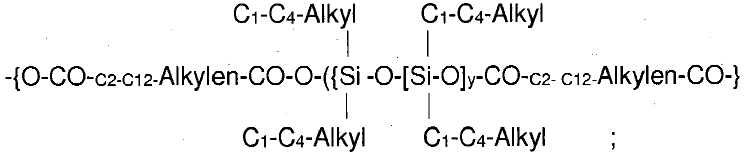 r = 1 bis 70; s = 1 bis 70 und y = 3 bis 50 bedeuten;
- Siloxangruppen enthaltende Polyethersequenzen des Typs 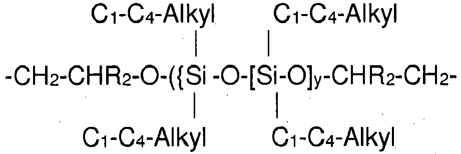 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8}-Alkylen-O-_{C6-C18}-Arylen-O-_{C2-C8}-Alkylen-Sequenzen.

Die Aminoplast-Formmassen können in Form von zylindrischen, linsenförmigen, pastillenförmigen oder kugelförmigen Partikeln mit einem mittleren Durchmesser von 0,5 bis 8 mm vorliegen.

Bevorzugt werden als Polytriazinether in den Aminoplast-Formmassen 30- bis 300-Triazinzyklen-Polytriazinether eingesetzt, die also 30 bis 300 Triazinzyklen im Makromolekül enthalten. Derartige Polytriazinether können auch als 30- bis 300-Kern-Polytriazinether bezeichnet werden.

In den Aminoplast-Formmassen werden als Polytriazinether in den Mischungen Polytriazinether mit R₂ = H bevorzugt.

Die Mischungen aus Polytriazinethern in den Aminoplast-Formmassen können Gemische aus Polytriazinethern mit gleichem oder unterschiedlichem Substituent R₁ = -NH₂, -NH-CHR₂-O-R₃ ,-NH-CHR₂-O-R₄-OH, -OH, Phthalimido-. Succinimido--NH-CHR₂-O-R₄-O-CHR₂-NH-, -NH-CHR₂-NH-, -NH-CHR₂-O-CHR₂-NH-sein.

Beispiele für geeignete Füllstoffe, die in den Aminoplast-Formmassen bis zu 75 Masse% enthalten sein können, sind Al₂O₃, Al(OH)₃, Bariumsulfat, Calciumcarbonat, Glaskugeln, Kieselerde, Glimmer, Quarzmehl, Schiefermehl, Mikrohohlkugeln, Ruß, Talkum, Gesteinsmehl, Holzmehl, Cellulosepulver und/oder Schalen- und Kernmehle wie Erdnussschalenmehl oder Olivenkernmehl. Bevorzugt werden als Füllstoffe Schichtsilikate vom Typ Montmorillonit, Bentonit, Kaolinit, Muskovit, Hectorit, Fluorhectorit, Kanemit, Revdit, Grumantit, llerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite.

Beispiele für reaktive Polymere vom Typ Ethylen-Copolymere, die in den Aminoplast-Formmassen bis zu 50 Masse% enthalten sein können, sind teilverseifte Ethylen-Vinylacetat-Copolymere, Ethylen-Butylacrylat-Acrylsäure-Copolymere, Ethylen-Hydroxy-ethylacrylat-Copolymere oder Ethylen-Butylacrylat-Glycidylmethacrylat-Copolymere.

Beispiele für reaktive Polymere vom Typ Maleinsäureanhydrid-Copolymere, die in den Aminoplast-Formmassen bis zu 50 Masse% enthalten sein können, sind C₂-C₂₀-Olefin - Maleinsäureanhydrid-Copolymere oder Copolymere aus Maleinsäureanhydrid und C₈-C₂₀-Vinylaromaten.

Beispiele für die C₂-C₂₀-Olefin - Komponenten, die in den Maleinsäureanhydrid-Copolymeren enthaltenen sein können, sind Ethylen, Propylen, Buten-1, Isobuten, Diisobuten, Hexen-1, Octen-1, Hepten-1, Penten-1, 3-Methylbuten-1, 4-Methylpenten-1, Methylethyl-penten-1, Ethylpenten-1, Ethylhexen-1, Octadecen-1 und 5,6-Dimethylnorbornen.

Beispiele für die C₈-C₂₀-Vinylaromaten - Komponenten, die in den Maleinsäureanhydrid-Copolymeren enthaltenen sein können, sind Styren, α-Methylstyren, Dimethylstyren, Isopropenylstyren, p-Methylstyren und Vinylbiphenyl.

Die in den Aminoplast-Formmassen gegebenenfalls enthaltenen modifizierten Maleinsäureanhydrid-Copolymere sind bevorzugt partiell oder vollständig veresterte, amidierte bzw. imidierte Maleinsäureanhydrid-Copolymere.

Besonders geeignet sind modifizierten Copolymere aus Maleinsäureanhydrid und C₂-C₂₀-Olefinen bzw. C₈-C₂₀-Vinylaromaten mit einem Molverhältnis von 1 : 1 bis 1 : 9 und Molmassen-Gewichtsmitteln von 5000 bis 500000, die mit Ammoniak, C₁-C₁₈-Monoalkylaminen, C₆-C₁₈-aromatischen Monoaminen, C₂-C₁₈-Monoaminoalkoholen, monoaminierten Poly(C₂-C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis Anhydridgruppen Copolymer / Ammoniak, Aminogruppen C₁-C₁₈-Monoalkylamine, C₆-C₁₈-aromatische Monoamine, C₂-C₁₈-Monoaminoalkohole bzw. monoaminiertes Poly-(C₂-C₄-alkylen)oxid und/oder Hydroxygruppen Poly(C₂-C₄-alky-len)oxid 1 : 1 bis 20 : 1 beträgt.

Beispiele für reaktive Polymere vom Typ Poly(meth)acrylate, die in den Aminoplast-Formmassen aus bis zu 50 Masse% enthalten sein können, sind Copolymere auf Basis von funktionellen ungesättigten (Meth)acrylatmonomeren wie Acrylsäure, Hydroxyethylacrylat, Glycidylacrylat, Methacrylsäure, Hydroxybutylmethacrylat, oder Glycidylmethacrylat und nichtfunktionellen ungesättigten (Meth)acrylatmonomeren wie Ethylacrylat, Butylacrylat, Ethylhexylacrylat, Methylmethacrylat, Ethylacrylat und/oder Butylmethacrylat und/oder C₈-C₂₀-Vinylaromaten. Bevorzugt werden Copolymere auf Basis Methacrylsäure, Hydroxyethylacrylat, Methylmethacrylat und Styren.

Beispiele für reaktive Polymere vom Typ Polyamide, die in den Aminoplast-Formmassen bis zu 50 Masse% enthalten sein können, sind Polyamid-6, Polyamid-6,6, Polyamid-11, Polyamid-12, Polyaminoamide aus Polycarbonsäuren und Polyalkylenaminen sowie die entsprechenden methoxylierten Polyamide.

Beispiele für reaktive Polymere vom Typ Polyester, die in den Aminoplast-Formmassen bis zu 50 Masse% enthalten sein können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsäuren wie Maleinsäure, Fumarsäure und/oder Itakonsäure und Diolen wie Ethylenglycol, Butandiol, Neopentylglycol und/oder Hexandiol. Bevorzugt werden verzweigte Polyester auf Basis von Neopentylglycol, Trimethylolpropan, Isophthalsäure und Azelainsäure.

Beispiele für reaktive Polymere vom Typ Polyurethane, die in den Aminoplast-Formmassen bis zu 50 Masse% enthalten sein können, sind unvernetzte Polyurethane auf Basis von Toluylendiisocyanat, Diphenylmethandiisocyanat, Butandiisocyanat und/ oder Hexandiisocynat als Diisocyanatkomponenten und Butandiol, Hexandiol und/oder Polyalkylenglycolen als Diolkomponenten mit Molmassen von 2000 bis 30000.

Beispiele für geeignete Stabilisatoren und UV-Absorber, die in den Aminoplast-Formmassen bis zu 2 Masse% enthalten sein können, sind Piperidinderivate, Benzophenonderivate, Benzotriazolderivate, Triazinderivate und/oder Benzofuranonderivate.

Beispiele für geeignete Hilfsstoffe, die in den Aminoplast-Formmassen bis zu 2 Masse% enthalten sein können, sind latente Härter wie Ammoniumsulfat und/oder Ammoniumchlorid und/oder Verarbeitungshilfsmittel wie Calciumstearat, Magnesiumstearat und/oder Wachse.

Die Aminoplast-Formmassen werden erfindungsgemäß nach einem Verfahren hergestellt, bei dem Mischungen, die aus schmelzbaren 20- bis 1000-Triazinzyklen-Polytriazinethern und optional aus bis zu 75 Masse% Füllstoffen, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 2 Masse%, jeweils bezogen auf die Polytriazinether, Stabilisatoren, UV-Absorbern und/oder Hilfsstoffen bestehen,
wobei in den Polytriazinethern die Triazinsegmente 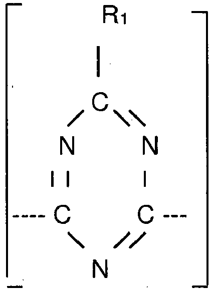 R₁ = -NH₂, -NH-CHR₂-O-R₃ ,-NH-CHR₂-O-R₄-OH, -OH, Phthalimido-. Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-, -CH(CH₃)-CH₂-O-_{C6-C12}-Arylen-O-CH₂-CH(CH₃)-, -[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-, -[(CH₂)₂₋₈-O-CO-_{C6-C14-}Arylen-CO-O-(CH₂)₂₋₈-]ₙ -, -[(CH₂)₂₋₈-O-CO-_{C2-C12}-Alkylen-CO-O-(CH₂)₂₋₈-]ₙ -, wobei n = 1 bis 200;
- Siloxangruppen enthaltende Sequenzen des Typs 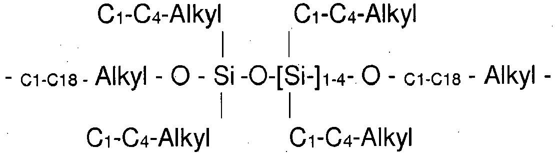
- Siloxangruppen enthaltende Polyestersequenzen des Typs -[(X)ᵣ-O-CO-(Y)ₛ-CO-O-(X)ᵣ]- ,
bei denen
X = {(CH₂)₂₋₈-O-CO-_{C6-C14}-Arylen-CO-O-(CH₂)₂₋₈-} oder -{(CH₂)₂₋₈-O-CO-_{C2-C12}-Alkylen-CO-O-(CH₂)₂₋₈-}; 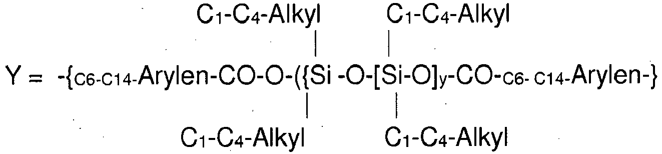 oder 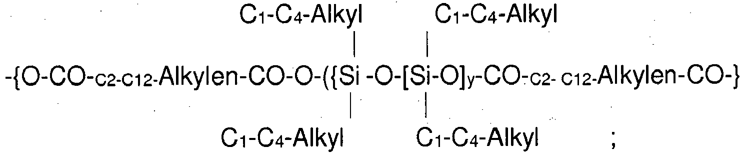 r = 1 bis 70; s = 1 bis 70 und y = 3 bis 50 bedeuten;
- Siloxangruppen enthaltende Polyethersequenzen des Typs 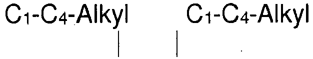 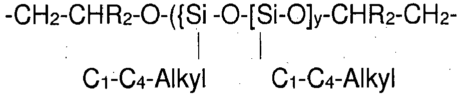 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8}-Alkylen-O-_{C2-C8}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1 000-Triazinzyklen-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt und
der Anteil der Verknüpfungen der Triazinsegmente durch Brückenglieder -NH-CHR₂-O-R₄-O-CHR₂-NH- 5 bis 95 Mol% beträgt,
nach einem Mehrstufenverfahren hergestellt werden, bei dem
- in der ersten Verfahrensstufe Vorkondensate aus C₁-C₈-Aldehyden und Triazinderivaten der Struktur 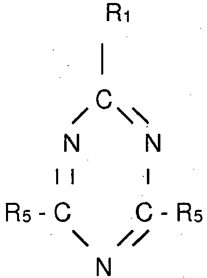 R₁ = -NH₂, -NH-CHR₂-OH, -OH, Phthalimido-. Succinimido-,
   R2 = H, C₁-C₇ - Alkyl;
   R₅ =-NH-CHR₂-OH durch Umsetzung mit C₁-C₈-Alkoholen in neutralem bis schwach saurem Medium bei 25 bis 150°C und 0,1 bis 5 bar verethert, und die substituierten Triazinderivate bei Verweilzeiten von 5 bis 15 min bei 150 bis 250°C und 0,1 bis 15 bar konditioniert werden, wobei gebildete Salze unter Einhaltung eines pH-Werts von 7 bis 10 abgetrennt werden können, indem die Schmelze der Aminotriazinether bei 70 bis 150°C in 70 bis 150 Masse%, bezogen auf die Aminotriazinether, C₃- bis C₆-Alkoholen aufgelöst, unlösliche Anteile nach Abkühlung auf 15 bis 40°C abgetrennt, und die zugesetzten C₃- bis C₆-Alkohole bei 70 bis 140°C bis zu einem Restgehalt von 5 bis 20 Masse% verdampft werden,
- in der zweiten Verfahrensstufe die erhaltenen C₁-C₈-alkyl-oxa-C₁-C₈-alkylen-amino- substituierten Triazinderivate durch partielle Umetherung mit Diolen vom Typ HO-R₄-OH und/oder partielle Umsetzung mit Bisepoxiden vom Typ 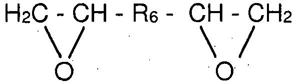 wobei R₄
   C₂-C₁₈-Alkylen, -[CH₂-CH₂-O-CH₂-CH₂]ₙ-,
   -[CH₂-CH(CH₃)-O-CH₂-CH(CH₃)]ₙ -,
   -[-O-CH₂-CH₂-CH₂-CH₂-]ₙ-,
   -[(CH₂)₂₋₈-O-CO-_{C6-C14}-Arylen-CO-O-(CH₂)₂₋₈-]ₙ -,
   -[(CH₂)₂₋₈-O-CO-_{C2-C12}-Alkylen-CO-O-(CH₂)₂₋₈-]ₙ -,
   wobei n = 1 bis 200;
- Siloxangruppen enthaltende Sequenzen des Typs 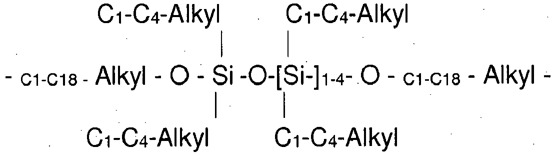
- Siloxangruppen enthaltende Polyestersequenzen des Typs -[(X)ᵣ-O-CO-(Y)ₛ-CO-O-(X)ᵣ]- ,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 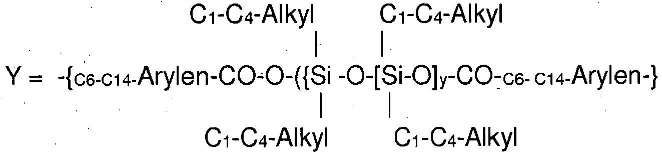 oder 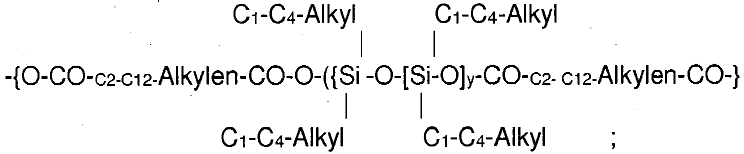 r = 1 bis 70; s = 1 bis 70 und y = 3 bis 50 bedeuten;
- Siloxangruppen enthaltende Polyethersequenzen des Typs 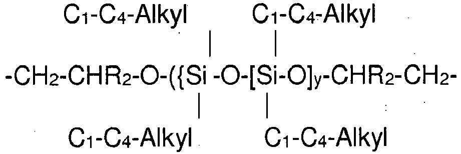 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8}-Alkylen-O-_{C6-C18}-Arylen-O-_{C2-C8}-Alkylen- Sequenzen;
und R₆ = -CH₂-O-_{C2-C12}-Alkylen-O-CH₂-, -CH₂-O-_{C6-C14}-Arylen-O-CH₂-,
bedeuten,
und wobei bei der partielle Umsetzung mit Diolen und/oder Bisepoxiden Mischungen eingesetzt werden können, die bis 70 Masse% C₅-C₁₈-Alkohole enthalten,

bei Verweilzeiten von 1 bis 60 min. unter Abdestillation von C₁-C₈-Alkoholen bei 60 bis 250°C/0,05 bis 1 bar in die entsprechenden substituierten Triazinderivate überführt werden, wobei durch das Molverhältnis C₁-C₈-alkyl-oxa-C₁-C₈-alkylen-amino-Gruppen / eingesetztes Diol und/oder eingesetztes Bisepoxid von 20 : 1 bis 1,1 : 1 eine partielle Umetherung der C₁-C₈-Alkylethergruppen der C₁-C₈-alkyl-oxa-C₁-C₈-alkylen-amino-triazine erzielt wird,
- in der dritten Verfahrensstufe zur weiteren Kondensation der Aminotriazinether zu Polytriazinethern die erhaltene Schmelze, die veretherte Aminotriazinderivate sowie Anteile an Polytriazinethern und an nichtumgesetztem bzw. nicht abgetrenntem Diol enthält und weiterhin C₅-C₁₈-Alkohole enthalten kann, in einen Kneter dosiert, bei einer Verweilzeit von 2 bis 12 min bei 140 bis 220°C unter Entgasung umgesetzt, und die Polytriazinether ausgetragen und granuliert werden, wobei die Schmelze vor Dosierung in den Kneter einer Temperierung von 20 bis 120 min bei 70 bis 140°C unterzogen werden kann, der Schmelze bis zu 75 Masse% Füllstoffe, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse%, jeweils bezogen auf die Polytriazinether, Stabilisatoren, UV-Absorber und/oder Hilfsstoffe zugesetzt werden können, und die Schmelze vor dem Austrag einer Schmelzefiltration unterzogen werden kann.

Die in der ersten Verfahrensstufe eingesetzten Vorkondensate aus Triazinderivaten und C₁-C₈-Aldehyden sind Vorkondensate, die als C₁-C₈-Aldehyd-Komponenten insbesondere Formaldehyd, Acetaldehyd und/oder Trimethylolacetaldehyd und als Triazinderivat insbesondere Melamin enthalten. Besonders bevorzugt werden Vorkondensate aus Melamin und Formaldehyd mit einem Molverhältnis Melamin/Formaldehyd 1:2,5 bis 1: 3,5.

Geeignete Vorkondensate aus Triazinderivaten und C₁-C₈-Aldehyden, die in der ersten Verfahrensstufe eingesetzt werden können, sind weiterhin Vorkondensate, die als Triazinderivat Melaminharzether, Phthalimido-substituierte Triazine wie N-(4,6-Diamino-(1,3,5-triazin-2-yl)-phthalimid oder Succinimido-substituierte Triazine wie 2,4-Diamino-6-succinimido-1,3,5-triazin enthalten. Als Succinimido-substituierte Triazine sind ebenfalls Alkenyl-substituierte Imidotriazinderivate der Formel: 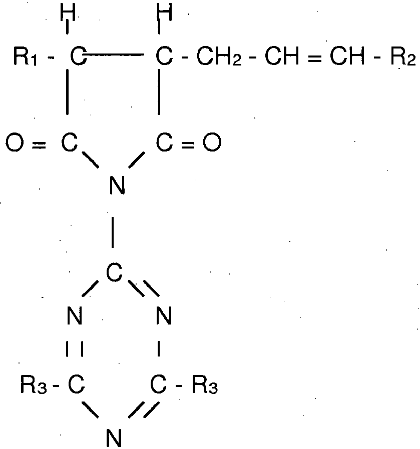 wobei
R₁ = H, -CH₃, -C₂H₅,
R₂ = H, C₁-C₁₅-Alkyl, C₁-C₁₅-Alkyloxa, Cyclopentyl, Cyclohexyl, C₆-C₁₂-Arylen, C₆-C₁₂-Arylenoxa, Cyano, Carboxy, - [CH₂-]₁₋₁₃ - CH = CH₂,
R₃ = -NH₂, -NH-CHR₄-OR₄
R₄ = H, C₁-C₇-Alkyl,
bedeuten, geeignet.

Beispiele für Alkenyl-substituierte Imidotriazinderivate, bei denen der Substituent R₁ = H ist, sind 2-Butenyl-2-succinimido-4,6-diamino-1,3,5-triazin, 2-Dodecenyl-2-succinimido-4,6-diamino -1,3,5-triazin oder 2-Octenyl-2-succinimido-4,6-diamino-1,3,5-triazin.
Beispiele für Diole vom Typ HO-R₄-OH, wobei R₄ = C₂-C₁₈-Alkylen bedeuten, sind Ethylenglycol, Butandiol, Octandiol, Dodecandiol und Octadecandiol.

Beispiele für Diole vom Typ HO-R₄-OH, wobei R₄ = -[CH₂-CH₂-O-CH₂-CH₂]ₙ - und n = 1-200 ist, sind Polyethylenglycole mit Molmassen von 500 bis 5000.

Beispiele für Diole vom Typ HO-R₄-OH, wobei R₄ = -[CH₂-CH(CH₃)-O-CH₂-CH(CH₃)]ₙ - und n = 1-200 ist, sind Polypropylenglycole mit Molmassen von 500 bis 5000.

Beispiele für Diole vom Typ HO-R₄-OH, wobei R₄ = -[-O-CH₂-CH₂-CH₂-CH₂-]ₙ - und n = 1-200 ist, sind Polytetrahydrofurane mit Molmassen von 500 bis 5000.

Beispiele für Diole vom Typ HO-R₄-OH, wobei R₄ = -[(CH₂)₂₋₈-O-CO-_{C6-C14}-Arylen-CO-O-(CH₂)₂₋₈-]ₙ- ist, sind Ester und Polyester auf Basis gesättigter Dicarbonsäuren wie Terephthalsäure, Isophthalsäure oder Naphthalindicarbonsäure und Diolen wie Ethylenglycol, Butandiol, Neopentylglycol und/oder Hexandiol. Als Ester wird Bis(hydroxyethyl)-terephthalat bevorzugt.

Beispiele für Diole vom Typ HO-R₄-OH, wobei R₄ = -[(CH₂)₂₋₈-O-CO-_{C2-C12}-Alkylen-CO-O-(CH₂)₂₋₈-]ₙ ist, sind Polyester auf Basis gesättigter Dicarbonsäuren wie Adipinsäure und/oder Bernsteinsäure, ungesättigter Dicarbonsäuren wie Maleinsäure, Fumarsäure und/oder Itakonsäure und Diolen wie Ethylenglycol, Butandiol, Neopentylglycol und/oder Hexandiol.

Beispiele für Diole vom Typ HO-R₄-OH, wobei R₄ = Siloxangruppen enthaltende Sequenzen des Typs 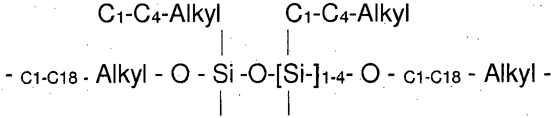 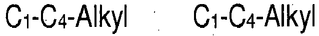 bedeuten, sind 1,3-Bis(hydroxybutyl)tetramethyldisiloxan und 1,3-Bis(hydroxyoctyl)tetraethyldisiloxan.

Beispiele für Polyestersequenzen mit Siloxangruppen enthaltende Diole vom Typ HO-R₄-OH, wobei R₄ = -[(X)ᵣ-O-CO-(Y)ₛ-CO-O-(X)ᵣ]- ist,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 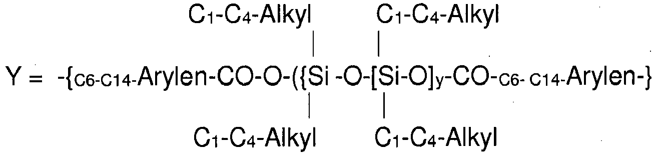 oder 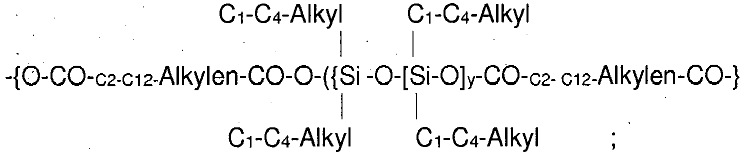 r = 1 bis 70; s = 1 bis 70 und y = 3 bis 50 bedeuten;
sind Hydroxylendgruppen enthaltende Polyester auf Basis aromatischer C₆-C₁₄-Arylen-dicarbonsäuren wie Terephthalsäure oder Naphthalindicarbonsäure, aliphatischer C₂-C₁₂-Alkylendicarbonsäuren wie Adipinsäure, Maleinsäure oder Pimelinsäure, Diolen wie Ethylenglycol, Butandiol, Neopentylglycol oder Hexandiol und Siloxanen wie Hexamethyldisiloxan oder α,ω-Dihydroxypolydimethylsiloxan.

Beispiele für Siloxangruppen enthaltende Polyetherdiole HO-R₄-OH, bei denen R₄ Polyethersequenzen des Typs 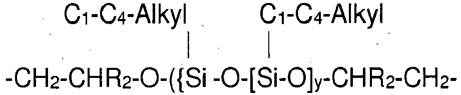 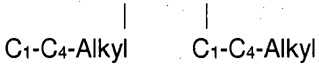 wobei R₂ = H; C₁-C₄-Alkyl und y = 3 bis 50; bedeuten,
sind Polyetherdiole auf Basis von Siloxanen wie Hexamethyldisiloxan oder α,ω-Dihydroxypolydimethylsiloxan und Alkylenoxiden wie Ethylenoxid oder Propylenoxid.

Beispiele für Diole auf Basis von Alkylenoxidaddukten des Melamins vom Typ 2-Amino-4,6-bis(hydroxy-_{C2-C4}-alkylenamino)-1,3,5-triazin sind Diole auf Basis Melamin und Ethylenoxid oder Propylenoxid.

Beispiele für Phenoletherdiole auf Basis zweiwertiger Phenole und C₂-C₈-Diolen vom Typ Bis(hydroxy-_{C2-C8}-Alkylen-O-)_{C6-C18}-Arylen sind Ethylenoxidaddukte oder Propylenoxidaddukte an Diphenylolpropan.

Neben Diolen als mehrwertige Alkohole können beim erfindungsgemäßen Verfahren zur Herstellung von Aminoplast-Formmassen ebenfalls dreiwertige Alkohole wie Glycerin oder vierwertige Alkohole wie Erythrit oder deren Mischungen mit zweiwertigen Alkoholen eingesetzt werden. Der Umfang der Umsetzung der Hydroxygruppen bei der partiellen Umetherung in der zweiten Verfahrensstufe und der Kondensation in der dritten Verfahrensstufe erfolgt wie bei Einsatz bifunktioneller Alkohole.

Beispiele für Bisepoxide des Typs 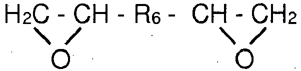 wobei R₆ -CH₂-O-_{C2-C12}-Alkylen-O-CH₂- oder -CH₂-O-_{C6-C14}-Arylen-O-CH₂-bedeuten, sind Ethylenglycoldiglycidether, Octandioldiglycidether, Hydrochinondiglycidether und Diphenylolpropandiglycidether.

Beispiele für C₅-C₁₈-Alkohole, die in Mischungen mit Diolen und/oder Bisepoxiden in der ersten Verfahrensstufe mit den C₁-C₄-alkyl-oxa-C₁-C₈-alkylen-amino-substituierten Triazinderivaten umgesetzt werden können, sind Amylalkohol, Hexenylalkohol, Octylalkohol und Stearylalkohol.

Als Reaktoren sind zur Durchführung der ersten Verfahrensstufe Rührreaktoren mit Bodenablass und absteigendem Kühler geeignet. Bevorzugte Reaktionsbedingungen sind Reaktionstemperaturen im Bereich von 25 bis 120°C bei 0,1 bis 5 bar.

Die Katalyse der Veretherung mit C₁-C₈-Alkoholen in der ersten Verfahrensstufe kann als homogene Katalyse in Gegenwart von löslichen ionischen Katalysatoren oder als heterogene Katalyse in Gegenwart von Ionenaustauschern oder Zeolithen durchgeführt werden.

Beispiele für geeignete saure Katalysatoren bei der Veretherung sind Salzsäure, Phosphorsäure, Salpetersäure, Schwefelsäure, Ameisensäure, Essigsäure, Oxalsäure, p-Toluolsulfonsäure, Phthalsäureanhydrid und Maleinsäureanhydrid.

Erfolgt die Veretherung in der ersten Verfahrensstufe unter homogener Katalyse mit Salzsäure als saurem Katalysator, so werden für die Neutralisation der Reaktionsmischung bevorzugt alkoholische Lösungen von Alkalimetallhydroxiden eingesetzt. Für die Abtrennung der ausgefallenen Salze sind Drucknutschen geeignet. Die Verdampfung des Restgehalts an C₁-C₈-Alkoholen kann in kontinuierlichen Filmverdampfern mit Austragsschnecke erfolgen.

Beispiele für geeignete Ionenaustauschharze als heterogene Katalysatoren sind chlormethylierte und Trimethylamin-aminierte Copolymere aus Styren und Divinylbenzen, sulfonierte Copolymere aus Styren und Divinylbenzen und m-Phenylendiamin-Formaldehyd-Copolymere.

Der Vorteil des Einsatzes von Ionenaustauscherharzen besteht darin, dass bei der heterogenen Katalyse alle Prozessstufen, die die Neutralisation und Abtrennung von Salzen beinhalten, entfallen können.

Eine bevorzugte Variante des Verfahrens zur Herstellung von Aminoplast-Formmassen besteht darin, dass in der ersten Verfahrensstufe die Veretherung der Vorkondensate mit C₁-C₈-Alkoholen in Gegenwart von 10 bis 300 Masse%, bezogen auf die Trockensubstanz der eingesetzten Vorkondensate, Molekularsieben durchgeführt wird.

Beispiele für geeignete Molekularsiebe sind natürliche oder synthetische Zeolithe. Zusätze von mehr als 100 Masse%, bezogen auf die Trockensubstanz der eingesetzten Vorkondensate, an Molekularsieben bei der Veretherung sind von Vorteil, wenn wässrige Lösungen von Melaminharzvorkondensaten eingesetzt werden.

In der zweiten Verfahrensstufe erfolgt die partielle Umsetzung der C₁-C₄-alkyl-oxa-C₁-C₈-alkylen-amino- substituierten Triazinderivate mit Diolen und/oder Bisepoxiden erfindungsgemäß bei Temperaturen im Bereich von 60 bis 250°C, als Reaktoren sind Fallfilmverdampfer oder Kneter geeignet.

Der bevorzugte Temperaturbereich für die katalytische partielle Umetherung der C₁-C₄-alkyl-oxa-C₁-C₈-alkylen-amino- substituierten Triazinderivate in Gegenwart starker Säuren liegt bei Temperaturen im Bereich von 100-175°C.

Bei der thermischen partiellen Umetherung der C₁-C₄-alkyl-oxa-C₁-C₈-alkylen-amino- substituierten Triazinderivate in der zweiten Verfahrensstufe liegt der bevorzugte Temperaturbereich bei 150-250°C, insbesondere bei 180 bis 230°C.

Beispiele für saure Katalysatoren, die bei der katalytischen Umetherung eingesetzt werden können, sind p-Toluolsulfonsäure und/oder Dicarbonsäureanhydride wie Phthalsäureanhydrid, Maleinsäureanhydrid, Itakonsäureanhydrid oder Bernsteinsäureanhydrid.

Für die partielle Umetherung der veretherten Melaminharzvorkondensate mit Diolen ist es von Vorteil, den pH-Wert des Alkohols auf pH = 2 bis 7 einzustellen.

Werden in der zweiten Verfahrensstufe bei der Aufarbeitung des veretherten Vorkondensats Wasser und nichtumgesetztes Diol und gegebenenfalls weitere nichtumgesetzte Reaktanten aus dem neutralisiertem Reaktionsansatz durch Abdestillation abgetrennt, so erfolgt die Abdestillation bevorzugt bei 50 bis 90°C/0,01 bis 0,2 bar.

Durch eine Temperierung der Aminotriazinether bei 70 bis 140°C in der dritten Verfahrensstufe bei dem erfindungsgemäßen Verfahren zur Herstellung von Aminoplast- Formmassen wird eine Kondensation bereits vor Dosierung in den Kneter initiiert.

Als Kneter sind bevorzugt Doppelschneckenextruder L/D = 32-48 mit gegenläufiger Schneckenanordnung und mehreren Entgasungszonen geeignet. Zur Abtrennung von Inhomogenitäten kann die Schmelze mit einer Zahnradpumpe in einen Schmelzefilter gefördert werden. Die Überführung der Schmelze in Granulatpartikel kann in Pastillierungsanlagen durch Dosierung der Schmelze über eine Aufgabevorrichtung auf ein kontinuierliches Stahlband und Kühlung und Verfestigung der abgelegten Pastillen erfolgen.

Eine bevorzugte Variante der Herstellung von Aminoplast-Formmassen besteht darin, dass In der dritten Verfahrensstufe zur weiteren Kondensation der Aminotriazinether zu Polytriazinethern Mischungen aus Produkten der 2. Verfahrensstufe, die aus unter-schiedlichen Ausgangsprodukten hergestellt wurden, oder Mischungen aus Produkten der 2. Verfahrensstufe mit nicht umgeetherten C₁-C₄-alkyl-oxa-C₁-C₈-alkylen-amino- substituierten Triazinderivaten eingesetzt werden.

Der Anteil der Polytriazinether, bei denen die Brückenglieder -NH-CHR₂-O- CHR₂-NH- bzw. -NH-CHR₂-NH- sind, wird durch die Verweilzeit im Extruder und die Massetemperatur im Extruder in der dritten Verfahrensstufe bestimmt. Bei kurzen Verweilzeiten und niedrigen Massetemperaturen im Extruder werden noch Anteile an Polytriazinethern gebildet, bei denen die Brückenglieder -NH-CHR₂-O-CHR₂-NH- sind. Bei längeren Verweilzeiten und höheren Massetemperaturen im Extruder sind Polytriazinether mit Brückengliedern -NH-CHR₂-CHR₂NH- nicht mehr nachweisbar.

Bevorzugt werden Aminoplast-Formmassen, bei denen die Polytriazinether frei von Brückengliedern -NH-CHR₂-O-CHR₂-NH- sind.

Als bevorzugte technologische Variante können bei dem Verfahren zur Herstellung von Aminoplast-Formmassen alle Verfahrensstufen in einem Reaktionsapparat nacheinander durchgeführt werden. Beispiele für geeignete Reaktionsapparate für diese technologische Variante sind kontinuierliche Kneter, denen statische Mischer nachgeschaltet sein können.

Bei dem erfindungsgemäßen Verfahren zur Herstellung von Aminoplast-Formmassen können neben Festharzen ebenfalls Lösungen von Aminoplastvorkondensaten aus Triazinderivaten und C₁-C₈-Aldehyden eingesetzt werden, die unmittelbar in einer vorgelagerten Prozessstufe durch Hydroxyalkylierung von Triazinderivaten mit C₁-C₈-Aldehyden in C₁-C₄-Alkoholen oder Mischungen aus 70 bis 99 Masse% C₁-C₄-Alkoholen und 30 bis 1 Masse% Wasser, gegebenenfalls in Gegenwart ionischer Katalysatoren, bei 45 bis 90°C und Verweilzeiten von 15 bis 140 min hergestellt worden sind.

Der besondere Vorteil der erfindungsgemäßen Aminoplast-Formmassen besteht darin, dass sie auf Grund der höheren Schmelzviscosität gegenüber üblichen Triazinderivat-vorkondensaten wie Melamin-Formaldehyd-Vorkondensaten nach Schmelzeverarbeitungsverfahren wie Thermoplaste verarbeitet werden können und Härte und Flexibilität der daraus hergestellten Erzeugnisse in einem breiten Eigenschaftsbereich einstellbar sind.

Der Anteil an flüchtigen Spaltprodukten während der Aushärtung der erfindungsgemäßen Aminoplast-Formmassen aus Polytriazinethern während der Ausformung der Schmelze zum Erzeugnis ist gegenüber üblichen Formmassen auf Basis von niedermolekularen

Aminoplast-Vorkondensaten drastisch reduziert. Dadurch lassen sich aus den Aminoplast-Formmassen bei kurzen Taktzeiten rissfreie Erzeugnisse herstellen.

Bevorzugte Einsatzgebiete der Aminoplast-Formmassen sind Schmelzkleber sowie die Herstellung von Platten, Rohren, Profilen, Spritzgussteilen, Fasern und Schaumstoffen.

Die erfindungsgemäßen Aminoplast-Formmassen, insofern sie keine Füllstoffe oder weitere reaktive Polymere enthalten, sind in polaren Lösungsmitteln vom Typ C₁-C₁₀-Alkoholen, Dimethylformamid oder Dimethylsulfoxid in Konzentrationen bis 60 Masse% löslich. Die Lösungen oder Dispersionen sind als Adhesiv, Imprägniermittel, Lackharz- oder Laminierharzrezeptur oder zur Herstellung von Schäumen, Mikrokapseln oder Fasern geeignet. Die Vorteile der Lösungen bzw. Dispersionen der Polytriazinether gegenüber den entsprechenden Triazinharz-Vorkondensaten bestehen in der höheren Viscosität und den daraus resultierenden besseren Verlaufeigenschaften oder höheren Festigkeiten nicht ausgehärteter Zwischenprodukte bei der Faser- oder Schaumherstellung.

Bevorzugt sind die Aminoplasterzeugnisse durch Schmelzeverarbeitung hergestellte Halbzeuge, insbesondere Platten, Rohre, Profile, Beschichtungen, Schaumstoffe oder Fasern, oder Formstoffe, insbesondere Spritzgussteile, oder aus Fasern nach der Wickel-, Flecht- oder Pultrusionstechnik und nachfolgender Harzimprägnierung hergestellte Bauteile.

In den Aminoplast-Formmassen, die die Basis der erfindungsgemäßen Aminoplasterzeugnisse bilden, werden als Polytriazinether in den Mischungen Polytriazinether mit R₂ = H bevorzugt.

Die Mischungen aus Polytriazinethern in den Aminoplast-Formmassen können Gemische aus Polytriazinethern mit gleichem oder unterschiedlichem Substituent R₁ = -NH₂, -NH-CHR₂-O-R₃ ,-NH-CH R₂-O-R₄-OH, -OH, Phthalimido-. Succinimido- -NH-CHR₂-O-R₄-O-CHR₂-NH-, -NH-CHR₂-NH-, -NH-CHR₂-O-CHR₂-NH-sein.

Die in den Aminoplasterzeugnissen enthaltenen Füllstoffe bzw. Adsorbermaterialien sind bevorzugt Al₂O₃, Al(OH)₃, SiO₂, Bariumsulfat, Calciumcarbonat, Glaskugeln, Kieselerde, Glimmer, Quarzmehl, Schiefermehl, Mikrohohlkugeln, Russ, Talkum, Schichtsilikate, Molekularsiebe, Gesteinsmehl, Holzmehl, Cellulose, Cellulosederivate. Besonders bevorzugt als Füllstoffe werden Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite. Als Adsorbermaterial werden Schichtsilikate vom Typ Montmorillonit, Bentonit und Hectorit, Molekularsiebe des Typen A, X, Y, besonders 5A, Adsorber auf Siliciumdioxidbasis, Mikrohohlkugeln, Cellulose und/oder Cellulosederivate besonders bevorzugt.

Die in den Aminoplasterzeugnissen enthaltenen Verstärkungsfasern sind vorzugsweise anorganische Fasern, insbesondere Glasfasern und/oder Kohlenstofffasern, Naturfasern, insbesondere Cellulosefasern sowie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Beispiele für reaktive Polymere vom Typ Ethylen-Copolymere, die in den Aminoplasterzeugnissen bis zu 50 Masse% enthalten sein können, sind teilverseifte Ethylen-Vinylacetat-Copolymere, Ethylen-Butylacrylat-Acrylsäure-Copolymere, Ethylen-Hydroxy-ethylacrylat-Copölymere oder Ethylen-Butylacrylat-Glycidylmethacrylat-Copolymere.

Beispiele für reaktive Polymere vom Typ Maleinsäureanhydrid-Copolymere, die in den Aminoplasterzeugnissen bis zu 50 Masse% enthalten sein können, sind C₂-C₂₀-Olefin - Maleinsäureanhydrid-Copolymere oder Copolymere aus Maleinsäureanhydrid und C₈-C₂₀-Vinylaromaten.

Beispiele für die C₂-C₂₀-Olefin - Komponenten, die in den Maleinsäureanhydrid-Copolymeren enthaltenen sein können, sind Ethylen, Propylen, Buten-1, Isobuten, Diisobuten, Hexen-1, Octen-1, Hepten-1, Penten-1, 3-Methylbuten-1, 4-Methylpenten-1, Methylethylpenten-1, Ethylpenten-1, Ethylhexen-1, Octadecen-1 und 5,6-Dimethylnorbornen.

Beispiele für die C₈-C₂₀-Vinylaromaten - Komponenten, die in den Maleinsäureanhydrid-Copolymeren enthaltenen sein können, sind Styren, α-Methylstyren, Dimethylstyren, Isopropenylstyren, p-Methylstyren und Vinylbiphenyl.

Die in den Aminoplasterzeugnissen gegebenenfalls enthaltenen modifizierten Maleinsäureanhydrid-Copolymere sind bevorzugt partiell oder vollständig veresterte, amidierte bzw. imidierte Maleinsäureanhydrid-Copolymere.

Besonders geeignet sind modifizierten Copolymere aus Maleinsäureanhydrid und C₂-C₂₀-Olefinen bzw. C₈-C₂₀-Vinylaromaten mit einem Molverhältnis von 1 : 1 bis 1 : 9 und Molmassen-Gewichtsmitteln von 5000 bis 500000, die mit Ammoniak, C₁-C₁₈-Monoalkylaminen, C₆-C₁₈-aromatischen Monoaminen, C₂-C₁₈-Monoaminoalkoholen, monoaminierten Poly(C₂-C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis Anhydridgruppen Copolymer / Ammoniak, Aminogruppen C₁-C₁₈-Monoalkylamine, C₆-C₁₈-aromatische Monoamine, C₂-C₁₈-Monoaminoalkohole bzw. monoaminiertes Poly-(C₂-C₄-alkylen)oxid und/oder Hydroxygruppen Poly(C₂-C₄-alky-len)oxid 1 : 1 bis 20 : 1 beträgt.

Beispiele für reaktive Polymere vom Typ Poly(meth)acrylate, die in den Aminoplasterzeugnissen bis zu 50 Masse% enthalten sein können, sind Copolymere auf Basis von funktionellen ungesättigten (Meth)acrylatmonomeren wie Acrylsäure, Hydroxyethylacrylat, Glycidylacrylat, Methacrylsäure, Hydroxybutylmethacrylat, oder Glycidylmethacrylat und nichtfunktionellen ungesättigten (Meth)acrylatmonomeren wie Ethylacrylat, Butylacrylat, Ethylhexylacrylat, Methylmethacrylat, Ethylacrylat und/oder Butylmethacrylat und/oder C₈-C₂₀-Vinylaromaten. Bevorzugt werden Copolymere auf Basis Methacrylsäure, Hydroxyethylacrylat, Methylmethacrylat und Styren.

Beispiele für reaktive Polymere vom Typ Polyamide, die in den Aminoplasterzeugnissen bis zu 50 Masse% enthalten sein können, sind Polyamid-6, Polyamid-6,6, Polyamid-11, Polyamid-12, Polyaminoamide aus Polycarbonsäuren und Polyalkylenaminen sowie die entsprechenden methoxylierten Polyamide.

Beispiele für reaktive Polymere vom Typ Polyester, die in den Aminoplasterzeugnissen bis zu 50 Masse% enthalten sein können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsäuren wie Maleinsäure, Fumarsäure und/oder Itakonsäure und Diolen wie Ethylenglycol, Butandiol, Neopentylglycol und/oder Hexandiol. Bevorzugt werden verzweigte Polyester auf Basis von Neopentylglycol, Trimethylolpropan, Isophthalsäure und Azelainsäure.

Beispiele für reaktive Polymere vom Typ Polyurethane, die in den Aminoplasterzeugnissen bis zu 50 Masse% enthalten sein können, sind unvernetzte Polyurethane auf Basis von Toluylendiisocyanat, Diphenylmethandiisocyanat, Butandiisocyanat und/oder Hexandiisocynat als Diisocyanatkomponenten und Butandiol, Hexandiol und/oder Polyalkylenglycolen als Diolkomponenten mit Molmassen von 2000 bis 30000.

In den erfindungsgemäßen Aminoplasterzeugnissen können bis zu 20 Masse% Diole des Typs HO - R₄ - OH enthalten sein.

Beispiele für Diole vom Typ HO-R₄-OH, wobei R₄ = C₂-C₁₈-Alkylen bedeuten, sind Ethylenglycol, Butandiol, Octandiol, Dodecandiol und Octadecandiol.

Beispiele für Diole vom Typ HO-R₄-OH, wobei R₄ = -[CH₂-CH₂-O-CH₂-CH₂]ₙ - und n = 1-200 ist, sind Polyethylenglycole mit Molmassen von 500 bis 5000.

Beispiele für Diole vom Typ HO-R₄-OH, wobei R₄ = -[CH₂-CH(CH₃)-O-CH₂-CH(CH₃)]ₙ - und n = 1-200 ist, sind Polypropylenglycole mit Molmassen von 500 bis 5000.

Beispiele für Diole vom Typ HO-R₄-OH, wobei R₄ = -[-O-CH₂-CH₂-CH₂-CH₂-]ₙ - und n = 1-200 ist, sind Polytetrahydrofurane mit Molmassen von 500 bis 5000.

Beispiele für Diole vom Typ HO-R₄-OH, wobei R₄ = -[(CH₂)₂₋₈-O-CO-_{C6-C14}-Arylen-CO-O-(CH₂)₂₋₈-]ₙ- ist, sind Ester und Polyester auf Basis gesättigter Dicarbonsäuren wie Terephthalsäure, Isophthalsäure oder Naphthalindicarbonsäure und Diolen wie Ethylenglycol, Butandiol, Neopentylglycol und/oder Hexandiol. Als Ester wird Bis(hydroxyethyl)-terephthalat bevorzugt.

Beispiele für Diole vom Typ HO-R₄-OH, wobei R₄ = -[(CH₂)₂₋₈-O-CO-_{C2-C12}-Alkylen-CO-O-(CH₂)₂₋₈-]ₙ ist, sind Polyester auf Basis gesättigter Dicarbonsäuren wie Adipinsäure und/oder Bernsteinsäure, ungesättigter Dicarbonsäuren wie Maleinsäure, Fumarsäure und/oder Itakonsäure und Diolen wie Ethylenglycol, Butandiol, Neopentylglycol und/oder Hexandiol.

Beispiele für Diole vom Typ HO-R₄-OH, wobei R₄ = Siloxangruppen enthaltende Sequenzen des Typs 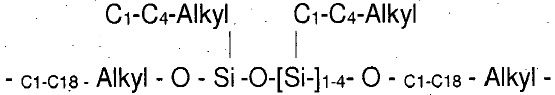 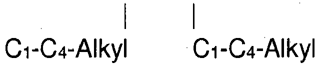 bedeuten, sind 1,3-Bis(hydroxybutyl)tetramethyldisiloxan und 1,3-Bis(hydroxyoctyl)tetraethyldisiloxan.

Beispiele für Polyestersequenzen mit Siloxangruppen enthaltende Diole vom Typ HO-R₄-OH, wobei R₄ = -[(X)ᵣ-O-CO-(Y)ₛ-CO-O-(X)ᵣ]- ist,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 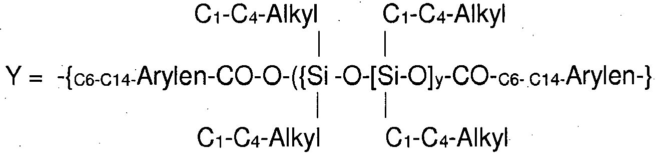 oder 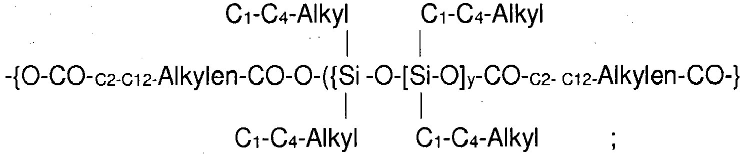 r = 1 bis 70; s = 1 bis 70 und y = 3 bis 50 bedeuten;
sind Hydroxylendgruppen enthaltende Polyester auf Basis aromatischer C₆-C₁₄-Arylendicarbonsäuren wie Terephthalsäure oder Naphthalindicarbonsäure, aliphatischer C₂-C₁₂-Alkylendicarbonsäuren wie Adipinsäure, Maleinsäure oder Pimelinsäure, Diolen wie Ethylenglycol, Butandiol, Neopentylglycol oder Hexandiol und Siloxanen wie Hexamethyldisiloxan oder α,ω-Dihydroxypolydimethylsiloxan.

Beispiele für Siloxangruppen enthaltende Polyetherdiole HO-R₄-OH, bei denen R₄ Poly-ethersequenzen des Typs 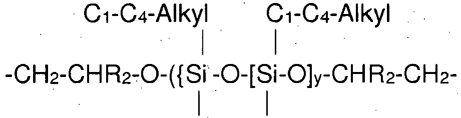 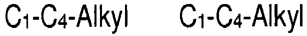 wobei R₂ = H; C₁-C₄-Alkyl und y = 3 bis 50; bedeuten,
sind Polyetherdiole auf Basis von Siloxanen wie Hexamethyldisiloxan oder α,ω-Dihydroxypolydimethylsiloxan und Alkylenoxiden wie Ethylenoxid oder Propylenoxid.

Beispiele für Diole auf Basis von Alkylenoxidaddukten des Melamins vom Typ 2-Amino-4,6-bis(hydroxy-_{C2-C4}-alkylenamino)-1,3,5-triazin sind Diole auf Basis Melamin und Ethylenoxid oder Propylenoxid.

Beispiele für Phenoletherdiole auf Basis zweiwertiger Phenole und C₂-C₈-Diolen vom Typ Bis(hydroxy-_{C2-C8}-Alkylen-O-)_{C6-C18}-Arylen sind Ethylenoxidaddukte oder Propylenoxidaddukte an Diphenylolpropan.

Beispiele für geeignete Stabilisatoren und UV-Absorber, die in den Aminoplasterzeugnissen bis zu 2 Masse% enthalten sein können, sind Piperidinderivate, Benzophenonderivate, Benzotriazolderivate, Triazinderivate und/oder Benzofuranonderivate.

Die Aminoplasterzeugnisse verbesserter Flexibilität werden erfindungsgemäß nach einem Verfahren hergestellt, bei dem Aminoplast-Formmassen, die aus Mischungen aus schmelzbaren 20- bis 1000-Triazinzyklen-Polytriazinethern und optional aus bis zu 75 Masse% Füllstoffen, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 5 Masse%, jeweils bezogen auf die Polytriazinether, Stabilisatoren, UV-Absorbern, Härtern und/oder Hilfsstoffen bestehen,
wobei in den Polytriazinethern die Triazinsegmente 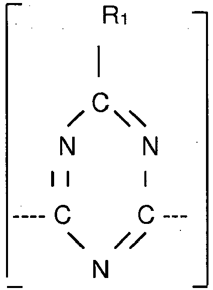 R₁ = -NH₂, -NH-CHR₂-O-R₃ ,-NH-CHR₂-O-R₄-OH, -OH, Phthalimido-. Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-,
-CH(CH₃)-CH₂-O-_{C6-C12}-Arylen-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-Arylen-CO-O-(CH₂)₂₋₈-]ₙ -,
-[(CH₂)₂₋₈-O-CO-_{C2-C12}-Alkylen-CO-O-(CH₂)₂₋₈-]ₙ -,
wobei n = 1 bis 200;
- Siloxangruppen enthaltende Sequenzen des Typs 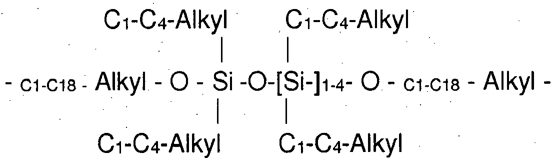
- Siloxangruppen enthaltende Polyestersequenzen des Typs -[(X)ᵣ-O-CO-(Y)ₛ-CO-O-(X)ᵣ]- ,
   bei denen
   X = {(CH₂)₂₋₈-O-CO-_{C6-C14}-Arylen-CO-O-(CH₂)₂₋₈-} oder
   -{(CH₂)₂₋₈-O-CO-_{C2-C12}-Alkylen-CO-O-(CH₂)₂₋₈-}; 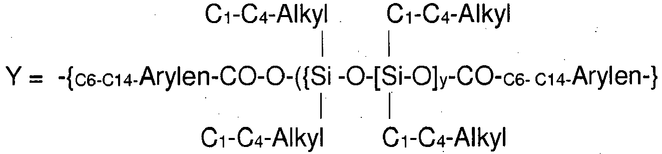 oder 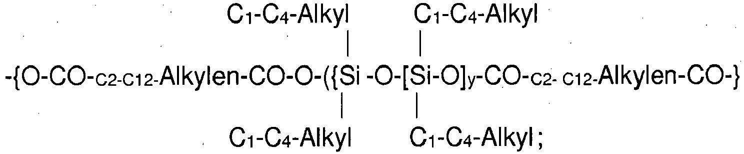 r = 1 bis 70; s = 1 bis 70 und y = 3 bis 50 bedeuten;
- Siloxangruppen enthaltende Polyethersequenzen des Typs 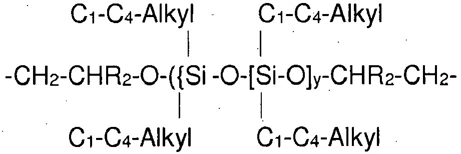 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8}-Alkylen-O-_{C6-C18}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1000-Triazinzyklen-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt und
der Anteil der Verknüpfungen der Triazinsegmente durch Brückenglieder -NH-CHR₂-O-R₄-O-CHR₂-NH- 5 bis 95 Mol% beträgt,
in kontinuierlichen Knetern bei Massetemperaturen von 105 bis 260°C und Verweilzeiten von 2 bis 12 min aufgeschmolzen werden und unter Aushärtung der Polytriazinether nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und konfektioniert werden,
   oder
B) über eine Profildüse ausgetragen und als Profil oder Plattenmaterial abgezogen, geschnitten und konfektioniert werden,
   oder
C) über eine Ringdüse ausgetragen, unter Einpressen von Luft als Rohr abgezogen, geschnitten und konfektioniert werden,
   oder
D) nach Eindosierung von Treibmitteln über eine Breitschlitzdüse ausgetragen und als geschäumtes Plattenmaterial abgezogen werden,
   oder
E) über die Breitschlitzdüse einer Rohrbeschichtungsanlage ausgetragen und schmelzflüssig auf das rotierende Rohr aufgesiegelt werden,
   oder
F) in Spritzgussmaschinen, bevorzugt mit Dreizonenschnecken einer Schneckenlänge von 18 bis 24 D, hohen Einspritzgeschwindigkeiten und bei Werkzeugtemperaturen von 70 bis 150°C, zu Spritzgussformteilen verarbeitet werden, oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden,
   oder
K) zur Schmelzeimprägnierung von nach dem Wickelverfahren, Flechtverfahren oder Pultrusionsverfahren hergestellter Bauteilrohlinge eingesetzt werden,
und die Erzeugnisse gegebenenfalls zur vollständigen Aushärtung einer thermischen Nachbehandlung bei Temperaturen von 180 bis 280°C und Verweilzeiten von 20 bis 120 min unterzogen werden.

Die bei dem Verfahren zur Herstellung von Aminoplasterzeugnissen verwendeten Aminoplast-Formmassen können in Form von zylindrischen, linsenförmigen, pastillenförmigen oder kugelförmigen Partikeln mit einem mittleren Durchmesser von 0,5 bis 8 mm eingesetzt werden.

Die in den Aminoplast-Formmassen enthaltenen Mischungen aus schmelzbaren 20- bis 1000-Triazinzyklen-Polytriazinethern lassen sich durch Veretherung von methylolierten Aminotriazinen mit C₁-C₄-Alkoholen, partielle Umetherung der Aminotriazinether mit Diolen vom Typ H-O-R₄-O-H und/oder partielle Umsetzung mit Bisepoxiden vom Typ 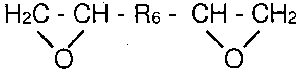 wobei
R₄ C₂-C₁₈-Alkylen, -[CH₂-CH₂-O-CH₂-CH₂]ₙ -, -[CH₂-CH(CH₃)-O-CH₂-CH(CH₃)]ₙ-,
-[-O-CH₂-CH₂-CH₂-CH₂-]ₙ-
-[(CH₂)₂₋₈-O-CO-_{C6-C12}-Aryl-CO-O-(CH₂)₂₋₈-]ₙ -,
-[(CH₂)₂₋₈-O-CO-_{C6-C12}-Alkylen-CO-O-(CH₂)₂₋₈-]ₙ -,
n = 1 bis 200,
Siloxangruppen enthaltende Polyestersequenzen oder Polyethersequenzen,
Sequenzen auf Basis von Alkylenoxidaddukten des Melamins,
Phenolethersequenzen auf Basis zweiwertiger Phenole und Diolen,
und R₆ = -CH₂-O-_{C2-C12}-Alkylen-O-CH₂-, -CH₂-O-_{C6-C14}-Arylen-O-CH₂-,
bedeuten, und nachfolgendes Schmelzekneten der Aminotriazinether herstellen. Neben Diolen können als mehrwertige Alkohole auch drei- und/oder vierwertige Alkohole eingesetzt werden.

Bevorzugt werden bei der Herstellung der erfindungsgemäßen Aminoplasterzeugnisse Aminoplast-Formmassen eingesetzt, bei denen die darin enthaltenen Polytriazinether 30- bis 300-Triazinzyklen-Polytriazinether sind.

Mit besonderem Vorteil werden bei der Herstellung von Aminoplasterzeugnissen verbesserter Flexibilität Aminoplast-Formmassen eingesetzt, bei denen die darin enthaltenen Polytriazinether Polytriazinether mit R₂ = H sind.

Bevorzugt sind die bei der Herstellung der erfindungsgemäßen Aminoplasterzeugnisse in den eingesetzten Aminoplast-Formmassen enthaltenen Härter schwache Säuren vom Typ
- blockierte Sulfonsäuren,
- aliphatische C₄-C₁₈-Carbonsäuren,
- Alkalisalze oder Ammoniumsalze der Phosphorsäure,
- C₁-C₁₂-Alkylester oder C₂-C₈-Hydroxyalkylester von C₆-C₁₄-aromatischen Carbonsäuren oder anorganischen Säuren,
- Salze von Melamin oder Guanaminen mit C₁₋₁₈-aliphatischen Carbonsäuren,
- Anhydride, Halbester oder Halbamide von C₄-C₂₀-Dicarbonsäuren,
- Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten,
   und/oder
- Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure.

Die in den eingesetzten Aminoplast-Formmassen als Härter enthaltenen schwachen Säuren können bei der Rezepturierung der Aminoplast-Formmassen und/oder nach dem Aufschmelzen der Aminoplast-Formmassen vor der Ausformung zum Halbzeug bzw. Formstoff zugesetzt werden.

Beispiele für blockierte Sulfonsäuren als Härter bei der Herstellung der erfindungsgemäßen Aminoplasterzeugnisse sind Benzilmonoxim-tosylat, α-Cyclohexylsulfonyl-oxyimi-no-phenylessigsäureethylester, Acetonoxim-p-benzoylbenzolsulfonat, α-(4-Nitro-benzol-sulfonyloxyimino)benzylcyanid, 2-Nitrobenzylsulfonat und 2-Methylsulfonyloxyimino-4-phenyl-but-3-ennitril.

Beispiele für aliphatische C₄-C₁₈-Carbonsäuren als Härter bei der Herstellung der erfindungsgemäßen Aminoplasterzeugnisse sind Buttersäure, Capronsäure, Palmitinsäure, Stearinsäure und Ölsäure.

Beispiele für Alkalisalze oder Ammoniumsalze der Phosphorsäure als Härter, die bei der Herstellung der erfindungsgemäßen Aminoplasterzeugnisse in den eingesetzten Aminoplast-Formmassen enthalten sind, sind Ammoniumhydrogenphosphat, Natriumpolyphosphat und Kaliumhydrogenphosphat.

Beispiele für C₁-C₁₂-Alkylester oder C₂-C₈-Hydroxyalkylester von C₆-C₁₄-aromatischen Carbonsäuren oder anorganischen Säuren als Härter bei der Herstellung der erfindungsgemäßen Aminoplasterzeugnisse sind Dibutylphthalat, Phthalsäurediglycolester und/oder Trimellithsäureglycolester.

Beispiele für Salze von Melamin oder Guanaminen mit C₁₋₁₈-aliphatischen Carbonsäuren als Härter bei der Herstellung der erfindungsgemäßen Aminoplasterzeugnisse sind Melaminformiat, Melamincitrat und/oder Acetoguanaminbutyrat.

Beispiele für Anhydride, Halbester oder Halbamide von C₄-C₂₀-Dicarbonsäuren als Härter bei der Herstellung der erfindungsgemäßen Aminoplasterzeugnisse sind Maleinsäureanhydrid, Mono-C₁-C₁₈-alkylmaleate wie Maleinsäuremonobutylester, Maleinsäuremonoethylhexylester oder Monostearylmaleat oder Maleinsäuremono-C₁-C₁₈-alkylamide wie Maleinsäuremonoethylamid, Maleinsäuremonooctylamid oder Maleinsäuremonostearylamid.

Beispiele für Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten als Härter bei der Herstellung der erfindungsgemäßen Aminoplasterzeugnisse sind Halbester oder Halbamide von Copolymeren aus Maleinsäureanhydrid und C₃-C₈-α-Olefinen vom Typ Isobuten, Diisobuten und/oder 4-Methylpenten und/oder Styren mit einem Molverhältnis Maleinsäureanhydrid/C₃-C₈-α-Olefin bzw. Styren bzw. entsprechender Monomermischungen von 1 : 1 bis 1 : 5.

Beispiele für Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure als Härter bei der Herstellung der erfindungsgemäßen Aminoplasterzeugnisse sind Ethanolammmoniumchlorid, Triethylammoniummaleat, Diethanolammoniumphosphat und/oder Isopropylammonium-p-toluolsulfonat.

Beispiele für geeignete Hilfsstoffe, die bei dem erfindungsgemäßen Verfahren zur Herstellung von Aminoplasterzeugnissen eingesetzt werden können, sind Verarbeitungshilfsmittel wie Calciumstearat, Magnesiumstearat und/oder Wachse.

Für die Herstellung von Aminoplasterzeugnissen, die Füllstoffe, Adsorbermaterialien, weitere reaktive Polymere, Diole, Stabilisatoren, UV-Absorber und/oder Hilfsstoffe enthalten, können Formmassen eingesetzt werden, in denen diese Komponenten bereits enthalten sind, oder die Komponenten werden bei der Verarbeitung der Aminoplast-Formmassen zu Aminoplasterzeugnissen zugesetzt.

Für das Aufschmelzen der Aminoplast-Formmassen bei der Herstellung der Aminoplasterzeugnisse sind als kontinuierliche Kneter Extruder mit Kurzkompressionsschnecken oder Dreizonenschnecken mit L/D = 20-40 geeignet. Bevorzugt werden 5-Zonen-Schnecken mit Einzugszone, Kompressionszone, Scherzone, Dekompressionszone und Homogenisierungszone. Schnecken mit Schnittiefen von 1 : 2,5 bis 1 : 3,5 sind bevorzugt geeignet. Besonders günstig ist die Zwischenschaltung von statischen Mischern oder Schmelzepumpen zwischen Zylinder und Düse.

Günstige Massetemperaturen für die aufgeschmolzenen Aminoplast-Formmassen bei der Verarbeitung nach der Glättwerktechnologie zu Aminoplasterzeugnissen in Form von Platten oder Beschichtungen oder bei der Herstellung von Platten, Profilen oder Rohren durch Austrag aus einer Profildüse liegen im Bereich von 140 bis 220°C.

Bei der Herstellung von geschäumtem Plattenmaterial als Aminoplasterzeugnis durch Austrag über eine Breitschlitzdüse können Aminoplast-Formmassen eingesetzt werden, die gasabspaltende Treibmittel wie Natriumhydrogencarbonat, Azodicarbonamid, Zitronensäure/Bicarbonat-Treibsysteme und/oder Cyanursäuretrihydrazid enthalten, oder in die Schmelze werden vor dem Austrag leichtflüchtige Kohlenwasserstoffe wie Pentan, Isopentan, Propan und/oder Isobutan, oder Gase wie Stickstoff, Argon und/oder Kohlendioxid dosiert. Günstige Düsentemperaturen für den Austrag der Treibmittel-enthaltenden Schmelze sind 135 bis 185°C. Bevorzugte Schaumdichten der geschäumten Aminoplasterzeugnisse liegen im Bereich von 10 bis 500 kg/m².

Für die Extrusionsbeschichtung von Metallrohren sind Massetemperaturen der Schmelzen aus Aminoplast-Formmassen von 145°C bis 210°C und eine Vorwärmung des Rohrmaterials auf 120 bis 160°C erforderlich.

Vorzugsweise werden bei der Herstellung von Aminoplast-Spritzgusserzeugnissen Spritzgussmaschinen mit Spritzeinheiten eingesetzt, die Dreizonenschnecken mit einer Schneckenlänge von 18 bis 24 D besitzen. Die Einspritzgeschwindigkeit bei der Her-stellung der durch Spritzgiessen erzeugten Formteilerzeugnisse soll möglichst hoch eingestellt werden, um Einfallstellen und schlechte Bindenähte auszuschliessen. Bevorzugte Schmelzetemperaturen liegen im Bereich von 170 bis 260°C

Bei der Herstellung von Fasererzeugnissen aus Aminoplasten werden zur gleichmässigen Schmelzedosierung der im Plastifizierextruder aufgeschmolzenen Formmassen über den Schmelzeverteiler zum Kapillarwerkzeug bevorzugt Diphenyl-beheizte Schmelzepumpen für die auf 170-250°C erhitzten Schmelzen eingesetzt.

Die Herstellung von Filamentgarnen als Aminoplasterzeugnisse kann in Kurzspinnanlagen durch Abzug der Fäden mit Hilfe schnelllaufender Galetten mit Fadenabzugsgeschwindigkeiten auf 60 bis 450 m/min und Weiterverarbeitung in Nachfolgeeinrichtungen aus Härtungskammer, Reckeinrichtung und Wickler erfolgen.

Fasern oder Vliese als Aminoplasterzeugnisse können ebenfalls nach dem Melt-Blow-Verfahren durch Applizierung eines hocherhitzten Luftstroms um die Kapillardüsenöffnungen bei der Extrusion der Fäden aus dem Kapillarwerkzeug in den Blasschacht hergestellt werden. Der Luftstrom verstreckt den geschmolzenen Faden unter gleichzeitiger Zerteilung in viele Einzelfäserchen mit Faserdurchmessern von 0,5 bis 12 µm. Eine Weiterverarbeitung der auf dem Siebtransportband abgelegten Fasern zu Vliesen kann durch Applikation von Thermobondier- oder Vernadelungsprozessen zur Erzielung der erforderlichen Festigkeit und Dimensionsstabilität erfolgen.

Bei dem erfindungsgemäßen Verfahren zur Herstellung von Aminoplasterzeugnissen erfolgt die Herstellung von Faserfibriden aus den Aminoplastformmassen bevorzugt durch
- Eintrag der Schmelze über Eintragsdüsen bei Schmelzetemperaturen von 160 bis 220°C in eine Scherfeldkammer, die auf 150 bis 210°C erhitzte hochsiedende organische Dispergiermittel, bevorzugt Paraffinöl oder Motorenöl, enthält, wobei in die Scherfeldkammer saure Gase, bevorzugt Chlorwasserstoff oder Schwefeldioxid, eingeleitet werden, und wobei der aus der Eintragsdüse austretende Schmelzestrang durch das vom Rotor verwirbelte Öl unter Faserbildung verstreckt und zerteilt wird,
- Überführung der Dispersion der gebildeten Faserfibride in organischen Dispergiermitteln in einen Siebabscheider unter gleichzeitiger Extraktion der hochsiedenden Dispergiermittel mit niedrigsiedenden Kohlenwasserstoffen, bevorzugt Hexan oder Heptan,
- Austrag des Faserfibrid-Kurzfaservlieses und gegebenenfalls thermische Nachver-netzung des Kurzfaservlieses bei Temperaturen von 190 bis 240°C und Verweilzeiten von 40 bis 120 min
erfolgt.

Aminoplasterzeugnisse in Form von rotationssymmetrischen Bauteilen nach dem Wickelverfahren, in Form komplexer Bauteile nach der Rundflechttechnik oder von Profilen nach der Pultrusionstechnik lassen sich durch Tränkung der Faserrohlinge in Form von Rohren, Fittings, Behältern oder Profilen mit der Schmelze der Aminoplast-Formmasse herstellen.

Die Härte und Flexibilität der hergestellten Erzeugnisse wird durch den Gehalt der Brückenglieder zwischen den Triazinsegmenten, Art und Molmasse des Substituenten R₄ in den Brückengliedern, den Anteil linearer Verknüpfungen zwischen den Triazinsegmenten sowie weiterhin durch den Anteil von längerkettigen Substituenten an den Triazinsegmenten bestimmt, die aus der Umsetzung mit C₅-C₁₈-Alkoholen resultieren. Je höher der Anteil und die Molmasse der Brückenglieder, der Anteil der linearen Triazinsegment-Verknüpfungen und der Anteil an längerkettigen Substituenten, um so höher ist die Flexibilität der hergestellten Aminoplasterzeugnisse.

Die Aminoplasterzeugnisse verbesserter Flexibilität werden bevorzugt für Anwendungen mit hohen Anforderungen an Flammfestigkeit und Wärmebeständigkeit im Bauwesen, Maschinenbau und Fahrzeugindustrie, insbesondere in Form von Schaumplatten als Isolationsbauteile, in Form von Platten als Verkleidungselemente, in Form von Rohren und Hohlprofilen in der Lüftungstechnik, in Form von Spritzgussteilen als Funktionsteile sowie in Form von Fasern insbesondere zur Herstellung von Elektroisolationspapieren, Feuerschutzkleidung, Kleidung für hohe Arbeitstemperaturen, Brandschutzdecken, Filtervliesen, Filzen für Papiermaschinen sowie Fahrzeug- bzw. Maschinen-Isolationsabdeckungen, sowie in Form komplexer Bauteile, Behälter oder Profile nach dem Wickel-, Flecht- oder Pultrusionsverfahren eingesetzt.

Die Erfindung wird durch folgende Beispiele erläutert :

### Beispiel 1

### 1.1 Herstellung des veretherten Aminotriazin-Aldehyd-Vorkondensats

Zur Herstellung des Vorkondensats werden in einen 50 I - Rührreaktor, 5,05 kg Melamin, 4,2 kg Paraformaldehyd, 21 g p-Toluolsulfonsäure und 17,9 kg Methanol dosiert. Innerhalb 15 min wird auf 90°C erwärmt und bis zum Erreichen einer klaren Lösung bei dieser Temperatur weiter gerührt. Nach Abkühlung auf Raumtemperatur wird mit 20% methanolischer KOH auf einen pH von 8,7 eingestellt. Nachfolgend wird die Lösung in einem zweistufigen Verdampfungsschritt bis zu einem Restlösungsmittelgehalt von 10 Masse% eingeengt.

### 1.2 Herstellung der Aminoplast-Formmasse

Für die Herstellung der Aminoplast-Formmasse wird als verethertes Vorkondensat 2,4,6-Tris-methoxymethylamino-1,3,5-triazin nach 1.1 und als Diolkomponente Bis(hydroxy-ethyl)terephthalat eingesetzt.

Die Umetherung und weitere Kondensation zum Polytriazinether wird diskontinuierlich im Messkneter (Fa. Haake Polylabsystem 540p) durchgeführt. Nach Vorheizen auf 170°C werden in die Knetkammer 32,5 g Bis(hydroxyethyl)terephthalat und 39,5 g 2,4,6-Tris-methoxymethy(amino-1,3,5-triazin dosiert und bei einer Drehzahl von 50 min⁻¹ geknetet, bis nach einer Reaktionszeit von 6 min ein Drehmoment von 3 Nm erreicht ist. Das während der Compoundierung freiwerdende Methanol wird durch Vakuum aus der Knetkammer entfernt. Der Polytriazinether wird nach Abkühlen entnommen und in einer Universal-Mühle 100 UPZ/II (Alpine Hosokawa) mit Schlagscheibe und 2 mm Sieb gemahlen.

Der durch HPLC im Reaktionsprodukt ermittelte Gehalt an nicht umgesetztem Bis(hydroxyethyl)terephthalat beträgt 19 Masse%. Die Viscosität der Aminoplast-Formmasse bei 140°C beträgt 300 Pa.s .

### 1.3 Herstellung von Prepregs und 3D-Profil-Laminaten

Die Herstellung der Prepregs erfolgt über eine Bepulverung von Cellulosevliesen (120g/m², Lenzing AG, Österreich) mit dem fein vermahlenen Polytriazinether nach 1.2 (mittlerer Partikeldurchmesser 0,1 mm) mit anschliessender Aufschmelzung des Pulvers im Infrarotstrahlerfeld bei ca. 150°C. Die so hergestellten Prepregs besitzen einen Harzauftrag von ca. 50%.

Die Prepregs werden auf eine Größe von 30x20 cm zugeschnitten. Zur Herstellung eines Formteils mit gebogenen Kanten im Sinne eines U-Profils werden 3 Prepregs plus ein unbehandeltes Cellulosevlies als Oberseite übereinander in eine auf 150°C vorgeheizte Pressform (30x20cm) gelegt und die Presse langsam zugefahren, wobei sich die Prepregs auf Grund des noch nicht ausgehärteten Harzes leicht verformen lassen. Unter einem Druck von 150 bar wird die Temperatur auf 180°C erhöht und 15 min gepresst. Das fertige Werkstück wird entnommen, langsam abgekühlt und der durch austretendes Harz an der Tauchkante des Presswerkzeuges entstandene Grat abgeschliffen.

Aus dem Werkstück herausgefräste Probekörper besitzen im Biegeversuch ein E-Modul von 5,6 GPa, eine Dehnung bei Maximalkraft von 3,2% und eine Schlagzähigkeit von 12,5 kJ/m².

### Beispiel 2

Für die Herstellung des Polytriazinethers wird als verethertes Vorkondensat eine Mischung aus 75 Masse% 2,4,6-Tris-Ethoxymethylamino-1,3,5-triazin und 25 Masse% eines Triazinmethylethers, der aus einem Vorkondensat aus Butyroguanamin/Melamin 1 :5 als Aminotriazinkomponente und Butyraldehyd/Formaldehyd 1:8 als Aldehydkomponente bei einem Aldehyd/Aminotriazin - Verhältnis 3 : 1 hergestellt wurde, eingesetzt. Die Diolkomponente bildet eine Mischung aus 50 Masse% Butandiol und 50 Masse% eines Polypropylenglycols mit einer Molmasse von 500.

Die Umetherung und weitere Kondensation zum Polytriazinether wird diskontinuierlich im Messkneter (Fa. Haake Polylabsystem 540p) durchgeführt. Nach Vorheizen auf 175°C werden in die Knetkammer 45 g der Triazinethermischung und 35 g der Mischung der Diolkomponenten dosiert und bei einer Drehzahl von 50 min⁻¹ 12 min geknetet. Die während der Compoundierung freiwerdende Alkoholmischung wird durch Vakuum aus der Knetkammer entfernt. Nach 10 min werden 5 Masse% Na-Montmorillonit (Südchemie AG) sowie 5 Masse%, jeweils bezogen auf die Aminotriazinmischung, Polyamid D1466 (Ems-Chemie) zugegeben und weitere 5 min geknetet. Die Aminoplast-Formmasse wird nach Abkühlen entnommen und in einer Universal-Mühle 100 UPZ/II (Alpine Hosokawa) mit Schlagscheibe und 2 mm Sieb gemahlen.

### Beispiel 3

Für die Herstellung des Polytriazinethers wird als verethertes Vorkondensat eine Mischung aus 20 Masse% 2,4-Bis-methoxymethylamino-6-methyl-1,3,5-triazin und 80 Masse% 2,4,6-Tris-methoxymethylamino-1,3,5-triazin und als Diol ein Oligoethylenglycolether auf Basis Pentaerythrit (Simulsol PTKE, Seppic S.A., Frankreich) eingesetzt.

In einem Laborextruder GL 27 D44 (Leistritz) mit Vacuumentgasung, Temperaturprofil 130°C/150°C/190°C/230°C/230°C/230°C/230°C/230°C/230°C/100°C/100°C werden in den Einzugstrichter mit 1,38 kg/h die Mischung des veretherten Vorkondensats und mittels Seitenstromdosierung in die Einzugszone mit 1,12 kg/h das Diol auf Basis Pentaerythrit gravimetrisch dosiert. In die Zone 8 des Extruders wird über eine Seitenstromdosierung mit 0,1 kg/h ein mit Bernsteinsäure oberflächlich benetzter Natriummontmorillonit (Südchemie, Moosburg Deutschland) zudosiert. Die Extrusion findet bei einem bei einer durchschnittlichen Verweilzeit von 3 bis 4 min statt. Die Extruderdrehzahl beträgt 150 min⁻¹. Der aus dem Extruder austretende Strang des gefüllten Polytriazinethers wird in einem Granulator geschnitten.

Die Aminoplast-Formmasse zeichnet sich durch eine niedrige Viskosität bei 150°C von ca. 100-200 Pas aus.

### Beispiele 4 bis 15

Versuchsdurchführung wie Beispiel 1.2, als Diole werden Simulsol BPLE (Oligoethylen-glycolether von Bisphenol A, Seppic S.A., Paris), Simulsol PTKE (Oligoethylenglycolether von Pentaerythrit, Seppic S.A., Paris), PEG 1000 (Polyethylenglycol, Molmasse rd. 1000, BASF), 1,6 Hexandiol, 1,12 Dodecandiol, PTHF 250 (Polytetrahydrofuran Molmasse 250, BASF Schwarzheide) und 1,3-Bis(hydroxybutyl)tetramethyldisiloxan eingesetzt :

| Beispiel Nr. | | Diol | Masse % in Mischg | Temp [°C] | Reaktionszeit [min] bis 3 Nm | Viskosität [Pa s]/140°C (DMA-Werte) | Restdiolgehalt (HPLC) [Gew.%] |
|---|---|---|---|---|---|---|---|
| 4 | | Simulsol BPLE | 24,1 | 170 | 14 | 300 | 15% |
| 5 | | Simulsol BPLE | 24,1 | 200 | ∼ 5 - 7 | 800 | 14% |
| 6 | | Simulsol PTKE | 24,1 | 170 | 13 | 700 | 15% |
| 7 | | Simulsol PTKE | 24,1 | 200 | ∼ 6 - 8 | 1000 | 12% |
| 8 | | PEG 1000 | 39,4 | 170 | 15 | 1200 | 20 % |
| 9 | | PEG 1000 | 39,4 | 200 | ∼ 6 - 7 | 1400 | 17% |
| | | | | | | | |
| 10 | | 1,6-Hexandiol | 21,1 | 170 | 17 | 1000 | 10% |
| 11 | | 1,6-Hexandiol | 7,1 | 170 | 14 | 400 | 4% |
| | | | | | | | |
| 12 | | 1,12-Dodecandiol | 29,1 | 130 *⁾ | ∼ 30 | 400 | 15% |
| 13 | | 1,12-Dodecandiol | 29,1 | 120 *⁾ | ∼ 40 | 800 | 12% |
| | | | | | | | |
| 14 | | PTHF 250 | 32,8 | 120 *⁾ | ~ 40 | 1200 | 20% |
| | | | | | | | |
| 15 | | 1,3-3is(hydroxybu tyl)tetramethyl disiloxan | 29,5 | 170 | ∼ 11 | 300 | 17% |

| | | | | | | | |
|---|---|---|---|---|---|---|---|
| * Bei den Beispielen 12 bis 14 wurden 0,1 Masse%, bezogen auf die Summe der Mischungskomponenten, p-Toluolsulfonsäure als Hilfsstoff zugesetzt. | | | | | | | |

Bei der Umesterung und Kondensation im Kneter werden 38 bis 59 Masse% des eingesetzten Diols an den Polytriazinether gebunden.

Der Polytriazinether in Beispiel 5 ergibt bei der Molmassenbestimmung (GPC) Mₙ=1800 und M_{w}=22700. Der Rest -OCH₃-Gehalt (GC) des Polytriazinethers beträgt 14,5 Masse%, die Viscosität bei 140°C 800 Pa.s

### Beispiel 16

Für die Herstellung des Polytriazinethers wird als verethertes Vorkondensat 2,4,6-Tris-methoxymethylamino-1,3,5-triazin nach Beispiel 1 und als Diol der Ethylenglycol-Diether von Bisphenol A (Simulsol BPLE, Seppic S.A., Frankreich) eingesetzt.

Die Umetherung und weitere Kondensation zum Polytriazinether findet bei 200°C im Laborextruder GL 27 D44 mit Vacuumentgasung (Leistritz) bei einem Temperaturprofil von 100°C/130°C/130°C/200°C/200°C/200°C/200°C/200°C/200°C/100°C/100°C und einer durchschnittlichen Verweilzeit von 2 bis 3 min statt. Die Extruderdrehzahl beträgt 150 min⁻¹. In die Einzugszone des Extruders werden 2,4,6-Tris-methoxymethylamino-1,3,5-triazin mit 1,38 kg/h und der Ethylenglycol-Diether von Bisphenol A mit 1,13 kg/h mittels Seitenstromdosierung gravimetrisch dosiert. Der aus dem Extruder austretende Strang des Polytriazinethers wird in einem Granulator geschnitten.
Der resultierende Aminoplast-Formmasse besitzt eine Viscosität bei 140°C von 250 Pa.s und einen durch HPLC ermittelten Gehalt an nicht umgesetztem Diol von 15 Masse%.

### Beispiele 17 bis 30

Versuchsdurchführung wie Beispiel 16, als Diole werden DGT (Bis(hydroxyethyl)tere-phthalat), Simulsol BPLE (Oligoethylenglycolether von Bisphenol A, Seppic S.A., Paris), Simulsol PTKE (Oligoethylenglycolether von Pentaerythrit, Seppic S.A., Paris), PEG 1000 (Polyethylenglycol, Molmasse rd. 1000, BASF), 1,6 Hexandiol, 1,12 Dodecandiol, PTHF 250 (Polytetrahydrofuran Molmasse 250, BASF Schwarzheide) und 1,3-Bis(hydroxybutyl)-tetramethyldisiloxan eingesetzt.

Die Temperaturen in den Zylinderschüssen bei der Umesterung und Kondensation im Leistritzextruder betrugen:

### Beispiel 17

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 100°C | 130°C | 130°C | 200°C | 200°C | 200°C | 200°C | 200°C | 200°C | 100°C | 100°C |

### Beispiele 18 bis 20

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 130°C | 150°C | 190°C | 230°C | 230°C | 230°C | 230°C | 230°C | 230°C | 100°C | 100°C |

### Beispiele 21 und 22

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 130°C | 150°C | 190°C | 230°C | 230°C | 230°C | 230°C | 230°C | 230°C | 100°C | 100°C |

### Beispiele 23 und 24

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 130°C | 150°C | 190°C | 240°C | 240°C | 240°C | 240°C | 240°C | 240°C | 100°C | 100°C |

### Beispiele 25 und 26

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 100°C | 110°C | 130°C | 150°C | 170°C | 170°C | 170°C | 170°C | 170°C | 100°C | 100°C |

### Beispiele 27 und 28

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 100°C | 120°C | 150°C | 170°C | 190°C | 190°C | 190°C | 190°C | 190°C | 100°C | 100°C |

### Beispiel 29

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 100°C | 130°C | 160°C | 180°C | 200°C | 200°C | 200°C | 200°C | 200°C | 100°C | 100°C |

Beispiel 30

| 1.Zyl. | 2.Zyl. | 3.Zyl. | 4.Zyl. | 5.Zyl. | 6.Zyl. | 7.Zyl. | 8.Zyl. | 9.Zyl. | 10.Zyl | Düse |
|---|---|---|---|---|---|---|---|---|---|---|
| 100°C | 120°C | 130°C | 160°C | 160°C | 160°C | 160°C | 160°C | 160°C | 100°C | 100°C |

| **Beispiel Nr.** | | **Diol** | **Triazinether Masse% in Mischg.** | **Diol Masse % in Mischg.** | **Massen durchsatz [kg/h]** | **Drehzahl [min^{- 1}]** | **Viskosität [Pa s] / 140°C** | **Restdiolgehalt in Mischg. (HPLC) Masse%** |
|---|---|---|---|---|---|---|---|---|
| 17 | | DGT | 54,8 | 45,2 | 5 | 250 | 200 | 18% |
| | | | | | | | | |
| 18 | | Simulsol BPLE | 48,6 | 51,4 | 2,5 | 150 | 1000 | 20 % |
| 19 | | Simulsol BPLE | 75,9 | 24,1 | 5 | 250 | 500 | 12% |
| 20 | | Simulsol BPLE | 75,9 | 24,1 | 2,5 | 150 | 700 | 10% |
| 21 | | Simulsol PTKE | 75,9 | 24,1 | 5 | 250 | 800 | 8% |
| 22 | | Simulsol PTKE | 75,9 | 24,1 | 2,5 | 150 | 1000 | 6% |
| | | | | | | | | |
| 23 | | PEG 1000 | 60,6 | 39,4 | 5 | 250 | 900 | 16% |
| 24 | | PEG 1000 | 60,6 | 39,4 | 2,5 | 150 | 1100 | 14% |
| 25 | | 1,6-Hexandiol | 78,9 | 21,1 | 5 | 250 | 700 | 13% |
| 26 | | 1,6-Hexandiol | 92,9 | 7,1 | 2,5 | 150 | 800 | 3% |
| 27 | | 1,12-Dodecandiol | 70,9 | 29,1 | 2,5 | 150 | 900 | 12% |
| 28 | | 1,12-Dodecandiol | 70,9 | 29,1 | 5 | 250 | 600 | 14% |
| 29 | | PTHF 250 | 67,2 | 32,8 | 5 | 250 | 1200 | 17% |
| | | | | | | | | |
| 30 | | 1,3-Bis(hydroxybutyl ) tetramethyldisilo xan | 70,5 | 29,5 | 2,5 | 150 | 700 | 13% |

Bei der Umesterung und Kondensation im Extruder werden 38 bis 67 Masse% des eingesetzten Diols an den Polytriazinether gebunden.

Der Polytriazinether in Beispiel 17 ergibt bei der Molmassenbestimmung (GPC) Mₙ=1600 und M_{w}=18500. Der Rest -OCH₃-Gehalt (GC) des Polytriazinethers beträgt 14,3 Masse%, die Viscosität bei 140°C 200 Pa.s.

Der Polytriazinether in Beispiel 23 ergibt bei der Molmassenbestimmung (GPC) Mₙ=2900 und M_{w}=145000. Der Rest -OCH₃-Gehalt (GC) des Polytriazinethers beträgt 11,2 Masse%, die Viscosität bei 140°C 900 Pa.s.

### Beispiel 31

Für die Herstellung der Aminoplast-Formmasse wird ein Vorkondensat mit 2,4,6-Tris-methoxymethylamino-1,3,5-triazin als Hauptkomponente (Gehalt an -NH-CH₂-Gruppen 1,56 mol/mol Triazin, Gehalt an -OCH₃-Gruppen 1,95 mol/mol Triazin) und als Bisepoxyverbindung Bisphenol-A-diglycidether (Molmasse 340) eingesetzt.

Die Umsetzung mit der Bisepoxyverbindung und weitere Kondensation zum Polytriazinether wird diskontinuierlich im Messkneter (Fa. Haake Polylabsystem 540p) durchgeführt. Nach Vorheizen auf 170°C werden in die Knetkammer 59 g des Vorkondensats mit 2,4,6-Tris-methoxymethylamino-1,3,5-triazin als Hauptkomponente dosiert und nach Aufschmelzen des Vorkondensats 13 g Bisphenol-A-diglycidether zudosiert (Verhältnis -NH-CH₂-Gruppen Triazinether / Epoxygruppen Bisepoxyverbindung 5 : 1) und bei einer Drehzahl von 30 min⁻¹ geknetet, bis ein Drehmoment von 3 Nm erreicht ist. Das während der Compoundierung freiwerdende Methanol wird durch Vakuum aus der Knetkammer entfernt. Der Polytriazinether wird nach Abkühlen entnommen und in einer Universal-Mühle 100 UPZ/II (Alpine Hosokawa) mit Schlagscheibe und 2 mm Sieb gemahlen.
Die Viscosität der Aminoplast-Formmasse bei 140°C beträgt 420 Pa.s .

### Beispiel 32 Herstellung von Verbundkunststoffen 32.1 Herstellung der Formmasse aus Polytriazinethern

Für die Herstellung des Polytriazinethers wird als verethertes MelaminFormaldehyd-Vorkondensat 2,4,6-Tris-methoxymethylamino-1,3,5-triazin und als Diol der Ethylenglycol-Diether von Bisphenol A (Simulsol BPLE, Seppic S.A., Frankreich) eingesetzt.

Die Umetherung und weitere Kondensation zum Polytriazinether findet bei 200°C im Laborextruder GL 27 D44 mit Vacuumentgasung (Leistritz) bei einem Temperaturprofil von 100°C/130°C/130°C/200°C/200°C/200°C/200°C/200°C/200°C/100°C/100°C und einer durchschnittlichen Verweilzeit von 2 bis 3 min statt. Die Extruderdrehzahl beträgt 150min⁻¹. In die Einzugszone des Extruders werden 2,4,6-Tris-methoxymethylamino-1,3,5-triazin mit 1,38 kg/h und der Ethylenglycol-Diether von Bisphenol A mit 1,13 kg/h mittels Seitenstromdosierung gravimetrisch dosiert. Der aus dem Extruder austretende Strang des Polytriazinethers wird in einem Granulator geschnitten.

Die durch GPC ermittelte Molmasse des Polytriazinethers beträgt 1800. Der Gehalt an nichtumgesetztem Simulsol BPLE nach HPLC-Analyse (Lösung in THF, UV-Detektion mit externem Standard) beträgt 14 Masse%. Der Anteil der -OCH₃ - Gruppen im Polytriazinether (Ermittlung durch GC-Analyse nach Spaltung des Polytriazinethers mit Mineralsäure) beträgt 14,5 Masse%. Die Viscosität bei 140°C liegt bei 800 Pa.s.

### 32.2 Herstellung von Prepregs und 3D-Profil-Laminaten

Die Herstellung der Prepregs erfolgt über eine Bepulverung von Cellulosevliesen (120g/m², Lenzing AG, Österreich) mit dem fein vermahlenen Polytriazinether nach 1.1 (mittlerer Partikeldurchmesser 0,1 mm) mit anschliessender Aufschmelzung des Pulvers im Infrarotstrahlerfeld bei ca. 150°C. Die so hergestellten Prepregs besitzen einen Harzauftrag von ca. 50%.

Die Prepregs werden auf eine Größe von 30x20 cm zugeschnitten. Zur Herstellung eines Formteils mit gebogenen Kanten im Sinne eines U-Profils werden 3 Prepregs plus ein unbehandeltes Cellulosevlies als Oberseite übereinander in eine auf 150°C vorgeheizte Pressform (30x20cm) gelegt und die Presse langsam zugefahren, wobei sich die Prepregs auf Grund des noch nicht ausgehärteten Harzes leicht verformen lassen. Unter einem Druck von 150 bar wird die Temperatur auf 180°C erhöht und 15 min gepresst. Das fertige Werkstück wird entnommen, langsam abgekühlt und der durch austretendes Harz an der Tauchkante des Presswerkzeuges entstandene Grat abgeschliffen.

Aus dem Werkstück herausgefräste Probekörper besitzen im Biegeversuch ein E-Modul von 5,6 GPa, eine Dehnung bei Maximalkraft von 3,2% und eine Schlagzähigkeit von 12,5 kJ/m².

Der Restgehalt an freiem Simulsol BPLE im Werkstück (8 Std. Extraktion gemahlener Proben mit Dioxan, HPLC-Analyse) liegt bei 0,3 Masse%. Der Anteil der -OCH₃ - Gruppen im vernetzten Polytriazinether (Ermittlung durch GC-Analyse nach Spaltung des Poly-triazinethers mit Mineralsäure) beträgt 2,7 Masse%.

### Beispiel 33 Herstellung von Aminoplast-Glasfaserverbunden

### 33.1 Herstellung der Aminoplast-Formmasse

Für die Herstellung des Polytriazinethers wird als verethertes MelaminFormaldehyd-Vorkondensat 2,4,6-Tris-methoxymethylamino-1,3,5-triazin und als Diol Bis(hydroxy-ethyl)terephthalat eingesetzt.

Die Umetherung und weitere Kondensation zum Polytriazinether wird diskontinuierlich im Messkneter (Fa. Haake Polylabsystem 540p) durchgeführt. Nach Vorheizen auf 170°C werden in die Knetkammer 32,5 g Bis(hydroxyethyl)terephthalat und 39,5 g 2,4,6-Tris-methoxymethylamino-1,3,5-triazin dosiert und bei einer Drehzahl von 50 min⁻¹ 10 min geknetet. Das während der Compoundierung freiwerdende Methanol wird durch Vakuum aus der Knetkammer entfernt. Nach 10 min werden 5 Masse% Na-Montmorillonit (Südchemie AG) sowie 5 Masse%, jeweils bezogen auf 2,4,6-Tris-methoxymethylamino-1,3,5-triazin, Polyamid D1466 (Ems-Chemie) zugegeben und weitere 5 min geknetet. Der Polytriazinether wird nach Abkühlen entnommen und in einer Universal-Mühle 100 UPZ/ II (Alpine Hosokawa) mit Schlagscheibe und 2 mm Sieb gemahlen.

Die durch GPC ermittelte Molmasse des Polytriazinethers beträgt 1600. Der Gehalt an nichtumgesetztem Bis(hydroxyethyl)terephthalat nach HPLC-Analyse (Lösung in THF, UV-Detektion mit externem Standard) beträgt 18 Masse%. Der Anteil der -OCH₃ - Gruppen im Polytriazinether (Ermittlung durch GC-Analyse nach Spaltung des Polytriazinethers mit Mineralsäure) beträgt 14,3 Masse%. Die Viscosität bei 140°C liegt bei 200 Pa.s.

### 33.2 Herstellung von mit Endlosglasfasern verstärkten Platten

Zur Herstellung Endlosglasfaser-verstärkter Aminoplast-Platten werden 10 Ansätze des in 2.1 hergestellten Granulats im Laborextruder bei 190°C aufgeschmolzen und über eine Breitschlitzdüse kontinuierlich auf ein mit 0,8 m/min bewegtes Glasfaservlies (105 g/m²) aufgegeben. Durch die Imprägnierung erhöht sich die Flächenmasse des Glasfaservlieses auf 165 g/m². Das imprägnierte Glasfaservlies wird zusammen mit zwei weiteren auf diese Art behandelten Glasfaservliesen kontinuierlich über eine Heizkammer mit 150°C in eine Doppelbandpresse geführt und bei 180°C mit einem Druck von 20 bar zum Verbund verpresst.

Die mechanische Prüfung von Prüfkörpern, die aus dem Verbund ausgefräst wurden, ergab im Biegeversuch ein E-Modul von 7,3 GPa, eine Dehnung bei Maximalkraft von 3,2%, eine Schlagzähigkeit von 9,5 kJ/m² sowie eine Wassersorption von 0,08%.

Der Restgehalt an freiem Bis(hydroxyethyl)terephthalat (8 Std. Extraktion gemahlener Proben mit Dioxan, HPLC-Analyse) beträgt 0,5 Masse%. Der Anteil der -OCH₃ - Gruppen im vernetzten Polytriazinether (Ermittlung durch GC-Analyse nach Spaltung des Polytriazinethers mit Mineralsäure) beträgt 1,7 Masse%.

### Beispiel 34 Herstellung von Rohren

In einen Leistritz-Doppelschnecken-Extruder ZSK 27, L/D=44 mit gleichläufigen Schnecken, Dosiereinrichtung für Fasermaterialien im 4. Zylinder und einer Dekom-pressionszone für Vacuumentgasung, Temperaturprofil 20/120/120/120/120/120/ 120/120/140/160°C, werden in die Einzugszone mit 9 kg die Aminoplast-Formmasse entsprechend Beispiel 1, mit 4,5 kg/h Granulat aus Ethylen-Vinylacetat-Copolymer (Schmelzindex 18g/10min bei 190°C/2,19 kp, Vinylacetatgehalt 17 Masse%) und mit 0,75 kg/h Wollastonit (Tremin 939, Quarzwerke Österreich) dosiert. Nach Mischung und Homogenisierung der Komponenten werden im 4. Zylinder Cellulosefasern in Form von Kardenband zugeben, indem sie direkt von einer Spule abgewickelt und vom Extruder selbst eingezogen werden. Nach Zerkleinerung der Fasern, intensiver Homogenisierung und Kondensation wird die Mischung in ein Siebdorn-Rohrwerkzeug, welches mehrstufig dielektrisch auf einen Temperaturgradienten von 160-195°C beheizt ist, als rundes Hohlprofil ausgetragen.

Wird die Mischung anstelle durch das Siebdorn-Rohrwerkzeug durch ein Profilwerkzeug 10 x 4 mm ausgetragen, so besitzen aus dem Profil hergestellte Normprüfstäbe im Biegeversuch einen E-Modul von 9,2 GPa und eine Schlagzähigkeit von 12 kJ/m².

### Beispiel 35 Herstellung von Spritzgiessformteilen

### 35.1 Herstellung der Formmasse

In einen Leistritz-Doppelschnecken-Extruder ZSK 27, L/D=44, mit gleichläufigen Schnecken, Seitenstromdosiereinrichtung für pulverförmige Medien im 7. Zylinder und einer Dekompressionszone für Vacuumentgasung, Temperaturprofil 20/120/120/120/120/ 120/120/120/120/100°C, werden in die Einzugszone mit 7,5 kg/h der Polytriazinether entsprechend Beispiel 1 , mit 1,5 kg/h Glasfaserschnitzel (Aminosiianschlichte, Faserquerschnitt 17 µm, Faserlänge 3mm) und mit 0,5 kg/h handelsüblicher Nitril-Kautschuk dosiert. Über die Seitenstromdosiereinrichtung im 7. Zylinder wird ein Gemisch aus 20 Masse% Zeolith (Molekularsieb 5A, UOP GmbH) und 80 Masse% Kaolin TEC 2 (Quarzwerke, Österreich) mit 1,0 kg/h zugegeben. Nach intensiver Homogenisierung wird die Mischung ausgetragen und granuliert.

### 35.2 Herstellung von Formteilen mittels Spritzgiess-Technik

Das Granulat nach 4.1 wird mit einer Spritzgiessmaschine zu Verbundplatten verarbeitet. Im Förderteil wird eine Temperatur von 110°C eingestellt. Die Temperatur der Spritzgusskammer liegt bei ca. 150°C, und es wurde ein Spritzdruck von ca. 100 N/cm² eingestellt. Nach einer Verweilzeit von 5 min ist das Werkstück ausgehärtet und kann nach Abkühlung entnommen werden.

Die entstehenden Verbundplatten besitzen kratzfeste Oberflächen und sind wasserdampf- und chemikalienresistent. Ausgefräste Normstäbe haben im Biegeversuch einen E-Modul von 7,8 GPa, eine Schlagzähigkeit von 9,7 kJ/m² und eine Dehnung von 4,1 %.

### Beispiel 36 Herstellung von fasergefüllten Profilstäben

In einen Leistritz-Doppelschnecken-Extruder ZSK 27, L/D=44 mit gleichläufigen Schnecken, Seitenstromdosiereinrichtung für pulverförmige Medien im 4. Zylinder, einer Dekompressionszone für Vacuumentgasung und einem Profilwerkzeug 4 x 10 mm, Temperaturprofil 20/120/120/120/120/120/120/120/140/160°C, werden in die Einzugszone mit 6,7 kg/h der Polytriazinether nach Beispiel 1, mit 0,7 kg/h Styrol-Maleinsäureanhydrid-Copolymer (Styrol:MSA=2:1), mit 1,3 kg/h Cellulosekurzfasern (3 mm), und mit 1,3 kg/h Polyamidkurzfasern (3 mm) dosiert. Über die Seitenstrom-dosiereinrichtung im 4. Zylinder wird mit 1 kg/h ein mit Aminopropyltriethoxysilan modifizierter Na-Montmorillonit zugegeben. Nach intensiver Homogenisierung und Kondensation wird die Mischung in einer Profildüse zu einem Vollprofil geformt und nach Aushärtung durch Temperung konfektioniert.

Aus dem Profil geschnittene Normprüfstäbe ergaben im Biegeversuch einen E-Modul von 10,5 GPa, eine Dehnung von 3,7% und eine Schlagzähigkeit von 13,1 kJ/m².

### Beispiel 37 Herstellen einer Verbundplatte mittels Niederdruckverfahren

### 37.1 Herstellung der Aminoplast-Formmasse

Für die Herstellung des Polytriazinethers wird als verethertes Vorkondensat eine Mischung aus 20 Masse% 2,4-Bis-methoxymethylamino-6-methyl-1,3,5-triazin und 80 Masse% 2,4,6-Tris-methoxymethylamino-1,3,5-triazin und als Diol ein Oligool auf Basis Pen-taerythrit (Simulsol PTKE, Seppic S.A., Frankreich) eingesetzt.

In einem Laborextruder GL 27 D44 (Leistritz) mit Vacuumentgasung, Temperaturprofil 130°C/150°C/190°C/230°C/230°C1230°C/230°C/230°C/230°C/100°C/100°C werden in den Einzugstrichter mit 1,38 kg/h die Mischung des veretherten Vorkondensats und mittels Seitenstromdosierung in die Einzugszone mit 1,12 kg/h das Oligool auf Basis Pentaerythrit gravimetrisch dosiert. In die Zone 8 des Extruders wird über eine Seitenstromdosierung mit 0,1 kg/h ein mit Bernsteinsäure oberflächlich benetzter Natriummontmorillonit (Südchemie, Moosburg Deutschland) zudosiert. Die Extrusion findet bei einem bei einer durchschnittlichen Verweilzeit von 3 bis 4 min statt. Die Extruderdrehzahl beträgt 150 min⁻¹. Der aus dem Extruder austretende Strang des gefüllten Polytriazinethers wird in einem Granulator geschnitten. Die Aminoplast-Formmasse zeichnet sich durch eine niedrige Viskosität bei 150°C von ca. 100-200 Pas aus.

### 37.2 Herstellen der Verbundplatte

In einem Vorratsbehälter wird die Aminoplast-Formmasse nach 6.1 bei 150°C aufgeschmolzen. In das Werkzeug wird ein Kohlenstoff-Filamentgewebe mit 245 g/m² eingelegt. Das Werkzeug wird auf 150°C temperiert, geschlossen und ein Vakuum von 130 mbar angelegt. Nach Öffnen des Injektionsstutzens fliesst das Harz in das Werkzeug, wobei nach vollständiger Tränkung des Vlieses nach 4 min überschüssiges Harz abgesaugt wird. Nach einer Härtungszeit von 6 min kann die ausgehärtete Platte entnommen werden.

Aus der Platte herausgefräste Probestäbe haben eine Zugfestigkeit von 230 MPa und eine Schlagzähigkeit von 35 kJ/cm².

### Beispiel 38 Herstellung von Endlosfasern

Die Aminoplast-Formmasse entsprechend Beispiel 1 wird in einem Laborextruder aufgeschmolzen und auf 120°C erwärmt.

Die Schmelze wird bei konstanter Temperatur zur Einzugsöffnung einer Spinnpumpe gefördert. Mit der Spinnpumpe wird der für die Durchströmung eines Schmelzefilters und einer Spinndüse mit 6 Löchern erforderliche Vordruck aufgebaut. Die Schmelze des Polytriazinethers wird bei einer Abzugsgeschwindigkeit von 1300 m/min in einem von erwärmten Stickstoff durchströmten Abzugsschacht auf einen Fadendurchmesser von 8 - 10 µm ausgezogen und abgekühlt.

Nach Erstarren des Harzes werden die Fasern in einem zweiten Abschnitt des Abzugschachtes in saurer Atmosphäre (trockener HCl) vollständig ausgehärtet und auf übliche Weise konfektioniert. Die ausgehärteten Fasern besitzen eine Dehnung von 4,2 %.

### Beispiel 39 Herstellung von Aminoplast-Glasfaserverbunden

### 39.1 Herstellung der Aminoplast-Formmasse

Für die Herstellung des Polytriazinethers wird als verethertes Vorkondensat eine Mischung aus 75 Masse% 2,4,6-Tris-Ethoxymethylamino-1,3,5-triazin und 25 Masse% eines Triazinmethylethers, der aus einem Vorkondensat aus Butyroguanamin/Melamin 1 :5 als Aminotriazinkomponente und Butyraldehyd/Formaldehyd 1:8 als Aldehydkomponente bei einem Aldehyd/Aminotriazin - Verhältnis 3 : 1 hergestellt wurde, eingesetzt. Die Diolkomponente bildet eine Mischung aus 50 Masse% Butandiol und 50 Masse% eines Polypropylenglycols mit einer Molmasse von 500.

Die Umetherung und weitere Kondensation zum Polytriazinether wird diskontinuierlich im Messkneter (Fa. Haake Polylabsystem 540p) durchgeführt. Nach Vorheizen auf 175°C werden in die Knetkammer 45 g der Triazinethermischung und 35 g der Mischung der Diolkomponenten dosiert und bei einer Drehzahl von 50 min⁻¹ 12 min geknetet. Die während der Compoundierung freiwerdende Alkoholmischung wird durch Vakuum aus der Knetkammer entfernt. Nach 10 min werden 5 Masse% Na-Montmorillonit (Südchemie AG) sowie 5 Masse%, jeweils bezogen auf die Aminotriazinmischung, Polyamid D1466 (Ems-Chemie) zugegeben und weitere 5 min geknetet. Der Polytriazinether wird nach Abkühlen entnommen und in einer Universal-Mühle 100 UPZ/II (Alpine Hosokawa) mit Schlagscheibe und 2 mm Sieb gemahlen.

### 39.2 Herstellung von mit Endlosglasfasern verstärkten Platten

Zur Herstellung Endlosglasfaser-verstärkter Aminoplast-Platten werden 10 Ansätze des in 2.1 hergestellten Granulat im Laborextruder bei 195°C aufgeschmolzen und über eine Breitschlitzdüse kontinuierlich auf ein mit 0,8 m/min bewegtes Glasfaservlies (105 g/m²) aufgegeben. Durch die Imprägnierung erhöht sich die Flächenmasse des Glasfaservlieses auf 155 g/m². Das imprägnierte Glasfaservlies wird zusammen mit zwei weiteren auf diese Art behandelten Glasfaservliesen kontinuierlich über eine Heizkammer mit 155°C in - eine Doppelbandpresse geführt und bei 180°C mit einem Druck von 20 bar zum Verbund verpresst.

Die mechanische Prüfung von Prüfkörpern, die aus dem Verbund ausgefräst wurden, ergab im Biegeversuch ein E-Modul von 6,3 GPa, eine Dehnung bei Maximalkraft von 4,2%, eine Schlagzähigkeit von 15 kJ/m² sowie eine Wassersorption von 0,14%.

## Patentansprüche

1. Aminoplast-Formmassen für Erzeugnisse verbesserter Flexibilität, **dadurch gekennzeichnet, dass** die Aminoplast-Formmassen Mischungen aus schmelzbaren 20- bis 1000-Triazinzyklen-Polytriazinethern und optional aus bis zu 75 Masse% Füllstoffen und / oder Absorbermaterialien, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 5 Masse%, jeweils bezogen auf die Polytriazinether, Stabilisatoren, UV-Absorbern, Härtern und/oder Hilfsstoffen bestehen,
wobei in den Polytriazinethern die Triazinsegmente 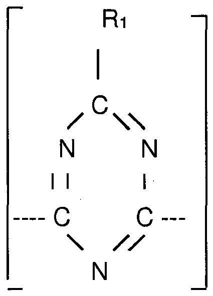 R₁ = -NH₂, -NH-CHR₂-O-R_{3,} -NH-CHR₂-O-Ra-OH, -OH, Phthalimido-, Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2}-_{C12}-Alkylen-O-CH₂-CH(CH₃)-,
-CH(CH₃)-CH₂-O-_{C6-C12}-Arylen-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-Arylen-CO-O-(CH₂)₂₋₈-]ₙ-,
-[(CH₂)₂₋₈-O-CO-_{C2-C2}-Alkylen-CO-O-(CH₂)₂₋₈-]ₙ-,
wobei n = 1 bis 200;
- Siloxangruppen enthaltende Sequenzen des Typs 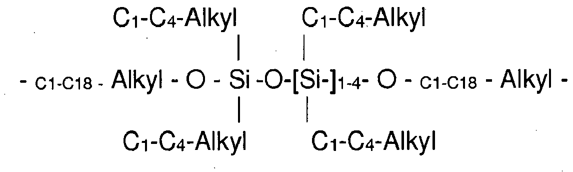
- Siloxangruppen enthaltende Polyestersequenzen des Typs -[(X)ᵣ-O-CO-(Y)ₛ-CO-O-(X)ᵣ]-,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 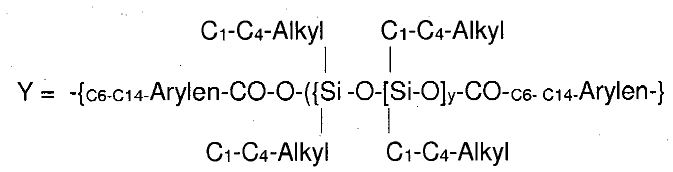 oder 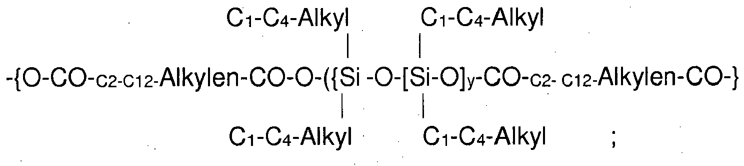 r = 1 bis 70; s = 1 bis 70 und y = 3 bis 50 bedeuten;
- Siloxangruppen enthaltende Polyethersequenzen des Typs 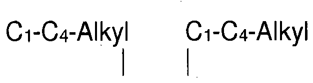 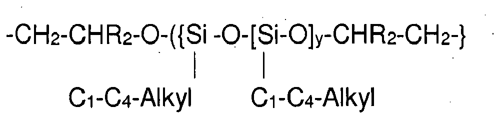 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -_{C2-C8-}Alkylen-O-_{C6-C18}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1000-Triazinzyklen-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt und
der Anteil der Verknüpfungen der Triazinsegmente durch Brückenglieder -NH-CHR₂-O-R₄-O-CHR₂-NH- 5 bis 95 Mol% beträgt.

2. Aminoplast-Formmassen nach Anspruch 1, **dadurch gekennzeichnet, dass** die Polytriazinether 30- bis 300-Triazinzyklen-Polytriazinether sind.

3. Aminoplast-Formmassen nach Anspruch 1 oder 2, **dadurch gekennzeichnet, dass** die Polytriazinether in den Mischungen Polytriazinether mit R₂ = H sind.

4. Verfahren zur Herstellung von Aminoplast-Formmassen, **dadurch gekennzeichnet, dass** die Aminoplast-Formmassen, die aus Mischungen aus schmelzbaren 20- bis 1000-Triazinzyklen-Polytriazinethern und optional aus bis zu 75 Masse% Füllstoffen, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 2 Masse%, jeweils bezogen auf die Polytriazinether, Stabilisatoren, UV-Absorbern und/oder Hilfsstoffen bestehen,
wobei in den Polytriazinethern die Triazinsegmente 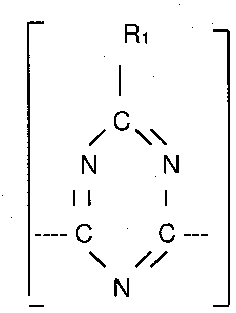 R₁ = -NH₂, -NH-CHR₂-O-R₃, -NH-CHR₂-O-R₄-OH, -OH, Phthalimido-, Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-,
-CH(CH₃)-CH₂-O-_{C6-C12}-Arylen-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-Arylen-CO-O-(CH₂)₂₋₈-]ₙ -,
-[(CH₂)₂₋₈-O-CO-_{C2-C12}-Alkylen-CO-O-(CH₂)₂₋₈-]ₙ-,
wobei n = 1 bis 200;
- Siloxangruppen enthaltende Sequenzen des Typs 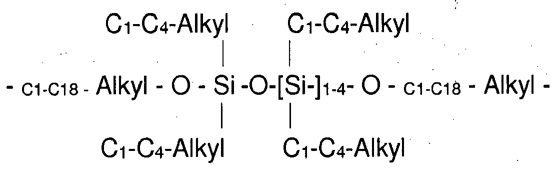
- Siloxangruppen enthaltende Polyestersequenzen des Typs -[(X)ᵣ-O-CO-(Y)ₛ-CO-O-(X)ᵣ]-,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 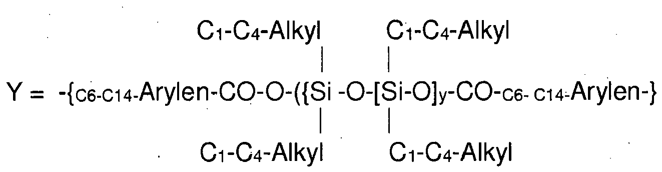 oder 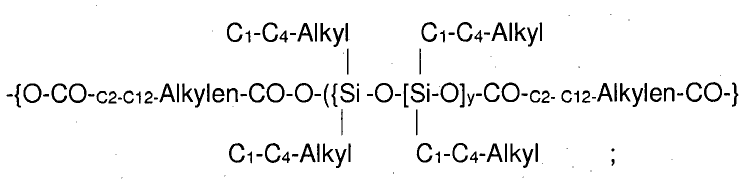 r = 1 bis 70; s = 1 bis 70 und y = 3 bis 50 bedeuten;
- Siloxangruppen enthaltende Polyethersequenzen des Typs 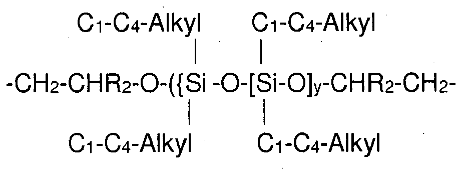 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ
-_{C2-C8}-Alkylen-O-_{C6-C18}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1000-Triazinzyklen-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt und
der Anteil der Verknüpfungen der Triazinsegmente durch Brückenglieder -NH-CHR₂-O-R₄-O-CHR₂-NH- 5 bis 95 Mol% beträgt,
nach einem Mehrstufenverfahren hergestellt werden, bei dem
- in der ersten Verfahrensstufe Vorkondensate aus C₁-C₈-Aldehyden und Triazinderivaten der Struktur 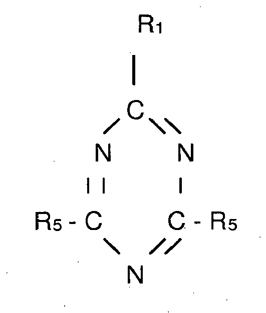 R₁ = -NH₂, -NH-CHR₂-OH, -OH, Phthalimido-. Succinimido-,
R₂ = H, C₁-C₇ - Alkyl;
R₅ = -NH-CHR₂-OH
durch Umsetzung mit C₁-C₈-Alkoholen in neutralem bis schwach saurem Medium bei 25 bis 150°C und 0,1 bis 5 bar verethert, und die substituierten Triazinderivate bei Verweilzeiten von 5 bis 15 min bei 150 bis 250°C und 0,1 bis 15 bar konditioniert werden, wobei gebildete Salze unter Einhaltung eines pH-Werts von 7 bis 10 abgetrennt werden können, indem die Schmelze der Aminotriazinether bei 70 bis 150°C in 70 bis 150 Masse%, bezogen auf die Aminotriazinether, C₃-bis C₆-Alkoholen aufgelöst, unlösliche Anteile nach Abkühlung auf 15 bis 40°C abgetrennt, und die zugesetzten C₃- bis C₆-Alkohole bei 70 bis 140°C bis zu einem Restgehalt von 5 bis 20 Masse% verdampft werden,
- in der zweiten Verfahrensstufe die erhaltenen C₁-C₈-alkyl-oxa-C₁-C₈-alkylen-amino- substituierten Triazinderivate durch partielle Umetherung mit Diolen vom Typ HO-R₄-OH und/oder partielle Umsetzung mit Bisepoxiden vom Typ 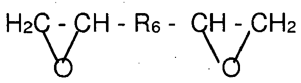 wobei R₄
C₂-C₁₈-Alkylen, -[CH₂-CH₂-O-CH₂-CH₂]ₙ-,
-[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-_{C6-C14}-Arylen-CO-O-(CH₂)₂₋₈-]ₙ-,
-[(CH₂)₂₋₈-O-CO-_{C2-C12}-Alkylen-CO-O-(CH₂)₂₋₈-]ₙ-,
wobei n = 1 bis 200;
- Siloxangruppen enthaltende Sequenzen des Typs 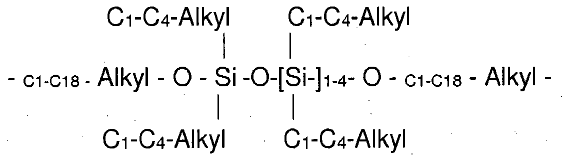
- Siloxangruppen enthaltende Polyestersequenzen des Typs -[(X)ᵣ-O-CO-(Y)ₛ-CO-O-(X)ᵣ]-,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 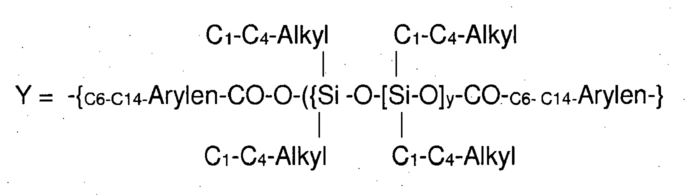 oder 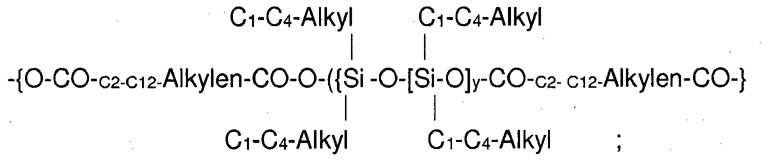 r = 1 bis 70; s = 1 bis 70 und y = 3 bis 50 bedeuten;
- Siloxangruppen enthaltende Polyethersequenzen des Typs 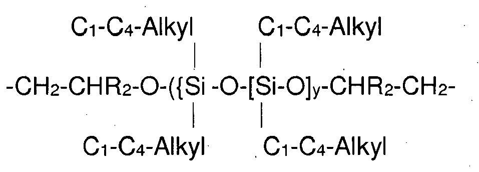 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ
-_{C2-C8-}Alkylen-O-_{C6-C18}-Arylen-O-_{C2-C8}-Alkylen- Sequenzen;
und R₆ = -CH₂-O-_{C2-C12}-Alkylen-O-CH₂-, -CH₂-O-_{C6-C14}-Arylen-O-CH₂-,
bedeuten,
und wobei bei der partielle Umsetzung mit Diolen und/oder Bisepoxiden Mischungen eingesetzt werden können, die bis 70 Masse% C₅-C₁₈-Alkohole enthalten,
bei Verweilzeiten von 1 bis 60 min. unter Abdestillation von C₁-C₈-Alkoholen bei 60 bis 250°C/0,05 bis 1 bar in die entsprechenden substituierten Triazinderivate überführt werden, wobei durch das Molverhältnis C₁-C₈-alkyl-Oxa-C₁-C₈-alkylen-amino-Gruppen / eingesetztes Diol und/oder eingesetztes Bisepoxid von 20 : 1 bis 1,1 : 1 eine partielle Umetherung der C₁-C₈-Alkylethergruppen der C₁-C₈-alkyl-oxa-C₁-C₈-alkylen-amino-triazine erzielt wird,
- in der dritten Verfahrensstufe zur weiteren Kondensation der Aminotriazinether zu Polytriazinethern die erhaltene Schmelze, die veretherte Aminotriazinderivate sowie Anteile an Polytriazinethern und an nichtumgesetztem bzw. nicht abgetrenntem Diol enthält und weiterhin C₅-C₁₈-Alkohole enthalten kann, in einen Kneter dosiert, bei einer Verweilzeit von 2 bis 12 min bei 140 bis 220°C unter Entgasung umgesetzt, und die Polytriazinether ausgetragen und granuliert werden, wobei die Schmelze vor Dosierung in den Kneter einer Temperierung von 20 bis 120 min bei 70 bis 140°C unterzogen werden kann, der Schmelze bis zu 75 Masse% Füllstoffe, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse%, jeweils bezogen auf die Polytriazinether, Stabilisatoren, UV-Absorber und/oder Hilfsstoffe zugesetzt werden können, und die Schmelze vor dem Austrag einer Schmelzefiltration unterzogen werden kann.

5. Verfahren zur Herstellung von Aminoplast-Formmassen nach Anspruch 4, **dadurch gekennzeichnet, dass** als ionische Katalysatoren und/oder zur Neutralisation des Reaktionsansatzes anorganische oder organische Säuren, Basen, Ionenaustauschharze und/oder saure Zeolithe eingesetzt werden.

6. Verfahren zur Herstellung von Aminoplast-Formmassen nach Anspruch 4, **dadurch gekennzeichnet, dass** in der ersten Verfahrensstufe die Veretherung der Vorkondensate mit C₁-C₈-Alkoholen in Gegenwart von 10 bis 300 Masse%, bezogen auf die Trockensubstanz der eingesetzten Vorkondensate, Molekularsieben durchgeführt wird.

7. Verfahren zur Herstellung von Aminoplast-Formmassen nach Anspruch 4, **dadurch gekennzeichnet, dass** in der zweiten Verfahrensstufe die partielle Umetherung der C₁-C₈-alkyl-oxa-C₁-C₈-alkylen-amino- substituierten Triazinderivate katalytisch in Gegenwart starker Säuren bei Temperaturen im Bereich von 100-175°C durchgeführt wird.

8. Verfahren zur Herstellung von Aminoplast-Formmassen nach Anspruch 4, **dadurch gekennzeichnet, dass** in der zweiten Verfahrensstufe die partielle Umetherung der C₁-C₈-alkyl-oxa-C₁-C₈-alkylen-amino- substituierten Triazinderivate thermisch bei Temperaturen im Bereich von 150-250°C durchgeführt wird.

9. Verfahren zur Herstellung von Aminoplast-Formmassen nach Anspruch 4, **dadurch gekennzeichnet, dass** in der dritten Verfahrensstufe zur weiteren Kondensation der Aminotriazinether zu Polytriazinethern Mischungen aus Produkten der 2. Verfahrensstufe unterschiedlicher Ausgangsprodukte oder Mischungen aus Produkten der 2. Verfahrensstufe mit nicht umgeetherten C₁-C₈-alkyl-oxa-C₁-C₈-alkylen-amino- substituierten Triazinderivaten eingesetzt werden.

10. Verfahren zur Herstellung von Aminoplast-Formmassen nach Anspruch 4, **dadurch gekennzeichnet, dass** alle Verfahrensstufen in einem Reaktionsapparat nacheinander durchgeführt werden.

11. Verwendung von Aminoplast-Formmassen nach einem oder mehreren der Ansprüche 1 bis 3 zur Schmelzeverarbeitung sowie zur Verarbeitung aus Lösung oder Dispersion als Adhesiv, Imprägnierharz, Lackharz oder Laminierharz oder zur Herstellung von Schäumen, Mikrokapseln oder Fasern.

12. Aminoplasterzeugnisse verbesserter Flexibilität, **dadurch gekennzeichnet, dass** die Aminoplasterzeugnisse Erzeugnisse auf Basis von Aminoplast-Formmassen, gemäß mindestens einem der Ansprüche 1 bis 3 sind.

13. Aminoplasterzeugnisse nach Anspruch 12, **dadurch gekennzeichnet, dass** die Aminoplasterzeugnisse durch Schmelzeverarbeitung hergestellte Halbzeuge oder Formstoffe oder aus Fasern nach der Wickel-, Flecht- oder Pultrusionstechnik und nachfolgender Harzimprägnierung hergestellte Bauteile, sind.

14. Aminoplasterzeugnisse nach Anspruch 12, **dadurch gekennzeichnet, dass** die in den Aminoplasterzeugnissen enthaltenen Füllstoffe bzw. Adsorbermaterialien Al₂O₃, Al(OH)₃, SiO₂, Bariumsulfat, Calciumcarbonat, Glaskugeln, Kieselerde, Glimmer, Quarzmehl, Schiefermehl, Mikrohohlkugeln, Russ, Talkum, Schichtsilikate, Molekularsiebe, Gesteinsmehl, Holzmehl, Cellulose, Cellulosederivate, Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite, sowie Schichtsilikate vom Typ Montmorillonit, Bentonit, Hectorit, Molekularsiebe des Typen A, X, Y, 5A, Adsorber auf Siliciumdioxidbasis, Mikrohohlkugeln, Cellulose und/oder Cellulosederivate sind.

15. Aminoplasterzeugnisse nach Anspruch 12, **dadurch gekennzeichnet, dass** die in den Aminoplasterzeugnissen enthaltenen Verstärkungsfasern anorganische Fasern, Naturfasern, und/oder Kunststofffasern sind.

16. Verfahren zur Herstellung von Aminoplasterzeugnissen verbesserter Flexibilität, **dadurch gekennzeichnet, dass** Aminoplast-Formmassen, die aus Mischungen aus schmelzbaren 20- bis 1000-Triazinzyklen-Polytriazinethern und optional aus bis zu 75 Masse% Füllstoffen, bis zu 50 Masse% weiteren reaktiven Polymeren vom Typ Ethylen-Copolymere, Maleinsäureanhydrid-Copolymere, modifizierte Maleinsäureanhydrid-Copolymere, Poly(meth)-acrylate, Polyamide, Polyester und/oder Polyurethane, bis zu 20 Masse% Diolen vom Typ HO-R₄-OH sowie bis zu 5 Masse%, jeweils bezogen auf die Polytriazinether, Stabilisatoren, UV-Absorbern, Härtern und/oder Hilfsstoffen bestehen,
wobei in den Polytriazinethern die Triazinsegmente 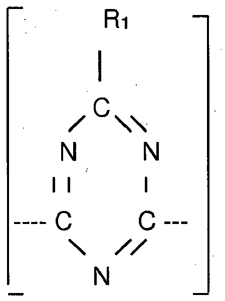 R₁ = -NH₂, -NH-CHR₂-O-R₃, -NH-CHR₂-O-R₄-OH, -OH, Phthalimido-. Succinimido-, -NH-CHR₂-O-R₄-O-CHR₂-NH-, -NH-CHR₂-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-,
-CH(CH₃)-CH₂-O-_{C6-C12}-Arylen-O-CH₂-CH(CH₃)-,
-[CH₂-CH₂-O-CH₂-CH₂]ₙ-, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-Arylen-CO-O-(CH₂)₂₋₈-]ₙ-,
-((CH₂)₂₋₈-O-CO-_{C2-C12}-Alkylen-CO-O-(CH₂)₂₋₈-]ₙ-,
wobei n = 1 bis 200;
- Siloxangruppen enthaltende Sequenzen des Typs 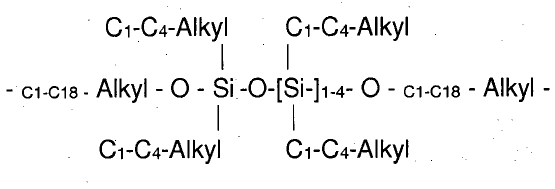
- Siloxangruppen enthaltende Polyestersequenzen des Typs -[(X)ᵣ-O-CO-(Y)ₛ-CO-O-(X)r]- ,
bei denen
X = {(CH₂)₂₋₈-O-CO-_{C6-C14}-Arylen-CO-O-(CH₂)₂₋₈-} oder
-{(CH₂)₂₋₈-O-CO-_{C2-C12}-Alkylen-CO-O-(CH₂)₂₋₈-}; 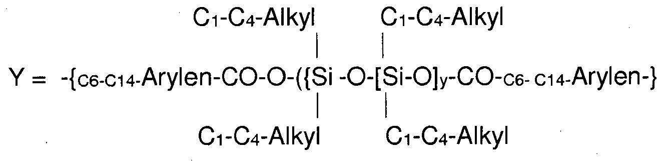 oder 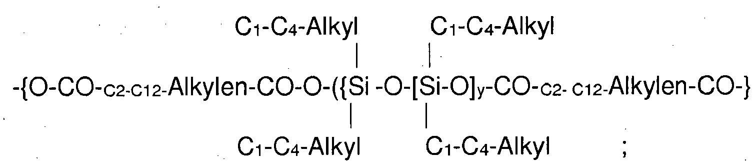 r = 1 bis 70; s = 1 bis 70 und y = 3 bis 50 bedeuten;
- Siloxangruppen enthaltende Polyethersequenzen des Typs 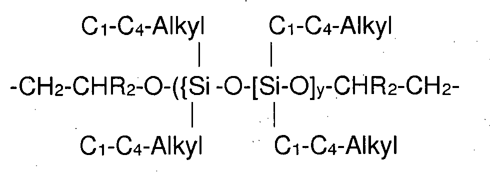 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ
-_{C2-C8}-Alkylen-O-_{C6-C18}-Arylen-O-_{C2-C8}-Alkylen- Sequenzen;
durch Brückenglieder -NH-CHR₂-O-R₄-O-CHR₂-NH- und -NH-CHR₂-NH- sowie gegebenenfalls -NH-CHR₂-O-CHR₂-NH- zu 20- bis 1000-Triazinzyklen-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt und
der Anteil der Verknüpfungen der Triazinsegmente durch Brückenglieder -NH-CHR₂-O-R₄-O-CHR₂-NH- 5 bis 95 Mol% beträgt,
in kontinuierlichen Knetern bei Massetemperaturen von 105 bis 260°C und Verweilzeiten von 2 bis 12 min aufgeschmolzen werden und unter Aushärtung der Polytriazinether nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und konfektioniert werden,
oder
B) über eine Profildüse ausgetragen und als Profil oder Plattenmaterial abgezogen, geschnitten und konfektioniert werden,
oder
C) über eine Ringdüse ausgetragen, unter Einpressen von Luft als Rohr abgezogen, geschnitten und konfektioniert werden,
oder
D) nach Eindosierung von Treibmitteln über eine Breitschlitzdüse ausgetragen und als geschäumtes Plattenmaterial abgezogen werden,
oder
E) über die Breitschlitzdüse einer Rohrbeschichtungsanlage ausgetragen und schmelz-flüssig auf das rotierende Rohr aufgesiegelt werden,
oder
F) in Spritzgussmaschinen, zu Spritzgussformteilen verarbeitet werden,
oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden,
oder
K) zur Schmelzeimprägnierung von nach dem Wickelverfahren, Flechtverfahren oder Pultrusionsverfahren hergestellter Bauteilrohlinge eingesetzt werden,
und die Erzeugnisse gegebenenfalls zur vollständigen Aushärtung einer thermischen Nachbehandlung bei Temperaturen von 180 bis 280°C und Verweilzeiten von 20 bis 120 min unterzogen werden.

17. Verfahren zur Herstellung von Aminoplasterzeugnissen nach Anspruch 16, **dadurch gekennzeichnet, dass** die in den eingesetzten Aminoplast-Formmassen enthaltenen Polytriazinether 30- bis 300-Triazinzyklen-Polytriazinether sind.

18. Verfahren zur Herstellung von Aminoplasterzeugnissen verbesserter Flexibilität nach Anspruch 16, **dadurch gekennzeichnet, dass** die in den eingesetzten Aminoplast-Formmassen enthaltenen Polytriazinether Polytriazinether mit R₂ = H sind.

19. Verfahren zur Herstellung von Aminoplasterzeugnissen verbesserter Flexibilität nach Anspruch 16, **dadurch gekennzeichnet, dass** die in den eingesetzten Aminoplast-Formmassen enthaltenen Härter schwache Säuren vom Typ
- blockierte Sulfonsäuren,
- aliphatische C₄-C₁₈-Carbonsäuren,
- Alkalisalze oder Ammoniumsalze der Phosphorsäure,
- C₁-C₁₂-Alkylester oder C₂-C₈-Hydroxyalkylester von C₆-C₁₄-aromatischen Carbonsäuren oder anorganischen Säuren,
- Salze von Melamin oder Guanaminen mit C₁-₁₈-aliphatischen Carbonsäuren,
- Anhydride, Halbester oder Halbamide von C₄-C₂₀-Dicarbonsäuren,
- Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten,
und/oder
- Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure,
sind.

20. Verfahren zur Herstellung von Aminoplasterzeugnissen nach Anspruch 16, **dadurch gekennzeichnet, dass** die Herstellung von Faserfibriden aus den Aminoplastformmassen durch
- Eintrag der Schmelze über Eintragsdüsen bei Schmelzetemperaturen von 160 bis 220°C in eine Scherfeldkammer, die auf 150 bis 210°C erhitzte hochsiedende organische Dispergiermittel enthält, wobei in die Scherfeldkammer saure Gase eingeleitet werden, und wobei der aus der Eintragsdüse austretende Schmelzestrang durch das vom Rotor verwirbelte Öl unter Faserbildung verstreckt und zerteilt wird,
- Überführung der Dispersion der gebildeten Faserfibride in organischen Dispergiermitteln in einen Siebabscheider unter gleichzeitiger Extraktion der hochsiedenden Dispergiermittel mit niedrigsiedenden Kohlenwasserstoffen,
- Austrag des Faserfibrid-Kurzfaservlieses und gegebenenfalls thermische Nachvernetzung des Kurzfaservlieses bei Temperaturen von 180 bis 210°C und Verweilzeiten von 40 bis 120 min,
erfolgt.

21. Verwendung von Aminoplasterzeugnissen verbesserter Flexibilität nach einem oder mehreren der Ansprüche 12 bis 15 für Anwendungen mit hohen Anforderungen an Flammfestigkeit und Wärmebeständigkeit im Bauwesen, Maschinenbau und Fahrzeugindustrie zur Herstellung von Elektroisolationspapieren, Feuerschutzkleidung, Kleidung für hohe Arbeitstemperaturen, Brandschutzdecken, Filtervliesen, Filzen für Papiermaschinen sowie Fahrzeug- bzw. Maschinen-Isolationsabdeckungen, sowie in Form komplexer Bauteile, Behälter oder Profile nach dem Wickel-, Flecht- oder Pultrusionsverfahren.

## Claims

1. Amino resin moulding materials for products with improved flexibility, **characterised in that** the amino resin moulding materials consist of mixtures of meltable 20 to 1000 triazine cycles polytriazine ethers and optionally of up to 75 mass% fillers and / or absorber materials, up to 50 mass% further reactive polymers of the type ethylene copolymers, maleic acid anhydride copolymers, modified maleic acid anhydride copolymers, poly(meth)acrylates, polyamides, polyesters and/or polyurethanes, up to 20 mass% diols of the type HO-R₄-OH and up to 5 mass%, respectively in relation to the polytriazine ethers, stabilisers, UV absorbers, hardening agents and/or auxiliary substances, wherein in the polytriazine ethers the triazine segments 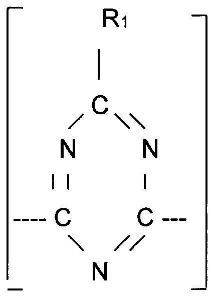 R₁ = -NH₂, -NH-CHR₂-O-R₃ ,-NH-CHR₂-O-R₄-OH, -OH, phthalimido-, succinimido-, -NH-CHR₂-O-R₄-O-CHR₂-NH-, -NH-CHR₂-NH-, -NH-CHR₂-O-CHR₂-NH-,
R₂ = H, C₁-C₇ - alkyl;
R₃ = C₁-C₁₈ - alkyl, H;
R₄ = C₂-C₁₈-alkylene, -CH(CH₃)-CH₂-O-_{C2-C12}-alkylene-O-CH₂-CH(CH₃)-,
-CH(CH₃)-CH₂-O-_{C6-C12}-arylene-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-arylen-CO-O-(CH₂)₂₋₈-]ₙ -,
-[(CH₂)₂₋₈-O-CO-_{C2-C12}-alkylen-CO-O-(CH₂)₂₋₈-]n -,
wherein n = 1 bis 200;
- siloxane groups containing sequences of the type 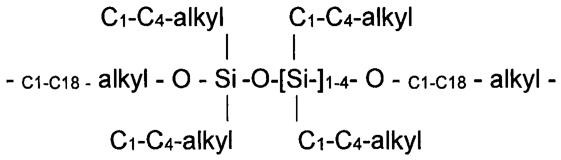
- siloxane groups containing polyester sequences of the type -[(X)r-O-CO-(Y)ₛ-CO-O-(X)ᵣ]- ,
wherein
X = {(CH₂)₂₋₈-O-CO-_{C6-C14}-arylene-CO-O-(CH₂)₂₋₈-} or
-{(CH₂)₂₋₈-O-CO-_{C2-C12}-alkylene-CO-O-(CH₂)₂₋₈-}; 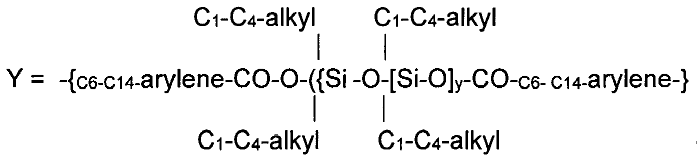 or 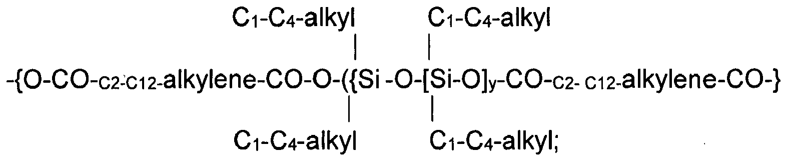 r = 1 to 70; s = 1 to 70 and y = 3 to 50;
- siloxane groups containing polyether sequences of the type 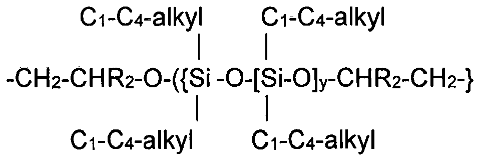 wherein R₂ = H; C₁-C₄-alkyl and y = 3 to 50;
- sequences based on alkylene oxide adducts of melamine of the type 2-amino-4,6-di-_{C2-C4}-alkylene-amino-1,3,5-triazine sequences:
- phenolic ether sequences based on bivalent phenols and C₂-C₈ diols of the type
-_{C2-C8-}alkylene-O-_{C6-C18}-arylene-O-_{C2-C8}-alkylene sequences;
are combined through bridging members -NH-CHR₂-O-R₄-O-CHR₂-N and -NH-CHR₂-NH- and optionally -NH-CHR₂-O-CHR₂-NH- to 20 to 1000 triazine cycles polytriazine ethers with linear and/or branched structure,
wherein in the polytriazine ethers the molar ratio of the substituents is R₃ : R₄ = 20 : 1 to 1 : 20, and
the proportion of the combinations of the triazine segments through bridging members -NH-CHR₃-O-R₄-O-CHR₃-NH- is 5 to 95 mol%.

2. Amino resin moulding materials according to Claim 1, **characterised in that** the polytriazine ethers are 30 to 300 triazine cycles polytriazine ethers.

3. Amino resin moulding materials according to Claim 1 or 2, **characterised in that** the polytriazine ethers in the mixtures are polytriazine ethers with R₂ = H.

4. Process for the production of amino resin moulding materials, **characterised in that** the amino resin moulding materials which consist of mixtures of meltable 20 to 1000 triazine cycles polytriazine ethers and optionally of up to 75 mass% fillers and / or absorber materials, up to 50 mass% further reactive polymers of the type ethylene copolymers, maleic acid anhydride copolymers, modified maleic acid anhydride copolymers, poly(meth)acrylates, polyamides, polyesters and/or polyurethanes, up to 20 mass% diols of the type HO-R₄-OH and up to 2 mass%, respectively in relation to the polytriazine ethers, stabilisers, UV absorbers, hardening agents and/or auxiliary substances,
wherein in the polytriazine ethers the triazine segments 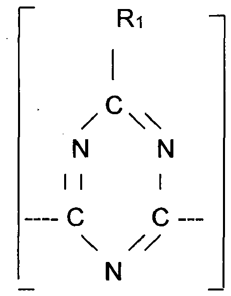 R₁ = -NH₂, -NH-CHR₂-O-R₃ ,-NH-CHR₂-O-R₄-OH, -OH, phthalimido-. succinimido-, -NH-CHR₂-O-R₄-O-CHR₂-NH-, -NH-CHR₂-NH-, -NH-CHR₂-O-CHR₂-NH-,
R₂ = H, C₁-C₇ - alkyl;
R₃ = C₁-C₁₈ - alkyl, H;
R₄ = C₂-C₁₈-alkylene, -CH(CH₃)-CH₂-O-_{C2-C12}-alkylene-O-CH₂-CH(CH₃)-,
-CH(CH₃)-CH₂-O-_{C6-C12}-arylene-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14}-arylene-CO-O-(CH₂)₂₋₈-]ₙ-,
-[(CH₂)₂₋₈-O-CO-_{C2-C12}-alkylene-CO-O-(CH₂)₂₋₈-]ₙ-,
wherein n = 1 to 200;
- siloxane groups containing sequences of the type 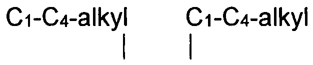 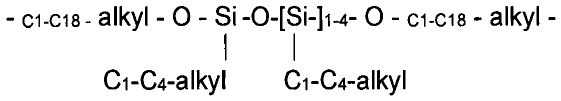
- siloxane groups containing polyester sequences of the type -[(X)ᵣ-O-CO-(Y)ₛ-CO-O-(X)ᵣ]- ,
wherein
X = {(CH₂)₂₋₈-O-CO-_{C6-C14-}arylene-CO-O-(CH₂)₂₋₈-} or
-{(CH₂)₂₋₈-O-CO-_{C2-C12-}alkylene-CO-O-(CH₂)₂₋₈-}; 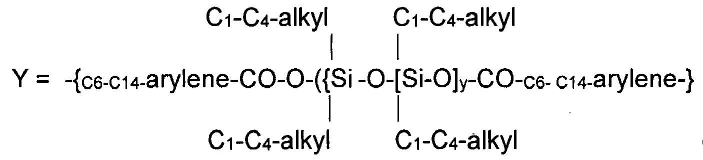 or 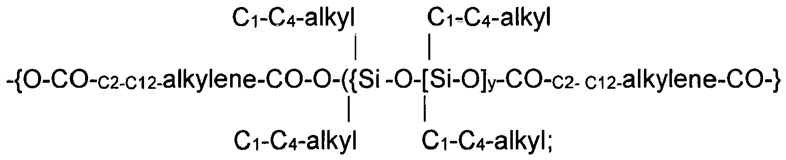 r = 1 to 70; s = 1 to 70 and y = 3 to 50;
- siloxane groups containing polyether sequences of the type 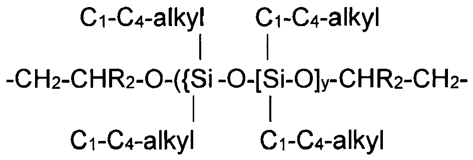 wherein R₂ = H; C₁-C₄-alkyl and y = 3 to 50;
- sequences based on alkylene oxide adducts of melamine of the type 2-amino-4,6-di-_{C2-C4-}alkylene-amino-1,3,5-triazine sequences:
- phenolic ether sequences based on bivalent phenols and C₂-C₈ diols of the type
-_{C2-C8}-alkylene-O-_{C6-C18}-arylene-O-_{C2-C8}-alkylene sequences;
are combined through bridging members -NH-CHR₂-O-R₄-O-CHR₂-NH- and -NH-CHR₂-NH- and optionally -NH-CHR₂-O-CHR₂-NH- to 20 to 1000 triazine cycles polytriazine ethers with linear and/or branched structure,
wherein in the polytriazine ethers the molar ratio of the substituents is R₃ : R₄ = 20 : 1 to 1 : 20 and
the proportion of the combinations of the triazine segments through bridging members -NH-CHR₃-O-R₄-O-CHR₃-NH- is 5 to 95 mol%,
are produced according to a multi-step process wherein
- in the first step of the process precondensates of C₁-C₈ aldehydes and triazine derivatives of the structure 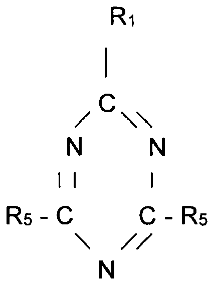 R₁ = -NH₂, -NH-CHR₂-OH, -OH, phthalimido-. succinimido-,
R₂ = H, C₁-C₇ - alkyl;
R₅ = -NH-CHR₂-OH
are etherified through conversion with C₁-C₈ alcohols in neutral to weak acid medium at 25 to 150°C and 0.1 to 5 bars, and the substituted triazine derivatives are conditioned with standing times of 5 to 15 min at 150 to 250°C and 0.1 to 15 bars wherein salts formed can be separated off while maintaining a pH value of 7 to 10 **in that** the melt of the amino triazine ethers at 70 to 150°C in 70 to 150 mass%, in relation to the amino triazine ether, C₃ to C₆ alcohols is dissolved, insoluble proportions are separated off after cooling to 15 to 40°C, and the added C₃ bis C₆ alcohols are vaporised at 70 to 140°C to a remaining content of 5 to 20 mass%,
- in the second step of the process the C₁-C₈-alkyl-oxa-C₁-C₈-alkylene-amino-substituted triazine derivatives obtained are, through partial re-etherification with diols of the type HO-R₄-OH and/or partial conversion with bisepoxides of the type 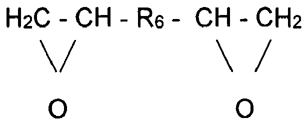 wherein R₄
C₂-C₁₈-alkylene, -[CH₂-CH₂-O-CH₂-CH₂]ₙ -,
-[CH₂-CH(CH₃)-O-CH₂-CH(CH₃)]ₙ -,
-[-O-CH₂-CH₂-CH₂-CH₂-]ₙ-,
-[(CH₂)₂₋₈-O-CO-_{C6-C14-}arylene-CO-O-(CH₂)₂₋₈-]ₙ -,
-[(CH₂)₂₋₈-O-CO-_{C2-C12-}alkylene-CO-O-(CH₂)₂₋₈-]ₙ -, wherein n = 1 to 200;
- siloxane groups containing sequences of the type 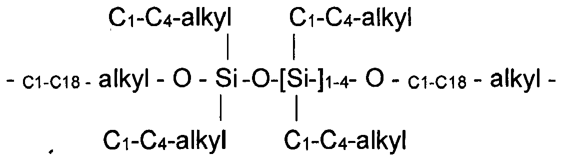
- siloxane groups containing polyester sequences of the type -[(X)ᵣ-O-CO-(Y)ₛ-CO-O-(X)ᵣ]- ,
wherein
X = {(CH₂)₂₋₈-O-CO-_{C6-C14-}arylene-CO-O-(CH₂)₂₋₈-} or
-{(CH₂)₂₋₈-O-CO-_{C2-C12-}alkylene-CO-O-(CH₂)₂₋₈-}; 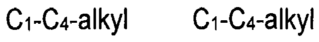 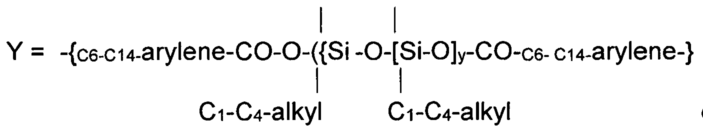 or 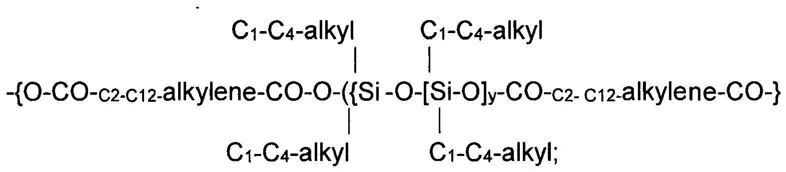 r = 1 to 70; s = 1 to 70 and y = 3 to 50;
- siloxane groups containing polyether sequences of the type 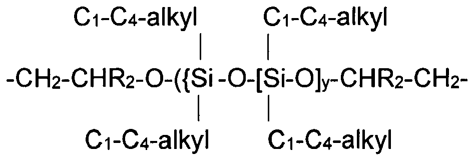 wherein R₂ = H; C₁-C₄-alkyl and y = 3 to 50;
- sequences based on alkylene oxide adducts of melamine of the type 2-amino-4,6-di-_{C2-C4-}alkylene-amino-1,3,5-triazine sequences:
- phenolic ether sequences based on bivalent phenols and C₂-C₈ diols of the type
-_{C2-C8-}alkylene-O-_{C6-C18}-arylene-O-_{C2-C8}-alkylene sequences;
and R₆ = -CH₂-O-_{C2-C12}-alkylene-O-CH₂-, -CH₂-O-_{C6-C14}-arylene-O-CH₂-,
and wherein in the partial conversion with diols and/or bisepoxides mixtures can be used which contain 70 mass% C₅-C₁₈ alcohols,
converted into the corresponding substituted triazine derivatives with standing times of 1 to 60 min with distilling of C₁-C₈ alcohols at 60 to 250°C/0.05 to 1 bar wherein through the molar ratio C₁-C₈-alkyl-oxa-C₁-C₈-alkylene-amino groups / diol used and/or bisepoxide used of 20 : 1 to 1.1 : 1 a partial re-etherification of the C₁-C₈-alkyl ether groups of the C₁-C₈-alkyl-oxa-C₁-C₈ alkylene amino triazines is achieved,
- in the third step of the process for the further condensation of the amino triazine ethers to polytriazine ethers the melt obtained which contains etherified amino triazine derivatives and proportions of polytriazine ethers and unconverted or unseparated diol and furthermore can contain C₅-C₁₈ alcohols is dosed into a kneader, converted with a standing time of 2 to 12 min at 140 to 220°C with degassing and the polytriazine ethers are removed and granulated wherein the melt, before dosing into the kneader, can be subjected to tempering of 20 to 120 min at 70 to 140°C, up to 75 mass% fillers, further reactive polymers of the type ethylene copolymers, maleic acid anhydride copolymers, modified maleic acid anhydride copolymers, poly(meth)acrylates, polyamides, polyesters and/or polyurethanes and up to 2 mass%, each in relation to the polytriazine ethers, stabilisers, UV absorbers and/or auxiliary substances can be added to the melt and the melt can be subjected to a melt filtration before removal.

5. Process for the production of amino resin moulding materials according to Claim 4, **characterised in that** as ionic catalysts and/or for the neutralisation of the reaction deposit anorganic or organic acids, bases, ion exchanging resins and/or acid zeolites are used.

6. Process for the production of amino resin moulding materials according to Claim 4, **characterised in that** in the first step of the process the etherification of the precondensates with C₁-C₈ alcohols is performed in the presence of 10 to 300 mass%, in relation to the dry substance of the precondensates used, molecular sieveing.

7. Process for the production of amino resin moulding materials according to Claim 4, **characterised in that** in the second step of the process the partial re-etherification of the C₁-C₈-alkyl-oxa-C₁-C₈-alkylene-amino-substituted triazine derivatives is performed catalytically in the presence of strong acids at temperatures in the range of 100-175°C.

8. Process for the production of amino resin moulding materials according to Claim 4, **characterised in that** in the second step of the process the partial reehterisation of the C₁-C₈-alkyl-oxa-C₁-C₈-alkylene-amino-substituted triazine derivatives is performed thermally at temperatures in the range of 150-250°C.

9. Process for the production of amino resin moulding materials according to Claim 4, **characterised in that** in the third step of the process for the further condensation of the amino triazine ethers to polytriazine ethers mixtures of products of the 2^{nd} step of the process of different initial products or mixtures of products of the 2^{nd} step of the process with C₁-C₈-alkyl-oxa-C₁-C₈-alkylene-amino- substituted triazine derivatives which have not been re-etherified are used.

10. Process for the production of amino resin moulding materials according to Claim 4, **characterised in that** all steps of the process are performed one after the other in a reaction installation.

11. Use of amino resin moulding materials according to one or more of the Claims 1 to 3 for melt processing as well as for processing from solution or dispersion as adhesive, impregnation resin, paint resin or laminating resin or for the production of foams, micro-capsules or fibres.

12. Amino resin products with improved flexibility, **characterised in that** the amino resin products are products based on amino resin moulding materials according to at least one of the Claims 1 to 3.

13. Amino resin products according to Claim 12, **characterised in that** the amino resin products are semifinished products produced through melt processing or forming substances or components produced from fibres according to winding, braiding or pultrusion technology and subsequent resin impregnation.

14. Amino resin products according to Claim 12, **characterised in that** the fillers and adsorber materials Al₂O₃, Al(OH)₃, SiO₂, barium sulphate, calcium carbonate, glass balls, silica, mica, quartz dust, slate dust, micro hollow spheres, carbon black, talc, layer silicates, molecular sieves, stone dust, wood flour, cellulose, cellulose derivatives contained in the amino resin products are layer silicates of the type montmorillonite, bentonite, kaolinite, muscovite, hectorite, fluorohectorite, kanemite, revdite, grumantite, llerite, saponite, beidelite, nontronite, stevensite, laponite, taneolite, vermiculite, halloysite, volkonskoite, magadite, rectorite, kenyaite, sauconite, boron fluorophlogopite and/or synthetic smectites and layer silicates of the type montmorillonite, bentonite, hectorite, molecular sieves of the types A, X, Y, 5A, adsorbers with a silicon base, micro hollow spheres, cellulose and/or cellulose derivatives.

15. Amino resin products according to Claim 12, **characterised in that** the reinforcement fibres contained in the amino resin products are anorganic fibres, natural fibres, and/or plastic fibres.

16. Process for the production of amino resin products with improved flexibility, **characterised in that** amino resin moulding materials which consist of mixtures of meltable 20 to 1000 triazine cycles polytriazine ethers and optionally of up to 75 mass% fillers and / or absorber materials, up to 50 mass% further reactive polymers of the type ethylene copolymers, maleic acid anhydride copolymers, modified maleic acid anhydride copolymers, poly(meth)acrylates, polyamides, polyesters and/or polyurethanes, up to 20 mass% diols of the type HO-R₄-OH and up to 5 mass%, respectively in relation to the polytriazine ethers, stabilisers, UV absorbers, hardening agents and/or auxiliary substances, wherein in the polytriazine ethers the triazine segments 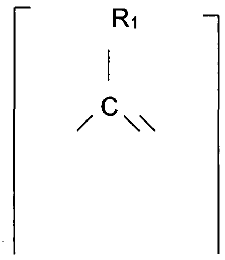 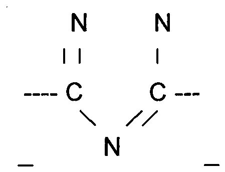 R₁ = -NH₂, -NH-CHR₂-O-R₃ ,-NH-CHR₂-O-R₄-OH, -OH, phthalimido-. succinimido-, -NH-CHR₂-O-R₄-O-CHR₂-NH-, -NH-CHR₂-NH-, -NH-CHR₂-O-CHR₂-NH-,
R₂ = H, C₁-C₇ - alkyl;
R₃ = C₁-C₁₈ - alkyl, H;
R₄ = C₂-C₁₈-alkylene, -CH(CH₃)-CH₂-O-_{C2-C12}-alkylene-O-CH₂-CH(CH₃)-,
-CH(CH₃)-CH₂-O-_{C6-C12}-arylene-O-CH₂-CH(CH₃)-,
-[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ-,
-[(CH₂)₂₋₈-O-CO-_{C6-C14-}arylene-CO-O-(CH₂)₂₋₈-]ₙ -,
-[(CH₂)₂₋₈-O-CO-_{C2-C12}-alkylene-CO-O-(CH₂)₂₋₈-]ₙ -,
wherein n = 1 to 200;
- siloxane groups containing sequences of the type 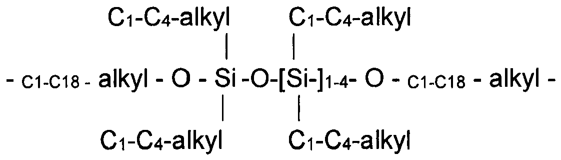
- siloxane groups containing polyester sequences of the type -[(X)ᵣ-O-CO-(Y)ₛ-CO-O-(X)ᵣ]-,
wherein
X = {(CH₂)₂₋₈-O-CO-_{C6-C14-}arylene-CO-O-(CH₂)₂₋₈-} or
-{(CH₂)₂₋₈-O-CO-_{C2-C12-}alkylene-CO-O-(CH₂)₂₋₈-}; 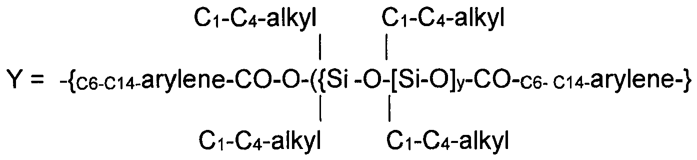 or 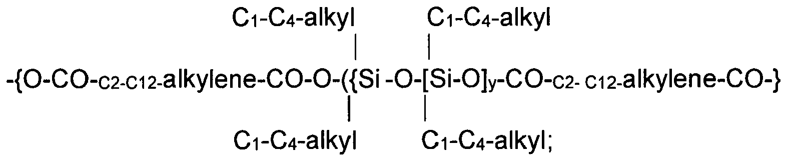 r = 1 to 70; s = 1 to 70 and y = 3 to 50;
- siloxane groups containing polyether sequences of the type 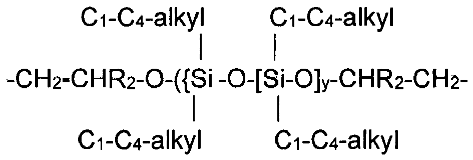 wherein R₂ = H; C₁-C₄-alkyl and y = 3 to 50;
- sequences based on alkylene oxide adducts of melamine of the type 2-amino-4,6-di-_{C2-C4-}alkylene-amino-1,3,5-triazine sequences:
- phenolic ether sequences based on bivalent phenols and C₂-C₈ diols of the type
-_{C2-C8-}alkylene-O-_{C6-C18}-arylene-O-_{C2-C8}-alkylene sequences;
are combined through bridging members -NH-CHR₂-O-R₄-O-CHR₂-NH- und -NH-CHR₂-NH- and optionally -NH-CHR₂-O-CHR₂-NH- to 20 to 1000 triazine cycles polytriazine ethers with linear and/or branched structure,
wherein in the polytriazine ethers the molar ratio of the substituents is R₃ : R₄ = 20 : 1 to 1 : 20 and
the proportion of the combinations of the triazine segments through bridging members -NH-CHR₃-O-R₄-O-CHR₃-NH- is 5 to 95 mol%,
are melted in continuous kneaders at mass temperatures of 105 to 260°C and standing times of 2 to 12 min and with hardening of the polytriazine ethers according to usual processing methods for thermoresin polymers
A) placed as a melt on a smoothing device and taken out as a plate by means of conveyor belts and cut or sealed on surface guides made from metallised films, synthetic films, paper guides or textile guides and removed and processed as multicomponent composites,
or
B) taken out via a profiled opening and removed, cut and processed as a profile or plate material,
or
C) taken out via an annular opening, removed with pressing of air as a pipe, removed, cut and processed,
or
D) after dosing of blowing agents removed taken out via a wide slot opening and removed as a foamed plate material,
or
E) taken out via the wide slot opening of a pipe coating installation and sealed in a fusible manner onto the rotating pipe,
or
F) processed into injection moulded components in injection moulding machines, or
G) extruded in melt spinning installations by means of melt pump through the capillary tool into the blow shaft and taken out as threads or after the melt-blow process separated off as fibres or after the rotation spinning process taken out as a melt into a shear field chamber with organic dispersing agents with the formation of fibre fibrides and further processed in subsequent devices,
or
K) used for the melt impregnation of component blanks produced according to the winding process, braiding process or pultrusion process,
and optionally for complete hardening the products are subjected to subsequent thermal processing at temperatures of 180 to 280°C and standing times of 20 to 120 min.

17. Process for the production of amino resin products according to Claim 16, **characterised in that** the polytriazine ethers contained in the amino resin moulding materials used are 30 to 300 triazine cycles polytriazine ethers.

18. Process for the production of amino resin products with improved flexibility according to Claim 16, **characterised in that** the polytriazine ethers contained in the amino resin moulding materials used are polytriazine ethers with R₂ = H.

19. Process for the production of amino resin products with improved flexibility according to Claim 16, **characterised in that** the hardening agents contained in the amino resin moulding materials used are weak acids of the type
- blocked sulphonic acids,
- aliphatic C₄-C₁₈ carbonic acids,
- alkali salts or ammonium salts of phosphoric acid,
- C₁-C₁₂ alkyl esters or C₂-C₈ hydroxyalkyl esters of C₆-C₁₄ aromatic carbon acids or anorganic acids,
- salts of melamine or guanamines with C₁-₁₈ aliphatic carbonic acids,
- anhydrides, semi-esters or semi-amides of C₄-C₂₀ dicarbonic acids,
- semi-esters or semi-amides of copolymers of ethylenically unsaturated C₄-C₂₀ dicarbonic acid anhydrides and ethylenically unsaturated monomers of the type C₂-C₂₀ olefines and/or C₈-C₂₀ vinyl aromates,
and/or
- salts of C₁-C₁₂-alkyl amines or alkanol amines with C₁-C₁₈ aliphatic, C₆-C₁₄-aromatic or alkyl aromatic carbonic acids as well as anorganic acids of the type hydrochloric acid, sulphuric acid or phosphoric acid.

20. Process for the production of amino resin products according to Claim 16, **characterised in that** the production of fibre fibrides from the amino resin moulding materials is effected through
- introducing the melt via entry openings at melt temperatures of 160 to 220°C into a shear field chamber which contains high boiling organic dispersion agent heated to 150 to 210°C, wherein acid gases are introduced into the shear field chamber, and wherein the melt stream leaving the entry opening is extended and divided through the oil whirled about by the rotor with the formation of fibres,
- conveyance of the dispersion of the fibre fibrides formed in organic dispersion agent into a sieve separator with simultaneous extraction of the high boiling dispersion agent with low boiling hydrocarbons,
- removal of the fibre fibride short fibre fleece and optionally subsequent thermal treating of the short fibre fleece at temperatures of 180 to 210°C and standing times of 40 to 120 min.

21. Use of amino resin products with improved flexibility according to one or more or the Claims 12 to 15 for applications with high requirements of non-flammability and heat resistance in construction, engineering and the motor car industry for the production of electro-isolation papers, fire protection clothing, clothing for high working temperatures, fire protection blankets, filter fleeces, felts for paper machines and vehicle and machine isolation covers, as well as in the form of complex components, containers or profiles according to the winding, braiding or pultrusion process.

## Revendications

1. Matières à mouler aminoplastiques, destinées à des produits présentant une meilleure flexibilité, **caractérisées en ce que** les mélanges de matières à mouler aminoplastiques composent d'éthers de polytriazine avec 20 à 1000 cycles de triazine fusibles, et éventuellement en jusqu'à 75 % en poids de substances de charges et/ou de matériaux absorbants, jusqu'à 50 % en poids d'autres polymères réactifs du type copolymères d'éthylène, copolymères d'anhydride d'acide maléique, copolymères d'anhydride d'acide maléique modifiés, poly(méth)acrylates, polyamides, polyesters et/ou polyuréthanes, jusqu'à 20 % en poids de diolène du type HO-R₄-OH et jusqu'à 5 % en poids, respectivement par rapport à l'éther de polytriazine, de stabilisants, d'absorbants d'UV, de durcisseurs et/ou d'adjuvants,
où, dans les éthers de polytriazine, les segments de triazine 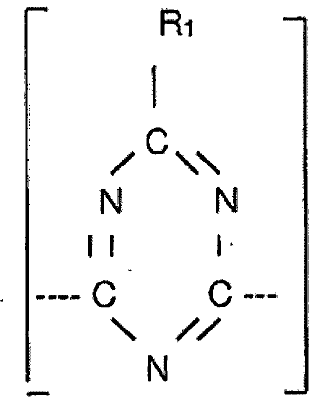 R₁ = -NH₂, -NH-CHR₂-O-R₃, -NH-CHR₂-O-R₄-OH, -OH, un groupe phtalimido, succinimido, -NH-CHR₂-O-R₄-O-CHR₂-NH-, -NH-CHR₂-NH-, -NH-CHR₂-O-CHR₂-NH-,
R₂ = H, un groupe alkyle en C₁ à C₇ ;
R₃ = un groupe alkyle en C₁ à C₁₈, H ;
R₄ = un groupe alkylène en C₂ à C₁₈, -CH(CH₃)-CH₂-O-(alkylène en C₂ à C₁₂)-O-CH₂-CH(CH₃)-, -CH(CH₃)-CH₂-O-(arylène en C₆ à C₁₂)-O-CH₂-CH(CH₃)-,
-[CH₂-CH₂-O-CH₂-CH₂]ₙ-, -[CH₂-CH(CH₃)-O-CH₂-CH(CH₃)],-, -[-O-CH₂-CH₂-CH₂-CH₂]ₙ-,
-[(CH₂)₂₋₈-O-CO-(arylène en C₆ à C₁₄)-CO-O-(CH₂)₂₋₈-]ₙ-,
-[(CH₂)₂₋₈-O-CO-(alkylène en C₂ à C₁₂)-CO-O-(CH₂)₂₋₈-]ₙ-,
où n = 1 à 200 ;
- des séquences contenant des groupes siloxane, du type 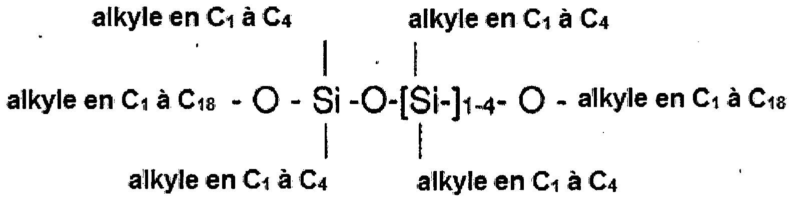
- des séquences de polyester contenant des groupes siloxane, du type -[(X)ᵣ-O-CO-(Y)ₛ-CO-O-(X)ᵣ]-,
dans lesquelles
X = {(CH₂)₂₋₈-O-CO-(arylène en C₆ à C₁₄)-CO-O-(CH₂)₂₋₈-} ou
-{(CH₂)₂₋₈-O-CO-(alkylène en C₂ à C₁₂)-CO-O-(CH₂)₂₋₈-} ; 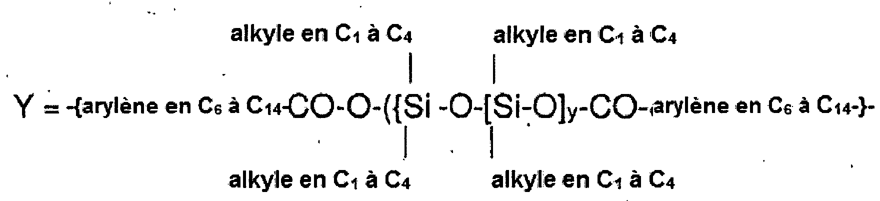 ou 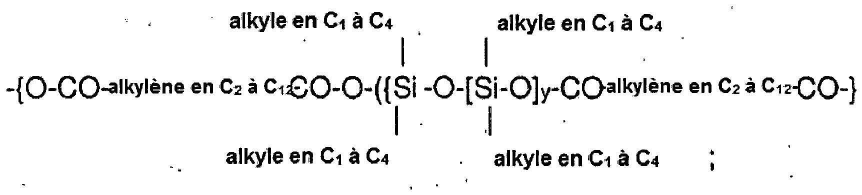 r = 1 à 70 ; s = 1 à 70 et y = 3 à 50 ;
- des séquences de polyéther contenant des groupes siloxane du type 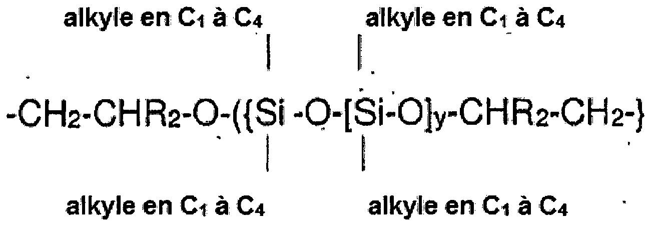 où R₂ = H ; un groupe alkyle en C₁ à C₄, et y = 3 à 50 ;
- des séquences à base de produits d'addition d'oxyde d'alkylène de mélamine du type séquences de 2-amino-4,6-di-(alkylèneamino en C₂ à C₄)-1,3,5-triazine ;
- des séquences d'éther de phénol à base de phénols divalents et de diols en C₂ à C₈ du type des séquences d'(alkylène en C₂ à C₈)-O-(arylène en C₆ à C₁₈)-O-(alkylène en C₂ à C₈) ;
sont reliés par des ponts -NH-CHR₂-O-R₄-O-CHR₂-NH- et -NH-CHR₂-NH- et éventuellement -NH-CHR₂-O-CHR₂-NH- à des éthers de polytriazine avec 20 à 1000 cycles de triazine présentant une structure linéaire et/ou ramifiée,
où, dans les éthers de polytriazine, le rapport molaire des substituants est R₃:R₄ = 20:1 à 1:20 et
la proportion de liaisons des segments de triazine par des ponts NH-CHR₂-O-R₄-O-CHR₂-NH- est de 5 à 95 % en mole.

2. Matières à mouler aminoplastiques selon la revendication 1, **caractérisées en ce que** les éthers de polytriazine sont des éthers de polytriazine à 30 à 300 cycles de triazine.

3. Matières à mouler aminoplastiques selon la revendication 1 ou 2, **caractérisées en ce que** les éthers de polytriazine dans les mélanges sont des éthers de polytriazine avec R₂ = H.

4. Procédé de production de matières à mouler aminoplastiques, **caractérisé en ce que** les matières à mouler aminoplastique, qui se composent de mélanges d'éthers de polytriazine avec 20 à 1000 cycles de triazine fusibles, et éventuellement comportant jusqu'à 75 % en poids de substances de charges, jusqu'à 50 % en poids d'autres polymères réactifs du type copolymères d'éthylène, copolymères d'anhydride d'acide maléique, copolymères d'anhydride d'acide maléique modifiés, poly(méth)acrylates, polyamides, polyesters et/ou polyuréthanes, jusqu'à 20 % en poids de diolène du type HO-R₄-OH et jusqu'à 2 % en poids, respectivement par rapport à l'éther de polytriazine, de stabilisants, d'absorbants d'UV et/ou d'adjuvants,
où, dans les éthers de polytriazine, les segments de triazine 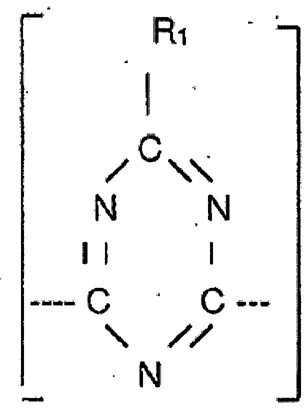 R₁ = -NH₂, -NH-CHR₂-O-R₃, -NH-CHR₂-O-R₄-OH, -OH, un groupe phtalimido, succinimido, -NH-CHR₂-O-R₄-O-CHR₂-NH-, -NH-CHR₂-NH-, -NH-CHR₂-O-CHR₂-NH-,
R₂ = H, un groupe alkyle en C₁ à C₇ ;
R₃ = un groupe alkyle en C₁ à C₁₈, H ;
R₄ = un groupe alkylène en C₂ à C₁₈, -CH(CH₃)-CH₂-O-(alkylène en C₂ à C₁₂)-O-CH₂-CH(CH₃)-, -CH(CH₃)-CH₂-O-(arylène en C₆ à C₁₂)-O-CH₂-CH(CH₃)-,
-[CH₂-CH₂-O-CH₂-CH₂]ₙ-, -[CH₂-CH(CH₃)-O-CH₂-CH(CH₃)]ₙ-, -[-O-CH₂-CH₂-CH₂-CH₂]ₙ-,
-[(CH₂)₂₋₈-O-CO-(arylène en C₆ à C₁₄)-CO-O-(CH₂)₂₋₈-]ₙ-,
-[(CH₂)₂₋₈-O-CO-(alkylène en C₂ à C₁₂)-CO-O-(CH₂)₂₋₈-]ₙ-,
où n = 1 à 200 ;
- des séquences contenant des groupes siloxane, du type 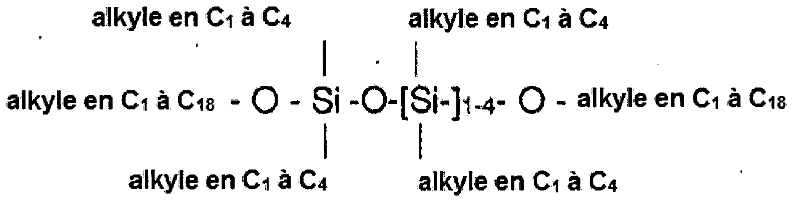
- des séquences de polyester contenant des groupes siloxane, du type -[(X)ᵣ-O-CO-(Y)ₛ-CO-O-(X)ᵣ]-,
dans lesquelles
X = {(CH₂)₂₋₈-O-CO-(arylène en C₆ à C₁₄)-CO-O-(CH₂)₂₋₈-} ou
- {(CH₂)₂₋₈-O-CO-(alkylène en C₂ à C₁₂)-CO-O-(CH₂)₂₋₈-} ; 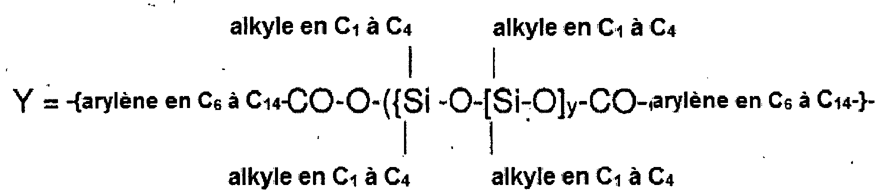 ou 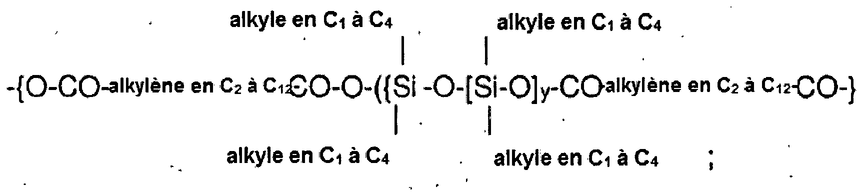 r = 1 à 70 ; s = 1 à 70 et y = 3 à 50 ;
- des séquences de polyéther contenant des groupes siloxane du type 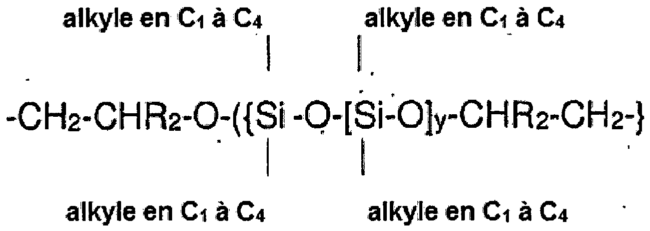 où R₂ = H ; un groupe alkyle en C₁ à C₄, et y = 3 à 50 ;
- des séquences à base de produits d'addition d'oxyde d'alkylène de mélamine du type des séquences de 2-amino-4,6-di-(alkylèneamino en C₂ à C₄)-1,3,5-triazine ;
- des séquences d'éther de phénol à base de phénols divalents et de diols en C₂ à C₈ du type séquences d'(alkylène en C₂ à C₈)-O-(arylène en C₆ à C₁₈)-O-(alkylène en C₂ à C₈) ;
sont reliés par des ponts -NH-CHR₂-O-R₄-O-CHR₂-NH- et -NH-CHR₂-NH- et éventuellement -NH-CHR₂-O-CHR₂-NH- à des éthers de polytriazine avec 20 à 1000 cycles de triazine présentant une structure linéaire et/ou ramifiée,
où, dans les éthers de polytriazine, le rapport molaire des substituants est R₃:R₄ = 20:1 à 1:20 et
la proportion de liaisons des segments de triazine par des ponts NH-CHR₂-O-R₄-OCHR₂-NH- est de 5 à 95 % en mole ;
sont produites selon un procédé à plusieurs étapes, dans lequel
- dans la première étape de procédé, des précondensats d'aldéhydes en C₁ à C₈ et de dérivés de triazine de structure 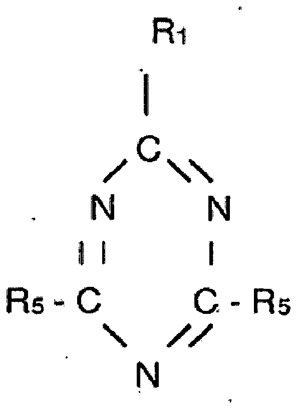 R₁ = -NH₂, -NH-CHR₂-OH, -OH, un groupe phtalimido, succinimido,
R₂ = H, un groupe alkyle en C₁ à C₇ ;
R₅ = -NH-CHR₂-OH
sont éthérifiés par réaction avec des alcools en C₁ à C₈ dans un milieu neutre à faiblement acide à une température de 25 à 150 °C et à une pression de 0,1 bar à 5 bars, et les dérivés de triazine substitués sont conditionnés avec des temps de séjour de 5 à 15 min à une température de 150 à 250 °C et à une pression de 0,1 à 15 bars, des sels formés pouvant être séparés en maintenant un pH de 7 à 10, la masse fondue d'éthers d'aminotriazine étant dissoute à une température de 70 à 150 °C et dans 70 à 150 % en poids, par rapport aux éthers d'aminotriazine, d'alcools en C₃ à C₆, les éléments insolubles après refroidissement à une température de 15 à 40 °C étant séparés et les alcools en C₃ à C₆ ajoutés étant évaporés à une température de 70 à 140 °C jusqu'à une teneur résiduelle de 5 à 20 % en poids,
- dans la deuxième étape de procédé, les dérivés de triazine obtenus substitués par un groupe (alkyle en C₁ à C₈)-oxa-(alkylène en C₁ à C₈)-amino sont convertis par transéthérification partielle avec des diols du type HO-R₄-OH et/ou réaction partielle avec des bis-époxydes du type 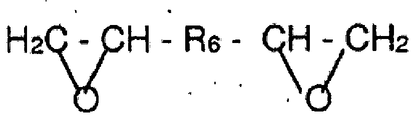
où R₄ désigne
un groupe alkylène en C₂ à C₁₈, -[CH₂-CH₂-O-CH₂-CH₂]ₙ-, -[CH₂CH(CH₃)-O-CH₂-CH(CH₃)]ₙ-, -[-O-CH₂-CH₂-CH₂-CH₂]ₙ-,
-[(CH₂)₂₋₈-O-CO-(arylène en C₆ à C₁₄)-CO-O-(CH₂)₂₋₈-]ₙ-,
-[(CH₂)₂₋₈-O-CO-(alkylène en C₂ à C₁₂)-CO-O-(CH₂)₂₋₈-]ₙ-, où n = 1 à 200 ;
- des séquences contenant des groupes siloxane du type 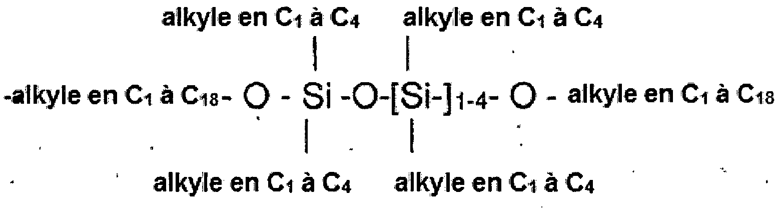
- des séquences de polyester contenant des groupes siloxane du type - [(X)ᵣ-O-CO-(Y)ₛ-CO-O-(X)ᵣ]-,
dans lesquelles
X = {(CH₂)₂₋₈-O-CO-(arylène en C₆ à C₁₄)-CO-O-(CH₂)₂₋₈-} ou
-{(CH₂)₂₋₈-O-CO-(alkylène en C₂ à C₁₂)-CO-O-(CH₂)₂₋₈-} ; 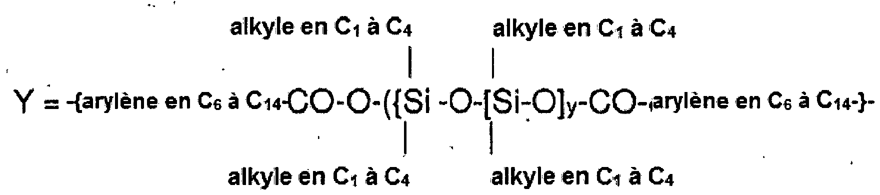 ou 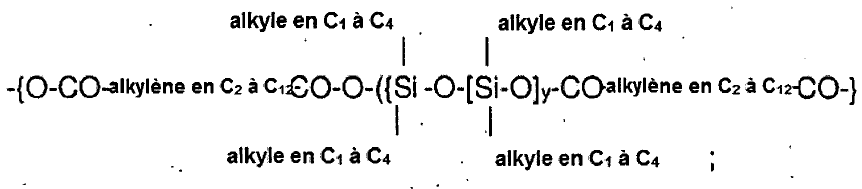 r = 1 à 70 ; s = 1 à 70 et y = 3 à 50 ;
- des séquences de polyéther contenant des groupes siloxane du type 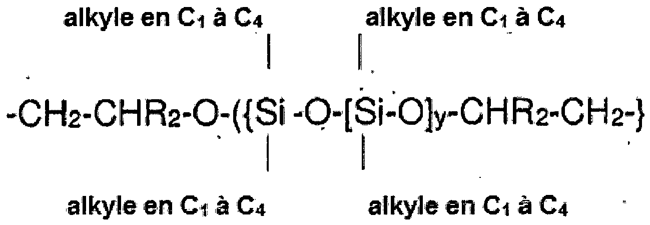 où R₂ = H ; un groupe alkyle en C₁ à C₄, et y = 3 à 50;
- des séquences à base de produits d'addition d'oxyde d'alkylène de mélamine du type séquences de 2-amino-4,6-di-alkylèneamino en C₂ à , C₄-1,3,5-triazine ;
- des séquences d'éther de phénol à base de phénols divalents et de diols en C₂ à C₈ du type séquences (alkylène en C₂ à C₈)-O-(arylène en C₆ à C₁₈)-O-(alkylène en C₂ à C₈) ;
et R₆ = -CH₂-O-(alkylène en C₂ à C₁₂)-O-CH₂, -CH₂-O-(arylène en C₆ à C₁₄)-O-CH₂-,
et où, lors de la réaction partielle avec des diols et/ou des bis-époxydes, des mélanges contenant jusqu'à 70 % en poids d'alcools en C₅ à C₁₈ peuvent être utilisés,
à des temps de séjour de 1 à 60 min en distillant des alcools en C₁ à C₈ une température de 60 à 250 °C/une pression de 0,05 à 1 bar, en dérivés de triazine substitués correspondants, où, par le rapport molaire des groupes (alkyle en C₁ à C₈)-oxa-(alkylène en C₁ à C₈)-amino / diol utilisé et/ou bis-époxyde utilisé de 20:1 à 1,1:1, une transéthérification partielle des groupes alkyléther en C₁ à C₈ de l'alkyl-oxa-(alkylène en C₁ à C₈)-amino-triazine est réalisée
- dans la troisième étape de procédé pour la condensation additionnelle des éthers d'aminotriazine en éthers de polytriazine, la masse fondue obtenue qui contient des dérivés d'aminotriazine éthérifiés et des portions d'éthers de polytriazine et de diols n'ayant pas réagi ou non séparés, et qui peut contenir en outre des alcools en C₅ à C₁₈, est ajoutée dans un pétrisseur, transformée avec un temps de séjour de 2 à 12 min à une température de 140 à 220 °C sous dégazage, et les éthers de polytriazine sont déchargés et granulés, la masse fondue pouvant être soumise, avant l'addition dans le pétrisseur, à un réglage de température de 70 à 140 °C pendant 20 à 120 min, jusqu'à 75 % en poids de substance de charge, d'autres polymères réactifs du type copolymère d'éthylène, copolymère d'anhydride d'acide maléique, copolymères d'anhydride d'acide maléique modifié, poly(méth)acrylates, polyamides, polyesters et/ou polyuréthanes, et jusqu'à 2 % en poids, respectivement par rapport à l'éther de polytriazine, de stabilisants, d'absorbants d'UV et/ou d'adjuvants pouvant être ajoutés à la masse fondue et la masse fondue pouvant être soumise avant le déchargement à une filtration de la masse fondue.

5. Procédé de production de matières à mouler aminoplastiques selon la revendication 4, **caractérisé en ce que** l'on utilise comme catalyseurs ioniques et/ou pour la neutralisation du mélange réactionnel des acides inorganiques ou organiques, des bases, des résines échangeuses d'ions et/ou des zéolithes acides.

6. Procédé de production de matières à mouler aminoplastiques selon la revendication 4, **caractérisé en ce que** dans la première étape de procédé, l'éthérification des précondensats avec des alcools en C₁ à C₈ s'effectue en présence de 10 à 300 % en poids, par rapport à la substance sèche des précondensats utilisés, de tamis moléculaires.

7. Procédé de production de matières à mouler aminosplastiques selon la revendication 4, **caractérisé en ce que**, dans la deuxième étape de procédé, la transéthérification partielle des dérivés de triazine substitués par un groupe (alkyle en C₁ à C₈)-oxa-(alkylène en C₁ à C₈)-amino s'effectue de façon catalytique en présence d'acides forts à des températures dans la plage de 100 à 175 °C.

8. Procédé de production de matières à mouler aminoplastiques selon la revendication 4, **caractérisé en ce que**, dans la deuxième étape de procédé, la transéthérification partielle des dérivés de triazine substitués par un groupe (alkyle en C₁ à C₈)-oxa-(alkylène en C₁ à C₈)-amino s'effectue de façon thermique à des températures dans la plage de 150 à 250 °C.

9. Procédé de production de matières à mouler aminoplastiques selon la revendication 4, **caractérisé en ce que**, dans la troisième étape de procédé, pour la la condensation additionnelle des éthers d'aminotriazine en éthers de polytriazine, des mélanges de produits de la 2^{e} étape de procédé, des produits de départ différents ou des mélanges de produits de la 2^{e} étape de procédé sont utilisés avec des dérivés de triazine substitués par un groupe (alkyle en C₁ à C₈)-oxa-(alkylène en C₁ à C₈)-amino non transéthérifiés.

10. Procédé de production de matières à mouler aminoplastiques selon la revendication 4, **caractérisé en ce que** toutes les étapes du procédé sont réalisées l'une après l'autre dans un appareil réactionnel.

11. Utilisation de matières à mouler aminoplastiques selon une ou plusieurs des revendications 1 à 3, en tant qu'adhésif, résine d'imprégnation, résine pour vernis ou résine de stratification ou pour la production de mousses, de microcapsules ou de fibres, pour la transformation de la masse fondue et pour la transformation de la solution ou dispersion.

12. Produits aminoplastiques présentant une flexibilité améliorée, **caractérisés en ce que** les produits aminoplastiques sont des produits à base de matières à mouler aminoplastiques, selon au moins l'une des revendications 1 à 3.

13. Produits aminoplastiques selon la revendication 12, **caractérisés en ce que** les produits aminoplastiques sont des produits semi-finis ou des matériaux de moulage produits par transformation de la masse fondue ou des éléments produits à partir de fibres selon la technique de bobinage, de tressage ou de pultrusion et suivie d'une imprégnation de résine.

14. Produits aminoplastiques selon la revendication 12, **caractérisés en ce que** les substances de charge ou les matériaux adsorbants contenus dans les produits aminoplastiques sont l'Al₂O₃, l'Al(OH)₃, le SiO₂, le sulfate de baryum, le carbonate de calcium, des billes de verre, de la silice, du mica, de la farine de quartz, de la poudre d'ardoise, des microbilles creuses, de la suie, du talc, des phyllosilicates, des tamis moléculaires, de la farine de roche, de la farine de bois, de la cellulose, des dérivés de cellulose, des phyllosilicates du type montmorillonite, bentonite, kaolinite, muscovite, hectorite, fluorohectorite, kanémite, revdite, grumantite, ilérite, saponite, beidélite, nontronite, stévensite, laponite, tanéolite, vermiculite, halloysite, volkonskoïte, magadite, rectorite, kényaïte, sauconite, borofluorophlogopite et/ou smectites synthétiques, et des phyllosilicates du type montmorillonite, bentonite, hectorite, des tamis moléculaires de types A, X, Y, 5A, des adsorbants à base de dioxyde de silicium, des microbilles creuses, de la cellulose et/ou des dérivés de cellulose.

15. Produits aminoplastiques selon la revendication 12, **caractérisés en ce que** les fibres de renforcement contenues dans les produits aminoplastiques sont des fibres anorganiques, des fibres naturelles et/ou des fibres plastiques.

16. Procédé de production de produits aminoplastiques présentant une flexibilité améliorée, **caractérisé en ce que** des matières à mouler aminoplastiques, qui consistent en mélanges d'éthers de polytriazine avec 20 à 1000 cycles de triazine fusibles, et éventuellement comportant jusqu'à 75 % en poids de substances de charges, jusqu'à 50 % en poids d'autres polymères réactifs du type copolymères d'éthylène, copolymères d'anhydride d'acide maléique, copolymères d'anhydride d'acide maléique modifiés, poly(méth)acrylates, polyamides, polyesters et/ou polyuréthanes, jusqu'à 20 % en poids de diolène du type HO-R₄-OH et jusqu'à 5 % en poids, respectivement par rapport à l'éther de polytriazine, de stabilisants, d'absorbants d'UV, de durcisseurs et/ou d'adjuvants,
où, dans les éthers de polytriazine, les segments de triazine 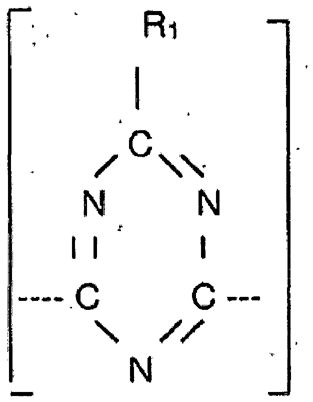 R₁ = -NH₂, -NH-CHR₂-O-R₃, -NH-CHR₂-O-R₄-OH, -OH, un groupe phtalimido, succinimido, -NH-CHR₂-O-R₄-O-CHR₂-NH-, -NH-CHR₂-NH-, -NH-CHR₂-O-CHR₂-NH-,
R₂ = H, un groupe alkyle en C₁ à C₇ ;
R₃ = un groupe alkyle en C₁ à C₁₈, H ;
R₄ = un groupe alkylène en C₂ à C₁₈, -CH(CH₃)-CH₂-O-(alkylène en C₂ à C₁₂)-O-CH₂-CH(CH₃)-, -CH(CH₃)-CH₂-O-(arylène en C₆ à C₁₂)-O-CH₂-CH(CH₃)-, -[CH₂-CH₂-O-CH₂-CH₂]ₙ-, -[CH₂-CH(CH₃)-O-CH₂-CH(CH₃)]ₙ-, -[-O-CH₂-CH₂-CH₂-CH₂]ₙ-,
-[(CH₂)₂₋₈-O-CO-(arylène en C₆ à C₁₄)-CO-O-(CH₂)₂₋₈-]ₙ-,
-[(CH₂)₂₋₈-O-CO-(alkylène en C₂ à C₁₂)-CO-O-(CH₂)₂₋₈-]ₙ-,
où n = 1 à 200 ;
- des séquences contenant des groupes siloxane du type 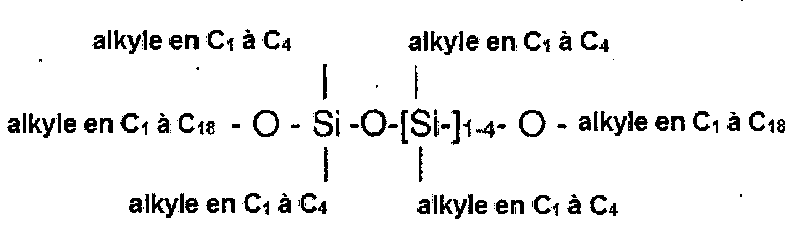
- des séquences de polyester contenant des groupes siloxane du type -[(X)ᵣ-O-CO-(Y)ₛ-CO-O-(X)ᵣ]-,
dans lesquelles
X = {(CH₂)₂₋₈-O-CO-(arylène en C₆ à C₁₄)-CO-O-(CH₂)₂₋₈-} ou
-{(CH₂)₂₋₈-O-CO-(alkylène en C₂ à C₁₂)-CO-O-(CH₂)₂₋₈-} ; 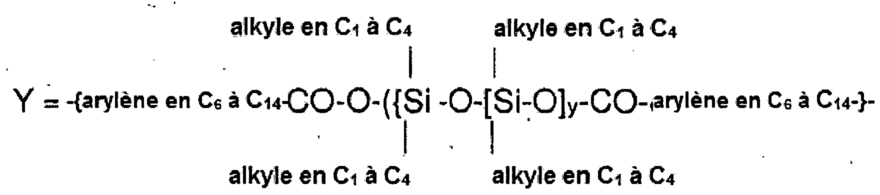 ou 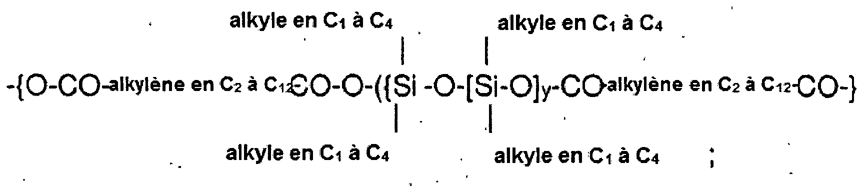 r = 1 à 70 ; s = 1 à 70 et y = 3 à 50 ;
- des séquences de polyéther contenant des groupes siloxane du type 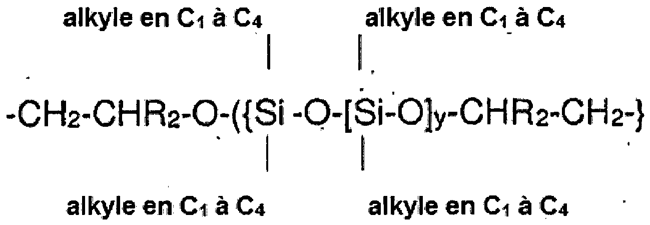 où R₂ = H ; un groupe alkyle en C₁ à C₄, et y = 3 à 50 ;
- des séquences à base de produits d'addition d'oxyde d'alkylène de mélamine du type séquences de 2-amino-4,6-di-(alkylèneamino en C₂ à C₄)-1,3,5-triazine ;
- des séquences d'éther de phénol à base de phénols divalents et de diols en C₂ à C₈ du type séquences (alkylène en C₂ à C₈)-O-(arylène en C₆ à C₁₈)-O-(alkylène en C₂ à C₈) ;
sont reliés par des ponts NH-CHR₂-O-Ra-O-CHR₂-NH- et NH-CHR₂-NH- et éventuellement, -NH-CHR₂-O-CHR₂-NH- à des éthers de polytriazine avec 20 à 1000 cycles de triazine présentant une structure linéaire et/ou ramifiée,
où, dans les éthers de polytriazine, le rapport molaire des substituants est R₃:R₄ = 20:1 à 1:20 et la proportion de liaisons des segments de triazine par des ponts -NH-CHR₂-O-R₄-O-CHR₂-NH- est de 5 à 95 % en mole,
sont fondues dans des pétrisseurs en continu à des températures de masse de 105 à 260 °C et pendant des temps de séjours de 2 à 12 min et en durcissant les éthers de polytriazine selon des procédés de traitement classiques pour les polymères thermoplastiques,
A) sont versées en tant que masse fondue sur un lissoir et récupérée sous la forme de plaque sur des courroies de transport et découpées ou fixées sur des surfaces en bande de feuilles de métal, de feuilles de plastique, de bandes de papier ou de bandes de tissus et récupérées sous forme de composites à plusieurs éléments et confectionnés, ou
B) sont distribuées par une filière à profiler et récupérés, découpées et confectionnées sous forme de profilés ou matériau en plaque, ou
C) sont distribuées par une buse annulaire, récupérées, découpées et confectionnées sous forme de tubes sous injection d'air, ou
D) après addition d'agents d'expansion, sont distribuées par une buse à fente large et sont récupérées sous forme de matériau en plaque de mousse, ou
E) sont distribuées par la buse à fente large d'une installation de revêtement de tube et sont fixées à l'état de fusion - état liquide sur le tube tournant, ou
F) dans des machines de moulage par injection, sont transformées en pièces moulées par injection, ou
G) dans des installations de filage à l'état fondu, au moyen d'une pompe de masse fondue, sont extrudées par un outil de capillarité dans l'appareil de soufflage et sont récupérées sous forme de fils ou séparées en fibres selon le procédé de fusion-soufflage ou sont distribuées en masse fondue selon le procédé de filage en rotation dans une chambre à champ de cisaillement avec un dispersant organique en formant des fibrides de fibres et soumises à des traitements ultérieurs dans des installations consécutives, ou
K) sont utilisées pour l'imprégnation à l'état fondu de pièces brutes d'éléments de construction selon le procédé de bobinage, de tressage ou de pultrusion et les produits sont éventuellement soumis pour un durcissement complet, à un traitement thermique consécutif à des températures de 180 à 280 °C et pendant des temps de séjour de 20 à 120 min.

17. Procédé de production de produits aminoplastiques selon la revendication 16, **caractérisé en ce que** les éthers de polytriazine contenus dans les matières à mouler aminoplastiques utilisées sont des éthers de polytriazine avec 30 à 300 cycles de triazine.

18. Procédé de production de produits aminoplastiques présentant une flexibilité améliorée selon la revendication 16, **caractérisé en ce que** les éthers de polytriazine contenus dans les matières à mouler aminoplastiques utilisées sont des éthers de polytriazine avec R₂ = H.

19. Procédé de production de produits aminoplastiques présentant une flexibilité améliorée selon la revendication 16, **caractérisé en ce que** les durcisseurs contenus dans les matières à mouler aminoplastiques utilisées sont des acides faibles du type
- acides sulfoniques bloqués,
- acides carboxyliques en C₄ à C₁₈ aliphatiques,
- sels alcalins ou sels d'ammonium d'acide phosphorique,
- alkylester en C₁ à C₁₂ ou hydroxyalkylester en C₂ à C₈ d'acides carboxyliques aromatiques en C₆ à C₁₄ ou acides inorganiques,
- sels de mélamine ou de guanamines avec des acides carboxyliques aliphatiques en C₁ à C₁₈,
- anhydrides, semi-esters ou semi-amides d'acides dicarboxyliques en C₄ à C₂₀,
- semi-esters ou semi-amides de copolymères d'anhydrides d'acide dicarboxylique en C₄ à C₂₀ éthyléniquement insaturés et monomères éthyléniquement insaturés du type oléfines en C₂ à C₂₀ et/ou composés aromatiques vinyliques en C₈ à C₂₀, et/ou
- sels d'alkylamines en C₁ à C₁₂ ou alcanolamines avec des acides carboxyliques aliphatiques en C₁ à C₁₈, aromatiques en C₆ à C₁₄ ou alkylaromatiques et des acides inorganiques du type acide chlorhydrique, acide sulfurique ou acide phosphorique.

20. Procédé de production de produits aminoplastiques selon la revendication 16, **caractérisé en ce que** la production de fibrides de fibres à partir des matières à mouler aminoplastiques s'effectue par
- insertion de la masse fondue par des buses d'insertion à des températures de fusion de 160 à 220 °C dans une chambre à champ de cisaillement qui contient des agents dispersants organiques à haut point d'ébullition chauffés à une température de 150 à 210 °C, des gaz acides étant introduits dans la chambre à champ de cisaillement, et le brin de coulée sortant de la buse d'insertion étant étiré et coupé par l'huile tourbillonnant sous l'action du rotor, en formant des fibres,
- passage de la dispersion des fibrides de fibres formés dans des agents dispersants organiques dans un séparateur tamiseur et extraction concomitante de l'agent dispersant à haut point d'ébullition avec des hydrocarbures à bas point d'ébullition,
- récupération de la feuille de fibres courtes de fibrides de fibres et éventuellement post-réticulation thermique de la feuille de fibres courtes à des températures de 180 à 210 °C et pendant un temps de séjour de 40 à 120 min.

21. Utilisation de produits aminoplastiques présentant une flexibilité améliorée selon une ou plusieurs des revendications 12 à 15, pour des utilisations à exigences élevées en matière d'ignifugation et de résistance à la chaleur dans la construction, la construction mécanique et l'industrie automobile, pour la fabrication de papiers électro-isolants, de vêtements résistant au feu, de vêtements adaptés pour des températures de travail élevées, de plafonds anti-incendie, de filtres non-tissés, de feutres pour les machines à papier et de revêtements isolants pour les véhicules ou les machines et sous la forme d'éléments de construction complexe, de conteneurs ou de profilés selon le procédé de bobinage, de tressage ou de pultrusion.
